# EUROPEAN PATENT SPECIFICATION

(11) **EP 1 524 289 B1**
(45) Date of publication and mention of the grant of the patent: **16.09.2009**
(21) Application number: 03762897.1
(22) Date of filing: 08.07.2003
(51) Int. Cl.: C08G 75/08, C08L 81/02, C08K 5/01, C08K 5/05, C08K 5/07, C08K 5/10, C08K 11/00, G02B 1/04

(54) **POLYMERIZABLE COMPOSITION, OPTICAL MATERIAL COMPRISING THE COMPOSITION AND METHOD FOR PRODUCING THE MATERIAL**
POLYMERISIERBARE ZUSAMMENSETZUNG, DIE ZUSAMMENSETZUNG ENTHALTENDES OPTISCHES MATERIAL UND VERFAHREN ZUR HERSTELLUNG DES MATERIALS
COMPOSITION POLYMERISABLE, MATERIAU OPTIQUE COMPRENANT LA COMPOSITION ET PROCEDE SERVANT A LA PRODUCTION DU MATERIAU

(30) Priority: 08.07.2002 JP 2002199300; 26.07.2002 JP 2002217494; 27.09.2002 JP 2002284080; 27.09.2002 JP 2002284230
(43) Date of publication of application: 20.04.2005
(73) Proprietor: MITSUBISHI GAS CHEMICAL COMPANY, INC., Chiyoda-ku, Tokyo 100-8324 (JP)
(72) Inventor: HORIKOSHI, H., c/o Mitsubishi Gas Chem. Co., Inc., Tokyo 125-0051 (JP); NAKAGAWA, K, c/o Mitsubishi Gas Chem. Co., Inc., Tokyo 125-0051 (JP); TAKEUCHI, M., c/o Mitsubishi Gas Chem. Co., Inc., Tokyo 125-0051 (JP); KAMURA, T., c/o Mitsubishi Gas Chem. Co., Inc., Tokyo 125-0051 (JP)
(74) Representative: Gille Hrabal Struck Neidlein Prop Roos
(86) International application number: PCT/JP2003/008657
(87) International publication number: WO 2004/005374

(56) References cited:
- EP-A- 1 046 931
- EP-A- 1 270 566
- JP-A- 9 110 979
- JP-A- 11 124 363
- JP-A- 11 130 771
- JP-A- 11 140 046
- JP-A- 11 140 070
- JP-A- 11 180 977
- JP-A- 11 189 592
- JP-A- 11 292 950
- JP-A- 11 322 930
- JP-A- 2000 186 086
- JP-A- 2000 230 050
- JP-A- 2000 309 584
- JP-A- 2001 002 783
- JP-A- 2001 002 933
- JP-A- 2001 163 875
- JP-A- 2001 163 978
- JP-A- 2001 166 102
- JP-A- 2001 172 388
- JP-A- 2001 288 181
- JP-A- 2002 122 701
- JP-A- 2002 194 083
- PATENT ABSTRACTS OF JAPAN vol. 2000, no. 23, 10 February 2001 (2001-02-10) & JP 2001 172388 A (MITSUI CHEMICALS INC), 26 June 2001 (2001-06-26)
- PATENT ABSTRACTS OF JAPAN vol. 2000, no. 03, 30 March 2000 (2000-03-30) & JP 11 352302 A (SEIKO EPSON CORP), 24 December 1999 (1999-12-24)

## Description

### BACKGROUND OF THE INVENTION

The present invention relates to a polymerizable composition suited to optical materials such as plastic lenses, prisms, optical fibers, information recording discs, filters, microlenses and adhesives for displays, which use a compound having at least one episulfide group in a molecule, especially plastic lenses for spectacles, an optical material comprising the same and a production process for the same.

### RELATED ART

Plastic materials are light and tough and can readily be colored, and therefore they are used for various optical materials, particularly spectacle lenses in many cases in recent years. Performances required to an optical material, particularly a spectacle lens are, in addition to a low specific gravity, a high refractive index and a high Abbe number as optical performances and a high heat resistance and a high strength as physical performances. The high refractive index makes it possible to decrease a thickness of a lens; the high Abbe number reduces a chromic aberration of a lens; and the high heat resistance and the high strength makes secondary processing easier and are important from a safety point of view.

The present inventors found various compounds having an episulfide structure which makes it possible to provide an optical material having a thin thickness, a low chromic aberration, a refractive index of 1.7 or more and an Abbe number of 35 or more, and they filed patent applications (Japanese Patent Application Laid-Open No. 71580/1997, Japanese Patent Application Laid-Open No. 110979/1997, Japanese Patent Application Laid-Open No. 255781/1997 and Japanese Patent Application Laid-Open No. 130771/1999).

Further, they developed, as a technique for making it possible to provide a high refractive, resins for an optical material having a high refractive index comprising an inorganic compound having a sulfur atom and/or a selenium atom and a compound which can be reacted with the above compound, and they filed patent applications (Japanese Patent Application Laid-Open No. 2783/2001 and Japanese Patent Application Laid-Open No. 2933/2001). Further, they found resin compositions providing a high impact resistance and filed patent applications (Japanese Patent Application Laid-Open No. 82203/2002 and Japanese Patent Application Laid-Open No. 122701/2002).

However, lenses obtained by polymerizing these resin compositions generate a peculiar odor in processings such as cutting, polishing and drilling which originates in an increase in a sulfur content of the resins, and the odor gives an unpleasant feeling to the workers, so that improvement thereof has been required.

A method for reducing an odor generated in cutting and polishing lenses for spectacles by adding a perfume-providing compound is disclosed (for example, Japanese Patent Publication No. 56641/1990 and Japanese Patent Application Laid-Open No. 297201/1993). However, they were not disclosed an effect to reduce an odor produced in cutting and polishing cured matters obtained by polymerizing and curing polymerizable compositions of a high sulfur content having at least one episulfide compound in a molecule only by specific compounds disclosed in these documents. In particular, fragrant components suited to the above cured matters having a strong odor have been desired to be developed.

Also, lenses obtained by curing these resin compositions tended to be liable to produce cloudiness. Accordingly, the best use of the characteristics thereof were not sufficiently made.

Optical materials having a high refractive index which were obtained by polymerizing these sulfur-containing compounds were colored yellow in polymerizing in a certain case, and further, when heated or exposed to light for long time, they tended to be colored yellow.

A high refractive index was achieved by optical materials obtained from polyepisulfide compounds, but the transparency thereof was not satisfactory as a high refractive index lens usually marketed as a high grade product.

### DISCLOSURE OF THE INVENTION

An object of the present invention is to develop a fragrant component which effectively reduces an odor of a cured product obtained by polymerizing and curing a polymerizable composition having at least one episulfide compound in a molecule and to clarify a chemical structure of a fragrant component which effectively works.

Intensive investigations repeated by the present inventors in order to achieve the objects described above have resulted in finding that addition of a fragrant component to a polymerizable composition comprising a compound having at least one episulfide compound in a molecule is effective for reducing an odor of a cured product obtained by polymerizing and curing the above composition and that especially at least one component selected from the group consisting (a), (b), (c) and (d) described below effectively reduces the odor, and thus they have completed the present invention:
(a) hydrocarbon, aldehyde, ketone, ester or alcohol having a skeleton represented by (CH₃)₂C< or (CH₃)₂ C=,
(b) aldehyde, ketone, ester or alcohol in which a γ-position carbon constitutes a cyclic skeleton or an esterified compound of alcohol in which a γ-position carbon constitutes a cyclic skeleton,
(c) a compound having a cyclic ketone skeleton or a cyclic ester skeleton having 4 to 20 carbon atoms and
(d) a plant extract.

A subject intended to be solved by the present invention is to prevent a cloudiness of an optical material obtained by polymerizing and curing a composition for a high refractive index optical material containing sulfur. Intensive investigations repeated by the present inventors in order to achieve the object described above have resulted in finding that a cloudiness of a lens originates in impurities of sulfur. That is, a cloudiness of a lens is dissolved by removing impurities contained in sulfur and elevating the purity to 98 % or more, and thus the present invention has been completed.

Further, a subject intended to be solved by the present invention is to raise an oxygen resistance and a light fastness of these high refractive index optical materials to improve the color tone. Intensive researches repeated by the present inventors in order to achieve this subject of the invention have resulted in finding that chlorine-containing compounds contained in sulfur-containing compounds are a cause to deteriorate a color tone of an optical material and that the color tone of the optical material is not deteriorated by reducing the chlorine content to 0.1 % by weight or less, and thus they have reached the present invention.

Further, the subject of the present invention is to provide an optical material having a high refractive index with a high grade transparency. Intensive researches repeated by the present inventors in order to achieve this subject of the invention have resulted in finding that a high refractive index optical material having a transparency and a heat resistance of a high grade can be produced by subjecting the above composition in advance to deaerating treatment at 0 to 100°C for one minute to 24 hours under a reduced pressure of 0.001 to 50 torr, and thus they have reached the present invention.

### BEST MODE FOR CARRYING OUT THE INVENTION

The present invention relates to a polymerizable composition comprising a compound having at least one structure represented by the following Formula (1) in a molecule and a perfume: 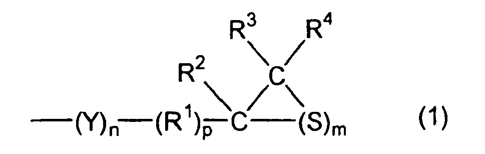 wherein R¹ represents a hydrocarbon having 1 to 10 carbon atoms or a single bond; R², R³ and R⁴ each represent a hydrocarbon group having 1 to 10 carbon atoms or hydrogen; Y represents O, S, Se or Te; m = 1 to 5, n = 0 to 5 and p = 0 or 1.

The compound having at least one structure represented by Formula (1) described above in a molecule which is used in the present invention includes all compounds satisfying these conditions. In order to maintain a good balance between the high refractive index and the high Abbe number, R¹ in Formula (1) is preferably methylene or ethylene, and R², R³ and R⁴ in Formula (1) are preferably hydrogen or methyl. More preferably, R¹ is methylene, and R², R³ and R⁴ are hydrogen. Y represents O, S, Se or Te, and if aiming at higher refraction, S, Se or Te is preferred. The term m represents 1 to 5, preferably 1 or 2 and more preferably 1. The term n represents 0 to 5, preferably 0 to 4 and more preferably 0 or 1. The term p represents 0 or 1, preferably 1.

Among the compounds having the structure represented by Formula (1), a compound represented by the following Formula (2) is more preferred: 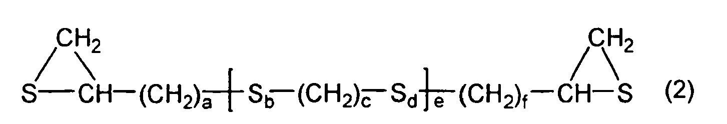 wherein a, b, c, d, e and f each represent independently an integer of 0 to 3.

The compound having at least one structure represented by Formula (1) in a molecule which is used in the present invention includes all compounds satisfying this condition, and among them, the preferred examples thereof are following ones:
(A) a compound having at least one structure of n = 0 in Formula (1) in a molecule,
(B) a compound having at least one structure of Y = O in Formula (1) in a molecule,
(C) a compound having at least one structure of Y = S in Formula (1) in a molecule,
(D) a compound having at least one structure of Y = Se in Formula (1) in a molecule and
(E) a compound having at least one structure of Y = Te in Formula (1) in a molecule.

The compounds of (A), (B), (C), (D) and (E) comprise a principal skeleton of a linear or branched, alicyclic or aromatic compound or a heterocyclic compound containing a nitrogen, oxygen, sulfur, selenium or tellurium atom. A plurality of these structures may be present in a molecule. Further, these structures may have a bond such as sulfide, selenide, telluride, ether, sulfone, ketone, ester, amide and urethane.

The following compounds can be given as the specific examples of the compound (A) described above.
Organic compounds having a linear aliphatic skeleton:
1,1-bis(epithioethyl)methane, 1,1-bis(epidithioethyl)methane, 1-(epithioethyl)-1-(β-epithiopropyl) methane, 1,1-bis(β-epithiopropyl)methane, 1-(epithioethyl)-1-(β-epithiopropyl) ethane, 1,2-bis(β-epithiopropyl)ethane, 1,2-bis(β-epithiopropyl)ethane, 1-(epithioethyl)-3-(β-epithiopropyl)butane, 1,3-bis(β - epithiopropyl)propane, 1-(epithioethyl)-4-(β-epithiopropyl)pentane, 1,4-bis(β-epithiopropyl)butane, 1-(epithioethyl)-5-(β-epithiopropyl)hexane, 1-(epithioethyl)-2-(γ-epithiobutylthio)ethane, 1-(epithioethyl)-2-[2-(γ-epithiobutylthio)ethylthio]ethane, tetrakis(β-epithiopropyl)methane, 1,1,1-tris(β-epithiopropyl) propane, 1,3-bis(β-epithiopropyl)-1-(β-epithiopropyl)-2-thiapropane and 1,5-bis(β-epithiopropyl)-2,4-bis(β-epithiopropyl)-3-thiapentane.
Compounds having a alicyclic skeleton:
(1,3 or 1,4)-bis(epithioethyl)cyclohexane, (1,3 or 1,4)-bis(β-epithiopropyl)cyclohexane, bis[4-(epithioethyl)cyclohexyl]methane, bis[4-(β-epithiopropyl)cyclohexyl]methane, 2,2-bis[4-(epithioethyl)cyclohexyl]propane, 2,2-bis[4-(β-epithiopropyl)cyclohexyl]propane, bis[4-(β-epithiopropyl)cyclohexyl] sulfide, bis[4-(epithioethyl)cyclohexyl] sulfide, 2,5-bis(epithioethyl)-1,4-dithiane, 2,5-bis(β-epithiopropyl)-1,4-dithiane, 4-epithioethyl-1,2-cyclohexene sulfide, 4-epoxy-1,2-cyclohexene sulfide, (2,3 or 2,5 or 2,6)-bis(1,2-epithioethyl)-1,4-diselenane, (2,3 or 2,5 or 2,6)-bis(2,3-epithiopropyl)-1,4-diselenane, (2,4 or 2,5 or 2,6)-bis(1,2-epithioethyl)-1,3-diselenane, (2,4 or 2,5 or 2,6)-bis(2,4-epithiopropyl)-1,3-diselenane, (2,3 or 2,5 or 2,6 or 3,5)-bis(1,2-epithioethyl)-1-thia-4-selenane, (2,3 or 2,5 or 2,6 or 3,5)-bis(2,3-epithiopropyl)-1-thia-4-selenane, (2,4 or 4,5)-bis(1,2-epithioethyl)-1,3-diselenolane, (2,4 or 4,5)-bis(2,4-epithiopropyl)-1-,3-diselenolane, (2,4 or 2,5 or 4,5)-bis(1,2-epithioethyl)-1-thia-3-selenolane, (2,4 or 2,5 or 4,5)-bis(2,4-epithiopropyl)-1-thia-3-selenolane, (2,3 or 2,4 or 2,5 or 3,4)-bis(1,2-epithioethyl)selenophane, (2,3 or 2,4 or 2,5 or 3,4)-bis(2,3-epithiopropyl)selenophane, (2,3 or 2,5 or 2,6)-bis(1,2-epithioethyl)-1,4-ditellurane, (2,3 or 2,5 or 2,6)-bis(2,3-epithiopropyl)-1,4-ditellurane, (2,4 or 2,5 or 2,6)-bis(1,2-epithioethyl)-1,3-ditellurane, (2,4 or 2,5 or 2,6)-bis(2,4-epithiopropyl)-1,3-ditellurane, (2,3 or 2,5 or 2,6 or 3,5)-bis(1,2-epithioethyl)-1-thia-4-tellurane, (2,3 or 2,5 or 2,6 or 3,5)-bis(2,3-epithiopropyl)-1-thia-4-tellurane, (2,4 or 4,5)-bis(1,2-epithioethyl)-1,3-ditellurolane, (2,4 or 4,5)-bis(2,4-epithiopropyl)-1,3-ditellurolane, (2,4 or 2,5 or 4,5)-bis(1,2-epithioethyl)-1-thia-3-tellurolane, (2,4 or 2,5 or 4,5)-bis(2,4-epithiopropyl)-1-thia-3-tellurolane, (2,3 or 2,4 or 2,5 or 3,4)-bis(1,2-epithioethyl)tellurophane and (2,3 or 2,4 or 2,5 or 3,4)-bis(2,3-epithiopropyl)tellurophane.
Compounds having an aromatic skeleton: (1,3 or 1,4)-bis(epithioethyl)benzene, (1,3 or 1,4)-bis(β-epithiopropyl)benzene, bis[4-(epithioethyl)phenyl]methane, bis[4-(β-epithiopropyl)phenyl]methane, 2,2-bis[4-(epithioethyl)phenyl]propane, 2,2-bis[4-(β - epithiopropyl)phenyl]propane, bis[4-(epithioethyl)phenyl] sulfide, bis [4-(β-epithiopropyl)phenyl] sulfide, bis[4-(epithioethyl) phenyl] sulfone, bis[4-(β-epithiopropyl)phenyl] sulfone, 4,4'-bis(epithioethyl)biphenyl and 4,4'- bis(β-epithiopropyl)biphenyl.

Further, compounds obtained by substituting at least one hydrogen of an epithio group in these compounds with methyl are given as the examples thereof.

The following compounds can be given as the specific examples of the compound (B) described above. Organic compounds having a linear aliphatic skeleton:
thioglycidyl ethers such as methyl thioglycidyl ether, ethyl thioglycidyl ether, propyl thioglycidyl ether and butyl thioglycidyl ether, bis(β-epithiopropyl) ether, bis(β-epidithiopropyl) ether, bis (β-epithiopropyloxy)methane, 1,2-bis (β-epithiopropyloxy)ethane, 1,3-bis (β-epithiopropyloxy)propane, 1,2-bis(β-epithiopropyloxy)propane, 1-(β-epithiopropyloxy)-2-(β-epithiopropyloxymethyl)propane, 1,4-bis(β-epithiopropyloxy)butane, 1,3-bis(β-epithiopropyloxy)butane, 1-(β-epithiopropyloxy)-3-(β-epithiopropyloxymethyl)butane, 1,5-bis(β-epithiopropyloxy)pentane, 1-(β-epithiopropyloxy)-4-(β-epithiopropyloxymethyl)pentane, 1,6-bis(β-epithiopropyloxy)hexane, bis(epithioethyl) ether, 1-(β-epithiopropyloxy)-5-(β-epithiopropyloxymethyl) hexane, 1-(β-epithiopropyloxy)-2- [(2-(β-epithiopropyloxyethyl)oxy]ethane, 1-(β-epithiopropyloxy)-2-[[2-(2-β-epithiopropyloxyethyl)oxyethyl]oxy]ethane, bis(5,6-epithio-3-oxyhexyl) selenide, bis(5,6-epithio-3-oxyhexyl) telluride, tetrakis(β-epithiopropyloxymethyl)methane, 1,1,1-tris(β-epithiopropyloxymethyl)propane, 1,5-bis(β-epithiopropyloxy)-2-(β-epithiopropyloxymethyl)-3-thiapentane, 1,5-bis(β-epithiopropyloxy)-2,4-bis(β-epithiopropyloxymethyl)-3-thiapentane, 1-(β-epithiopropyloxy)-2,2-bis(β-epithiopropyloxymethyl) -4-thiahexane, 1,5,6-tris(β-epithiopropyloxy)-4-(β-epithiopropyloxymethyl)-3-thiahexane, 1,8-bis(β-epithiopropyloxy)-4-(β-epithiopropyloxymethyl)-3,6-dithiaoctane, 1,8-bis(β-epithiopropyloxy)-4,5-bis(β-epithiopropyloxymethyl)-3,6-dithiaoctane, 1,8-bis(β-epithiopropyloxy)-4,4-bis(β-epithiopropyloxymethyl)-3,6-dithiaoctane, 1,8-bis(β-epithiopropyloxy)-2,4,5-tris(β-epithiopropyloxymethyl)-3,6-dithiaoctane, 1,8-bis(β-epithiopropyloxy)-2,5-bis(β-epithiopropyloxymethyl)-3,6-dithiaoctane, 1,9-bis(β-epithiopropyloxy)-5-(β-epithiopropyloxymethyl)-5-[(2-β-epithiopropyloxyethyl)oxymethyl]-3,7-dithianonane, 1,10-bis(β-epithiopropyloxy) -5,6-bis [(2-β-epithiopropyloxyethyl)oxy]-3,6,9-trithiadecane, 1,11-bis(β-epithiopropyloxy)-4,8-bis(β-epithiopropyloxymethyl)-3,6,9-trithiaundecane, 1,11-bis(β-epithiopropyloxy)-5,7-bis(β-epithiopropyloxymethyl)oxy]-3,6,9-trithiaundecane, 1,11-bis(β-epithiopropyloxy)-5,7-[(2-β-epithiopropyloxyethyl)oxymethyl]-3,6,9-trithiaundecane and 1,11-bis((3-epithiopropyloxy)-4,7-bis(β-epithiopropyloxymethyl)-3,6,9-trithiaundecane.
Organic compounds having an alicyclic skeleton: (1,3 or 1,4)-bis(β-epithiopropyloxy)cyclohexane, (1,3 or 1,4)-bis(β-epithiopropyloxymethyl)cyclohexane, bis[4-(β-epithiopropyloxy)cyclohexyl]methane, 2,2-bis [4-(β-epithiopropyloxy)cyclohexyl]propane, bis[4-(β-epithiopropyloxy)cyclohexyl] sulfide, 2,5-bis (β-epithiopropyloxymethyl)-1,4-dithiane, 2,5-bis(β-epithiopropyloxyethyloxymethyl)-1,4-dithiane, (2,4 or 4,5)-bis(3,4-epithio-1-oxabutyl)-1,3-diselenolane, (2,4 or 4,5)-bis(4,5-epithio-2-oxapentyl)-1,3-diselenolane, (2,4 or 2,5 or 4,5)-bis(3,4-epithio-1-oxabutyl)-1-thia-3-selenolane, (2,4 4 or 2,5 or 4,5)-bis(4,5-epithio-2-oxapentyl)-1-thia-3-selenolane, bis(3,4-epithio-1-oxabutyl)tricycloselenaoctane, bis(3,4-epithio-1-oxabutyl)dicycloselenanonane, (2,3 or 2,4 or 2,5 or 3,4)-bis(3,4-epithio-1-oxabutyl)selenophane, (2,3 or 2,4 or 2,5 or 3,4)-bis(4,5-epithio-2-oxapentyl)selenophane, (2,3 or 2,5 or 2,6)-bis(3,4-epithio-1-oxabutyl)-1,4-diselenane, (2,3 or 2,5 or 2,6)-bis(4,5-epithio-2-oxapentyl)-1,4-diselenane, (2,4 or 2,5 or 2,6)-bis(3,4-epithio-1-oxabutyl)-1,3-diselenane, (2,4 or 2,5 or 2,6)-bis(4,5-epithio-2-oxapentyl)-1,3-diselenane, (2,3 or 2,5 or 2,6 or 3,5)-bis(3,9-epithio-1-oxabutyl)-1-thia-9-selenane, (2,3 or 2,5 or 2,6 or 3,5)-bis(4,5-epithio-2-oxapentyl)-1-thia-4-selenane, (2,4 or 4,5)-bis(3,4-epithio-1-oxabutyl)-1,3-ditellurolane, (2,4 or 4,5)-bis(4,5-epithio-2-oxapentyl)-1,3-ditellurolane, (2,4 or 2,5 or 4,5)-bis(3,4-epithio-1-oxabutyl)-1-thia-3-tellurolane, (2,4 or 2,5 or 4, 5)-bis(4,5-epithio-2-oxapentyl)-1-thia-3-tellurolane, bis(3,4-epithio-1-oxabutyl)tricyclotelluraoctane, bis(3,4-epithio-1-oxabutyl)dicyclotelluranonane, (2,3 or 2,4 or 2,5 or 3,4)-bis(3,4-epithio-1-oxabutyl)tellurophane, (2,3 or 2,4 or 2,5 or 3,4)-bis(9,5-epithio-2-oxapentyl)tellurophane, (2,3 or 2,5 or 2,6)-bis(3,9-epithio-1-oxabutyl)-1,4-ditellurane, (2,3 or 2,5 or 2,6)-bis(4,5-epithio-2-oxapentyl)-1,4-ditellurane, (2,4 or 2,5 or 2,6)-bis(3,4-epithio-1-oxabutyl)-1,3-ditellurane, (2,4 or 2,5 or 2,6)-bis(4,5-epithio-2-oxapentyl)-1,3-ditellurane, (2,3 or 2,5 or 2,6 or 3,5)-bis(3,4-epithio-1-oxabutyl)-1-thia-4-tellurane and (2,3 or 2,5 or 2,6 or 3,5)-bis(4,5-epithio-2-oxapentyl)-1-thia-4-tellurane.
Compounds having an aromatic skeleton: (1,3 or 1,4)-bis(β-epithiopropyloxy)benzene, (1,3 or 1,4)-bis (β-epithiopropyloxymethyl)benzene, bis[4-(β-epithiopropyl)phenyl]methane, 2,2-bis[4-(β-epithiopropylthio)phenyl]propane, bis[4-(β-epithiopropylthio)phenyl] sulfide, bis[4-(β-epithiopropylthio)phenyl] sulfone and 4,4'-(β-epithiopropylthio)biphenyl.

Further, compounds obtained by substituting at least one hydrogen of an epithio group in these compounds with methyl are given as the examples thereof.

The following compounds can be given as the specific examples of the compound (C) described above.
Organic compounds having a linear aliphatic skeleton:
bis(β-epithiopropyl) sulfide, bis(β-epidithiopropyl) sulfide, bis(β-epithiopropyl) disulfide, bis(β-epidithiopropyl) disulfide, bis(β-epithiopropyl) trisulfide, bis (β-epithiopropylthio)methane, 1,2-bis (β-epithiopropylthio)ethane, 1,3-bis (β-epithiopropylthio)propane, 1,2-bis(β-epithiopropylthio)propane, bis(epithioethyl) sulfide, bis(epithioethyl) disulfide, 1-(β-epithiopropylthio)-2-(β-epithiopropylthiomethyl)propane, 1,4-bis(β-epithiopropylthio)butane, 1,3-bis(β-epithiopropylthio) butane, 1-(β-epithiopropylthio)-3-(β-epithiopropylthiomethyl)butane, 1,5-bis(β-epithiopropylthio)pentane, 1-(β-epithiopropylthio)-4-(β-epithiopropylthiomethyl)pentane, 1,6-bis (β-epithiopropylthio)hexane, 1-(β-epithiopropylthio)-5-(β-epithiopropylthiomethyl)hexane, 1-(β-epithiopropylthio)-2-[(2-β-epithiopropylthioethyl)thio]ethane, 1-(β-epithiopropylthio)-2-[[2-(2-β-epithiopropylthioethyl)thioethyl]thio]]ethane, tetrakis(β-epithiopropylthiomethyl)methane, 1,1,1-tris(β-epithiopropythiomethyl)propane, 1,5-bis (β-epithiopropylthio)-2-(β-epithiopropylthiomethyl)-3-thiapentane, 1,5-bis(β-epithiopropylthio) -2,4-bis (β-epithiopropylthiomethyl)-3-thiapentane, 1-(β-epithiopropylthio)-2,2-bis(β-epithiopropylthiomethyl)-4-thiahexane, 1, 5, 6-tris (β-epithiopropylthio)-4-(β-epithiopropylthiomethyl)-3-thiahexane, 1,8-bis(β-epithiopropylthio)-4-(β-epithiopropylothiomethyl)-3,6-dithiaoctane, 1,8-bis(β-epithiopropylthio)-9,5-bis(β-epithiopropylthiomethyl)-3,6-dithiaoctane, 1,8-bis(β-epithiopropylthio)-4,4-bis(β-epithiopropylthiomethyl)-3,6-dithiaoctane, 1,8-bis(β-epithiopropylthio)-2,4,5-tris(β-epithiopropylthiomethyl)-3,6-dithiaoctane, 1,8-bis(β-epithiopropylthio)-2,5-bis(β-epithiopropylthiomethyl)-3,6-dithiaoctane, 1,9-bis (β-epithiopropylthio)-5-(β-epithiopropylthiomethyl)-5-[(2-β-epithiopropylthioethyl)thiomethyl]-3,7-dithianonane, 1,10-bis (β-epithiopropylthio)-5,6-bis [(2-β-epithiopropylthioethyl)thio]-3,6,9-trithiadecane, 1,11-bis(β-epithiopropylthio)-4,8-bis(β-epithiopropylthiomethyl)-3,6,9-trithiaundecane, 1,11-bis(β-epithiopropylthio)-5,7-bis(β-epithiopropylthiomethyl)-3,6,9-trithiaundecane, 1,11-bis(β-epithiopropylthio)-5,7-[(2-β-epithiopropylthioethyl)thiomethyl]-3,6,9-trithiaundecane, 1,11-bis(β-epithiopropylthio)-4,7-bis(β-epithiopropylthiomethyl)-3,6,9-trithiaundecane, tetra[(2-β-epithiopropylthio)acetylmethyl]methane, 1,1,1-tri[(2-β-epithiopropylthio) acetylmethyl] propane, tetra [(2-β-epithiopropylthiomethyl)acetylmethyl]methane, 1,1,1-tri[(2-β-epithiopropylthiomethyl)acetylmethyl]propane, bis(5,6-epithio-3-thiahexyl) selenide, 2,3-bis(6,7-thioepoxy-1-selena-4-thiaheptyl)-1-(3,4-thioepoxy-1-thiabutyl)propane, 1,1,3,3-tetrakis(9,5- thioepoxy-2-thiapentyl)-2-selenapropane, bis(4,5-thioepoxy-2-thiapentyl)-3,6,9-triselenaundecane-1,11-bis(3,4-thioepoxy-1-thiabutyl), 1,4-bis(3,9-thioepoxy-1-thiabutyl)-2,3-bis(6,7-thioepoxy-1-selena-4-thiaheptyl)butane, tris(4,5-thioepoxy-2-thiapentyl)-3-selena-6-thiaoctane-1,8-bis(3,4-thioepoxy-1-thiabutyl), bis(5,6-epithio-3-thiahexyl) telluride, 2,3-bis(6,7-thioepoxy-1-tellura-4-thiaheptyl)-1-(3,9-thioepoxy-1-thiabutyl)propane, 1,1,3,3-tetrakis(4,5- thioepoxy-2-thiapentyl)-2-tellurapropane, bis(4,5- thioepoxy-2-thiapentyl)-3,6,9-tritelluraundecane-1,11-(3,4-thioepoxy-1-thiabutyl), 1,4-bis(3,9-thioepoxy-1-thiabutyl)-2,3-bis(6,7-thioepoxy-1-tellura-4-thiaheptyl)butane and tris(4,5-thioepoxy-2-thiapentyl)-3-tellura-6-thiaoctane-1,8-bis(3,4-thioepoxy-1-thiabutyl).
Organic compounds having an alicyclic skeleton: (1,3 or 1,4)-bis(β-epithiopropylthio)cyclohexane, (1,3 or 1,4)-bis(β-epithiopropylthiomethyl)cyclohexane, bis[4-(β-epithiopropylthio)cyclohexyl]methane, 2,2-bis[4-(β-epithiopropylthio)cyclohexyl]propane, bis[4-(β-epithiopropylthio)cyclohexyl] sulfide, 2,5-bis(β-epithiopropylthiomethyl)-1,4-dithiane, 2,5-bis(β-epithiopropylthioethylthiomethyl)-1,4-dithiane, (2,3 or 2,5 or 2,6)-bis(3,4-epithio-1-thiabutyl)-1,4-diselenane, (2,3 or 2,5 or 2,6)-bis(4,5-epithio-2-thiapentyl)-1,4-diselenane, (2,4 or 2,5 or 5,6)-bis(3,4-epithio-1-thiabutyl)-1,3-diselenane, (2,4 or 2,5 or 5,6)-bis(4,5-epithio-2-thiapentyl)-1,3-diselenane, (2,3 or 2,5 or 2,6 or 3,5)-bis(3,4-epithio-1-thiabutyl)-1-thia-4-selenane, (2,3 or 2,5 or 2,6 or 3,5)-bis(4,5-epithio-2-thiapentyl)-1-thia-4-selenane, (2,4 or 4,5)-bis(3,9-epithio-1-thiabutyl)-1,3-diselenolane, (2,4 or 4,5)-bis(4,5-epithio-2-thiapentyl)-1,3-diselenolane, (2,4 or 2,5 or 4,5)-bis(3,4-epithio-1-thiabutyl)-1-thia-3-selenolane, (2,4 or 2,5 or 4,5)-bis(4,5-epithio-2-thiapentyl)-1-thia-3-selenolane, 2,6-bis(4,5-epithio-2-thiapentyl)-1,3,5-triselenane, bis(3,4-epithio-1-thiabutyl)tricycloselenaoctane, bis(3,4-epithio-1-thiabutyl)dicycloselenanonane, (2,3 or 2,4 or 2,5 or 3,4)-bis(3,4-epithio-1-thiabutyl)selenophane, (2,3 or 2,4 or 2,5 or 3,4)-bis(4,5-epithio-2-thiapentyl)selenophane, 2-(4,5-thioepoxy-2-thiapentyl)-5-(3,4-thioepoxy-1-thiabutyl)-1-selenacyclohexane, (2,3 or 2,4 or 2,5 or 2,6 or 3,4 or 3,5 or 4,5)-bis(3,4-thioepoxy -1-thiabutyl)-1-selenacyclohexane, (2,3 or 2,4 or 2,5 or 2,6 or 3,4 or 3,5 or 4,5)-bis(4,5-thioepoxy-2-thiapentyl)-1-selenacyclohexane, (2,3 or 2,5 or 2,6)-bis(3,4-epithio-1-thiabutyl)-1,4-ditellurane, (2,3 or 2,5 or 2,6)-bis(4,5-epithio-2-thiapentyl)-1,4-ditellurane, (2,4 or 2,5 or 5,6)-bis(3,4-epithio-1-thiabutyl)-1,3-ditellurane, (2,4 or 2,5 or 5,6)-bis(4,5-epithio-2-thiapentyl)-1,3-ditellurane, (2,3 or 2,5 or 2,6 or 3,5)-bis(3,4-epithio-1-thiabutyl)-1-thia-4-tellurane, (2,3 or 2,5 or 2,6 or 3,5)-bis(4,5-epithio-1-thiapentyl)-1-thia-4-tellurane, (2,4 or 4,5)-bis(3,4-epithio-1-thiabutyl)-1,3-ditellurolane, (2,4 or 4,5)-bis(4,5-epithio-2-thiapentyl)-1,3-ditellurolane, (2,4 or 2,5 or 4,5)-bis(3,4-epithio-1-thiabutyl)-1-thia-3-tellurolane, (2,4 or 2,5 or 4,5)-bis(4,5-epithio-2-thiapentyl)-1-thia-3-tellurolane, 2,6-bis(4,5-epithio-2-thiapentyl)-1,3,5-tritellurane, bis(3,4-epithio-1-thiabutyl)tricyclotelluraoctane, bis(3,4-epithio-1-thiabutyl)dicyclotelluranonane, (2,3 or 2,4 or 2,5 or 3,4)-bis(3,4-epithio-1-thiabutyl)tellurophane, (2,3 or 2,4 or 2,5 or 3,4)-bis(4,5-epithio-2-thiapentyl)tellurophane, 2-(4,5-thioepoxy-2-thiapentyl)-5-(3,9-thioepoxy-1-thiabutyl)-1-telluracyclohexane, (2,3 or 2,4 or 2,5 or 2,6 or 3,4 or 3,5 or 4,5)-bis(3,4-thioepoxy-1-thiabutyl)-1-telluracyclohexane and (2,3 or 2,4 or 2,5 or 2,6 or 3,4 or 3,5 or 4,5)-bis(4,5-thioepoxy-2-thiapentyl)-1-telluracyclohexane.
Compounds having an aromatic skeleton: (1,3 or 1,4)-bis(β-epithiopropylthio)benzene, (1,3 or 1,4)-bis(β-epithiopropylthiomethyl)benzene, bis [4-(β-epithiopropylthio)phenyl]methane, 2,2-bis [4-(β-epithiopropylthio)phenyl]propane, bis[4-(β-epithiopropylthio)phenyl] sulfide, bis[4-(β-epithiopropylthio)phenyl] sulfone and 4,4'-(β-epithiopropylthio)biphenyl.

Further, compounds obtained by substituting at least one hydrogen of a β-epithiopropyl group in these compounds with methyl are given as the examples thereof.

The following compounds can be given as the specific examples of the compound (D) described above.
Organic compounds having a linear aliphatic skeleton: bis(β-epithiopropyl) selenide, bis(β-epidithiopropyl) selenide, bis(β-epithiopropyl) diselenide, bis(β-epidithiopropyl) diselenide, bis(β-epithiopropyl) triselenide, bis(β-epithiopropylseleno)methane, 1,2-bis(β-epithiopropylseleno)ethane, 1,3-bis(β-epithiopropylseleno)propane, 1,2-bis(β-epithiopropylseleno) propane, bis(epithioethyl) selenide, bis(epithioethyl) diselenide, 1-(β-epithiopropylseleno)-2-(β-epithiopropylselenomethyl)propane, 1,4-bis(β-epithiopropylseleno)butane, 1,3-bis(β-epithiopropylseleno)butane, 1-(β-epithiopropylseleno)-3-(β-epithiopropylselenomethyl)butane, 1,5-bis(β-epithiopropylseleno)pentane, 1-(β-epithiopropylseleno)-4-(β-epithiopropylselenomethyl)pentane, 1,6-bis(β-epithiopropylseleno)hexane, 1-(β-epithiopropylseleno)-5-(β-epithiopropylselenomethyl)hexane, 1-(β-epithiopropylseleno)-2-[(2-β-epithiopropylselenoethyl)thio]ethane, 1-(β-epithiopropylseleno)-2-[[2-(2-β-epithiopropylselenoethyl)selenoethyl]thio]]ethane, tetrakis(β-epithiopropylselenomethyl)methane, 1,1,1-tris(β-epithiopropyselenomethyl)propane, 1,5-bis(β-epithiopropylseleno)-2-(β-epithiopropylselenomethyl)-3-thiapentane, 1,5-bis(β-epithiopropylseleno)-2,4-bis(β-epithiopropylselenomethyl)-3-thiapentane, 1-(β-epithiopropylseleno)-2,2-bis(β-epithiopropylselenomethyl)-4-thiahexane, 1,5,6-tris(β-epithiopropylseleno)-4-(β-epithiopropylselenomethyl)-3-thiahexane, 1,8-bis(β-epithiopropylseleno)-4-(β-epithiopropyloselenomethyl)-3,6-dithiaoctane, 1,8-bis (β-epithiopropylseleno) -4, 5-bis (β-epithiopropylselenomethyl)-3,6-dithiaoctane, 1,8-bis(β-epithiopropylseleno)-4,4-bis(β-epithiopropylselenomethyl)-3,6-dithiaoctane, 1,8-bis(β-epithiopropylseleno)-2,9,5-tris(β-epithiopropylselenomethyl)-3,6-dithiaoctane, 1,8-bis(β-epithiopropylseleno)-2,5-bis(β-epithiopropylselenomethyl)-3,6-dithiaoctane, 1,9-bis(β-epithiopropylseleno)-5-(β-epithiopropylselenomethyl)-5-[(2-β-epithiopropylselenoethyl)selenomethyl]-3,7-dithianonane, 1,10-bis(β-epithiopropylseleno)-5,6-bis[(2-β-epithiopropylselenoethyl)thio]-3,6,9-trithiadecane, 1,11-bis(β -epithiopropylseleno)-4, 8-bis (β-epithiopropylselenomethyl)-3,6,9-trithiaundecane, 1,11-bis (β-epithiopropylseleno)-5,7-bis(β-epithiopropylselenomethyl)-3,6,9-trithiaundecane, 1,11-bis (β-epithiopropylseleno)-5,7- [(2-β-epithiopropylselenoethyl)selenomethyl]-3,6,9-trithiaundecane, 1,11-bis (β-epithiopropylseleno) -4,7-bis(β-epithiopropylselenomethyl)-3,6,9-trithiaundecane, tetra[(2-β-epithiopropylseleno)acetylmethyl]methane, 1,1,1-tri[(2-β-epithiopropylseleno)acetylmethyl]propane, tetra[(2-β-epithiopropylselenomethyl)acetylmethyl]methane, 1,1,1-tri [(2-β-epithiopropylselenomethyl)acetylmethyl]propane, bis(5,6-epithio-3-selenohexyl) selenide, 2,3-bis(6,7-thioepoxy-1-selena-4-selenoheptyl)-1-(3,9-thioepoxy-1-selenobutyl)propane, 1,1,3,3-tetrakis(4,5- thioepoxy-2-selenopentyl)-2-selenapropane, bis(4,5-thioepoxy-2-selenopentyl)-3,6,9-triselenaundecane-1,11-(3,4-thioepoxy-1-selenobutyl), 1,9-bis(3,9-thioepoxy-1-selenobutyl)-2,3-bis(6,7-thioepoxy-1-selena-4-selenoheptyl)butane, tris(4,5-thioepoxy-2-selenopentyl)-3-selena-6-thiaoctane-1,8-bis(3,4-thioepoxy-1-selenobutyl), bis(5,6-epithio-3-selenohexyl) telluride, 2,3-bis(6,7-thioepoxy-1-tellura-4-selenoheptyl)-1-(3,9-thioepoxy-1-selenobutyl)propane, 1,1,3,3-tetrakis(4,5- thioepoxy-2-selenopentyl)-2-tellurapropane, bis(4,5- thioepoxy-2-selenopentyl)-3,6,9-tritelluraundecane-1,11-bis(3,4-thioepoxy-1-selenobutyl), 1,4-bis(3,4-thioepoxy-1-selenobutyl)-2,3-bis(6,7-thioepoxy-1-tellura-4-selenoheptyl)butane and tris(4,5-thioepoxy-2-selenopentyl)-3-tellura-6-thiaoctane-1,8-bis(3,4-thioepoxy-1-selenobutyl).
Organic compounds having an alicyclic skeleton: (1,3 or 1,4)-bis(β-epithiopropylseleno)cyclohexane, (1,3 or 1,4)-bis(β-epithiopropylselenomethyl)cyclohexane, bis[4-(β-epithiopropylseleno)cyclohexyl]methane, 2,2-bis[4-(β-epithiopropylseleno)cyclohexyl]propane, bis[4-(β-epithiopropylseleno)cyclohexyl] sulfide, 2,5-bits (β-epithiopropylselenomethyl)-1,9-dithiane, 2,5-bis(β-epithiopropylselenoethylthiomethyl)-1,4-dithiane, (2,3 or 2,5 or 2,6)-bis(3,9-epithio-1-selenobutyl)-1,9-diselenane, (2,3 or 2,5 or 2,6)-bis(4,5-epithio-2-selenopentyl)-1,4-diselenane, (2,4 or 2,5 or 5,6)-bis(3,4-epithio-1-selenobutyl)-1,3-diselenane, (2,4 or 2,5 or 5,6)-bis(4,5-epithio-2-selenopentyl)-1,3-diselenane, (2,3 or 2,5 or 2,6 or 3,5)-bis(3,4-epithio-1-selenobutyl)-1-thia-4-selenane, (2,3 or 2,5 or 2,6 or 3,5)-bis(4,5-epithio-2-selenopentyl)-1-thia-4-selenane, (2,4 or 4,5)-bis(3,4-epithio-1-selenobutyl)-1,3-diselenolane, (2,4 or 4,5)-bis(4,5-epithio-2-selenopentyl)-1,3-diselenolane, (2,4 or 2,5 or 4,5)-bis(3,9-epithio-1-selenobutyl)-1-thia-3-selenolane, (2,4 or 2,5 or 4,5)-bis(4,5-epithio-2-selenopentyl)-1-thia-3-selenolane, 2,6-bis(4,5-epithio-2-selenopentyl)-1,3,5-triselenane, bis(3,4-epithio-1-selenobutyl)tricycloselenaoctane, bis(3,4-epithio-1-selenobutyl)dicycloselenanonane, (2,3 or 2,4 or 2,5 or 3,4)-bis(3,4-epithio-1-selenobutyl)selenophane, (2,3 or 2,4 or 2,5 or 3,4)-bis(4,5-epithio-2-selenopentyl)selenophane, 2-(4,5-thioepoxy-2-selenopentyl)-5-(3,4-thioepoxy-1-selenobutyl)-1-selenacyclohexane, (2,3 or 2,4 or 2,5 or 2,6 or 3,4 or 3,5 or 4,5)-bis(3,4-thioepoxy -1-selenobutyl)-1-selenacyclohexane, (2,3 or 2,4 or 2,5 or 2,6 or 3,4 or 3,5 or 4,5)-bis(4,5-thioepoxy-2-selenopentyl)-1-selenacyclohexane, (2,3 or 2,5 or 2,6)-bis(3,4-epithio-1-selenobutyl)-1,4-ditellurane, (2,3 or 2,5 or 2,6)-bis(4,5-epithio-2-selenopentyl)-1,4-ditellurane, (2,4 or 2,5 or 5,6)-bis(3,4-epithio-1-selenobutyl)-1,3-ditellurane, (2,4 or 2,5 or 5,6)-bis(4,5-epithio-2-selenopentyl)-1,3-ditellurane, (2,3 or 2,5 or 2,6 or 3,5)-bis(3,4-epithio-1-selenobutyl)-1-thia-4-tellurane, (2,3 or 2,5 or 2,6 or 3,5)-sxbis(4,5-epithio-2-selenopentyl)-1-thia-4-tellurane, (2,4 or 4,5)-bis(3,4-epithio-1-selenobutyl)-1,3-ditellurolane, (2,4 or 4,5)-bis(4,5-epithio-2-selenopentyl)-1,3-ditellurolane, (2,4 or 2,5 or 4,5)-bis(3,4-epithio-1-selenobutyl)-1-thia-3-tellurolane, (2,4 or 2,5 or 4,5)-bis(4,5-epithio-2-selenopentyl)-1-thia-3-tellurolane, 2,6-bis(4,5-epithio-2-selenopentyl)-1,3,5-tritellurane, bis(3,4-epithio-1-selenobutyl)tricyclotelluraoctane, bis(3,4-epithio-1-selenobutyl)dicyclotelluranonane, (2,3 or 2,4 or 2,5 or 3,4)-bis(3,4-epithio-1-selenobutyl)tellurophane, (2,3 or 2,4 or 2,5 or 3,4)-bis(4,5-epithio-2-selenopentyl)tellurophane, 2-(4,5-thioepoxy-2-selenopentyl)-5-(3,4-thioepoxy-1-selenobutyl)-1-telluracyclohexane, (2,3 or 2,4 or 2,5 or 2,6 or 3,4 or 3,5 or 4,5)-bis(3,4-thioepoxy -1-selenobutyl)-1-telluracyclohexane and (2,3 or 2,4 or 2,5 or 2,6 or 3,4 or 3,5 or 4,5)-bis(4,5-thioepoxy-2-selenopentyl)-1-telluracyclohexane.
Compounds having an aromatic skeleton: (1,3 or 1,4)-bis(β-epithiopropylseleno)benzene, (1,3 or 1,4)-bis(β-epithiopropylselenomethyl)benzene, bis[4-(β-epithiopropylseleno)phenyl]methane, 2,2-bis[4-(β-epithiopropylseleno)phenyl]propane, bis[4-(β-epithiopropylseleno)phenyl] sulfide, bis [4-(β-epithiopropylseleno)phenyl] sulfone and 4,4'-(β-epithiopropylseleno)biphenyl.

Further, compounds obtained by substituting at least one hydrogen of a β-epithiopropyl group in these compounds with methyl are given as the examples thereof.

The following compounds can be given as the specific examples of the compound (E) described above.
Organic compounds having a linear aliphatic skeleton: bis(β-epithiopropyl) telluride, bis(β-epidithiopropyl) telluride, bis(β-epithiopropyl) ditelluride, bis(β-epidithiopropyl) ditelluride, bis(β-epithiopropyl) tritelluride, bis(β-epithiopropyltelluro)methane, 1,2-bis(β-epithiopropyltelluro)ethane, 1,3-bis(β-epithiopropyltelluro)propane, 1,2-bis(β-epithiopropyltelluro)propane, bis(epithioethyl) telluride, bis(epithioethyl) ditelluride, 1-(β-epithiopropyltelluro)-2-(β-epithiopropyltelluromethyl)propane, 1,4-bis(β-epithiopropyltelluro) butane, 1,3-bis(β-epithiopropyltelluro) butane, 1-(β-epithiopropyltelluro)-3-(β-epithiopropyltelluromethyl) butane, 1,5-bis(β-epithiopropyltelluro)pentane, 1-(β-epithiopropyltelluro)-4-(β-epithiopropyltelluromethyl)pentane, 1,6-bis(β-epithiopropyltelluro)hexane, 1-(β-epithiopropyltelluro)-5-(β-epithiopropyltelluromethyl)hexane, 1- (β-epithiopropyltelluro)-2-[(2-β-epithiopropyltelluroethyl)thio]ethane, 1-(β-epithiopropyltelluro)-2-[[2-(2-β-epithiopropyltelluroethyl)telluroethyl]thio]]ethane, tetrakis(β-epithiopropyltelluromethyl)methane, 1,1,1-tris(β-epithiopropytelluromethyl)propane, 1,5-bis(β-epithiopropyltelluro)-2-(β-epithiopropyltelluromethyl)-3-thiapentane, 1,5-bis(β-epithiopropyltelluro)-2,4-bis(β-epithiopropyltelluromethyl)-3-thiapentane, 1-(β-epithiopropyltelluro)-2,2-bis(β-epithiopropyltelluromethyl)-4-thiahexane, 1,5,6-tris(β-epithiopropyltelluro)-4-(β-epithiopropyltelluromethyl) -3-thiahexane, 1,8-bis(β-epithiopropyltelluro)-4-(β-epithiopropylotelluromethyl)-3,6-dithiaoctane, 1,8-bis(β-epithiopropyltelluro)-4,5-bis(β-epithiopropyltelluromethyl)-3,6-dithiaoctane, 1,8-bis(β-epithiopropyltelluro)-4,4-bis(β-epithiopropyltelluromethyl)-3,6-dithiaoctane, 1,8-bis(β-epithiopropyltelluro)-2,4,5-tris(β-epithiopropyltelluromethyl)-3,6-dithiaoctane, 1,8-bis (β-epithiopropyltelluro)-2,5-bis(β-epithiopropyltelluromethyl)-3,6-dithiaoctane, 1,9-bis(β-epithiopropyltelluro)-5-(β-epithiopropyltelluromethyl)-5-[(2-β-epithiopropyltelluroethyl)selenomethyl]-3,7-dithianonane, 1,10-bis(β-epithiopropyltelluro) -5,6-bis[(2-β-epithiopropyltelluroethyl)thio]-3,6,9-trithiadecane, 1,11-bis(β-epithiopropyltelluro)-4,8-bis(β-epithiopropyltelluromethyl)-3,6,9-trithiaundecane, 1,11-bis(β-epithiopropyltelluro)-5,7-bis(β-epithiopropyltelluromethyl)-3,6,9-trithiaundecane, 1,11-bis (β-epithiopropyltelluro)-5,7-[(2-β-epithiopropyltelluroethyl)selenomethyl]-3,6,9-trithiaundecane, 1,11-bis(β-epithiopropyltelluro)-4,7-bis(β-epithiopropyltelluromethyl)-3,6,9-trithiaundecane, tetra[(2-β-epithiopropyltelluro)acetylmethyl]methane, 1,1,1-tri[(2-β-epithiopropyltelluro)acetylmethyl]propane, tetra[(2-β-epithiopropyltelluromethyl)acetylmethyl]methane, 1,1,1-tri[(2-β-epithiopropyltelluromethyl)acetylmethyl]propane, bis(5,6-epithio-3-tellurohexyl) selenide, 2,3-bis(6,7-thioepoxy-1-selena-4-telluroheptyl)-1-(3,4-thioepoxy-1-tellurobutyl)propane, 1,1,3,3-tetrakis(4,5- thioepoxy-2-telluropentyl)-2-selenapropane, bis(4,5-thioepoxy-2-telluropentyl)-3,6,9-triselenaundecane-1,11-(3,4-thioepoxy-1-tellurobutyl), 1,4-bis(3,4-thioepoxy-1-tellurobutyl)-2,3-bis(6,7-thioepoxy-1-selena-4-telluroheptyl)butane, tris(4,5-thioepoxy-2-telluropentyl)-3-selena-6-thiaoctane-1,8-bis(3,4-thioepoxy-1-tellurobutyl), bis(5,6-epithio-3-tellurohexyl) telluride, 2,3-bis(6,7-thioepoxy-1-tellura-4-telluroheptyl)-1-(3,4-thioepoxy-1-tellurobutyl)propane, 1,1,3,3-tetrakis(4,5- thioepoxy-2-telluropentyl)-2-tellurapropane, bis(4,5- thioepoxy-2-telluropentyl)-3,6,9-tritelluraundecane-1,11-bis(3,4-thioepoxy-1-tellurobutyl), 1,4-bis(3,4-thioepoxy-1-tellurobutyl)-2,3-bis(6,7-thioepoxy-1-tellura-4-telluroheptyl)butane and tris(4,5-thioepoxy-2-telluropentyl)-3-tellura-6-thiaoctane-1,8-bis(3,4-thioepoxy-1-tellurobutyl).
Compounds having an alicyclic skeleton:
(1,3 or 1,4)-bis(β-epithiopropyltelluro)cyclohexane, (1,3 or 1,4)-bis(β-epithiopropyltelluromethyl)cyclohexane, bis[4-(β-epithiopropyltelluro)cyclohexyl]methane, 2,2-bis[4-(β-epithiopropyltelluro)cyclohexyl]propane, bis[4-(β-epithiopropyltelluro)cyclohexyl] sulfide, 2,5-bis (β-epithiopropyltelluromethyl)-1,4-dithiane, 2,5-bis(β-epithiopropyltelluroethylthiomethyl)-1,4-dithiane, (2,3 or 2,5 or 2,6)-bis(3,4-epithio-l-tellurobutyl)-1,4-diselenane, (2,3 or 2,5 or 2,6)-bis(4,5-epithio-2-telluropentyl)-1,4-diselenane, (2,4 or 2,5 or 5,6)-bis(3,4-epithio-1-tellurobutyl)-1,3-diselenane, (2,4 or 2,5 or 5,6)-bis(4,5-epithio-2-telluropentyl)-1,3-diselenane, (2,3 or 2,5 or 2,6 or 3,5)-bis(3,4-epithio-1-tellurobutyl)-1-thia-4-selenane, (2,3 or 2,5 or 2,6 or 3,5)-bis(4,5-epithio-2-telluropentyl)-1-thia-4-selenane, (2,4 or 4,5)-bis(3,4-epithio-1-tellurobutyl)-1,3-diselenolane, (2,4 or 4,5)-bis(4,5-epithio-2-telluropentyl)-1,3-diselenolane, (2,4 or 2,5 or 4,5)-bis(3,4-epithio-1-tellurobutyl)-1-thia-3-selenolane, (2,4 or 2,5 or 4,5)-bis(4,5-epithio-2-telluropentyl)-1-thia-3-selenolane, 2,6-bis(4,5-epithio-2-telluropentyl)-1,3,5-triselenane, bis(3,4-epithio-1-tellurobutyl)tricycloselenaoctane, bis(3,4-epithio-1-tellurobutyl)dicycloselenanonane, (2,3 or 2,4 or 2,5 or 3,4)-bis(3,4-epithio-1-tellurobutyl)selenophane, (2,3 or 2,4 or 2,5 or 3,4)-bis(4,5-epithio-2-telluropentyl)selenophane, 2-(4,5-thioepoxy-2-telluropentyl)-5-(3,4-thioepoxy-1-tellurobutyl)-1-selenacyclohexane, (2,3 or 2,4 or 2,5 or 2,6 or 3,4 or 3,5 or 4,5)-bis(3,4-thioepoxy -1-tellurobutyl)-1-selenacyclohexane, (2,3 or 2,4 or 2,5 or 2,6 or 3,4 or 3,5 or 4,5)-bis(4,5-thioepoxy-2-telluropentyl)-1-selenacyclohexane, (2,3 or 2,5 or 2, 6) -bis (3, 4-epithio-1-tellurobutyl)-1,4-ditellurane, (2,3 or 2,5 or 2,6)-bis(4,5-epithio-2-telluropentyl)-1,4-ditellurane, (2,4 or 2,5 or 5, 6) -bis (3, 4-epithio-1-tellurobutyl) -1, 3-ditellurane, (2,4 or 2,5 or 5,6)-bis(4,5-epithio-2-telluropentyl)-1,3-ditellurane, (2,3 or 2,5 or 2,6 or 3,5)-bis(3,4-epithio-1-tellurobutyl)-1-thia-4-tellurane, (2,3 or 2,5 or 2,6 or 3,5)-bis(4,5-epithio-2-telluropentyl)-1-thia-9-tellurane, (2,4 or 4,5)-bis(3,4-epithio-1-tellurobutyl)-1,3-ditellurolane, (2,4 or 4,5)-bis(4,5-epithio-2-telluropentyl)-1,3-ditellurolane, (2,4 or 2,5 or 4,5)-bis(3,4-epithio-1-tellurobutyl)-1-thia-3-tellurolane, (2,4 or 2,5 or 4,5)-bis(4,5-epithio-2-telluropentyl)-1-thia-3-tellurolane, 2,6-bis(4,5-epithio-2-telluropentyl)-1,3,5-tritellurane, bis(3,4-epithio-1-tellurobutyl)tricyclotelluraoctane, bis(3,4-epithio-1-tellurobutyl)dicyclotelluranonane, (2,3 or 2,4 or 2,5 or 3,4)-bis(3,4-epithio-1-tellurobutyl)tellurophane, (2,3 or 2,4 or 2,5 or 3,4)-bis(4,5-epithio-2-telluropentyl)tellurophane, 2-(4,5-thioepoxy-2-telluropentyl)-5-(3,4-thioepoxy-1-tellurobutyl)-1-telluracyclohexane, (2,3 or 2,4 or 2,5 or 2,6 or 3,4 or 3,5 or 4,5)-bis(3,4-thioepoxy-1-tellurobutyl)-1-telluracyclohexane and (2,3 or 2,4 or 2,5 or 2,6 or 3,4 or 3,5 or 4,5)-bis(4,5-thioepoxy-2-telluropentyl)-1-telluracyclohexane.
Compounds having an aromatic skeleton:
(1,3 or 1,4)-bis(β-epithiopropyltelluro)benzene, (1,3 or 1,4)-bis(β-epithiopropylelluromethyl)benzene, bis[4-(β-epithiopropyltelluro)phenyl]methane, 2,2-bis[4-(β-epithiopropyltelluro)phenyl]propane, bis[4-(β-epithiopropyltelluro)phenyl] sulfide, bis[4-(β-epithiopropyltelluro)phenyl] sulfone and 4,4'-(β-epithiopropyltelluro)biphenyl.

Further, compounds obtained by substituting at least one hydrogen of a (β-epithio group in these compounds with methyl are given as the examples thereof.

Further, the compounds having an unsaturated group are included as well in the compounds of (A) to (E).

Vinylphenyl thioglycidyl ether, vinylbenzyl thioglycidyl ether, thioglycidyl methacrylate, thioglycidyl acrylate and allyl thioglycidyl ether can be given as the preferred specific examples thereof.

Among them, more preferred are the organic compounds (B) having an epithioalkyloxy group, the organic compounds (C) having an epithioalkylthio group, the organic compounds (D) having an epithioalkylseleno group and the organic compounds (E) having an epithioalkyltelluro group, and particularly preferred are the organic compounds (C) having an epithioalkylthio group and the organic compounds (D) having an epithioalkylseleno group. The specific examples of the particularly preferred compounds are the linear compounds, the branched compounds, the alicyclic compounds, the aromatic compounds and the heterocyclic compounds each having a β-epithiopropylthio group or a β-epithiopropylseleno group which are the specific examples described above.

The compound having the structure represented by Formula (1) in a molecule which is used in the present invention can be synthesized by publicly known methods. To be specific, given are methods described in Japanese Patent Application Laid-Open No. 71580/1997, Japanese Patent Application Laid-Open No. 110979/1997, Japanese Patent Application Laid-Open No. 255781/1997 and Japanese Patent Application No. 20627/2000. To be specific, epichlorohydrin is used as a raw material, and this is subjected to ring opening into chlorohydrin by hydrogen sulfide or mercaptans; it is polymerized if necessary; it is subjected to ring closing into epoxide by caustic soda or sodium hydrogencarbonate; and finally, it is turned into thia by thiourea or potassium thiocyanate to obtain cyclic sulfur.

A high refractive index optical material obtained by polymerizing the compound described above is colored yellow in polymerization in a certain case, and further, when heated or exposed to light for long time, they tended to be colored yellow. The present inventors have found that chlorine-containing compounds contained in sulfur-containing compounds are a cause to deteriorate a color tone of the optical material and that controlling the chlorine content to 0.1 % by weight or less improves an oxidation resistance and a light fastness of the high refractive index optical material and does not deteriorate a color tone of the optical material.

In producing such sulfur-containing compounds having a chlorine content of 0.1 % by weight or less, the intermediate and/or the sulfur-containing compound which is the final product are preferably subjected to at least one refinery by distillation.

In particular, the compound represented by Formula (2) is thermally instable and therefore preferably distilled by means of a thin film distiller.

As the resin is increased in a sulfur content, an unpleasant feeling caused by an odor produced in processing such as cutting, polishing and drilling grows larger. In particular, if the sulfur content exceeds 20 parts by weight, it shall be an intolerably unpleasant feeling if a fragrant component is not added. Accordingly, the odor-reducing effect of the present invention is particularly effectively displayed when the sulfur content is 20 parts by weight or more.

The fragrant component used in the present invention has to not only have a perfume but also to be dissolved well in sulfur and/or a compound having at least one episulfide group in a molecule. If the solubility is unsatisfactory, not only the monomer can not evenly be mixed, and the odor can not effectively be reduced, but also cloudiness and surface roughness shall be caused on the finished lens, and the physical properties shall be dispersed. Accordingly, it is an essential condition for effectively reducing an odor and more effectively working that the fragrant component has a chemical structure in which the fragrant component is dissolved well in sulfur and/or the compound having at least one episulfide group in a molecule.

In terms of the solubility, the branched structure is better rather than the linear structure, and especially the compounds having a skeleton represented by (CH₃)₂C< or (CH₃)₂C= are preferred. If they have this skeleton, they are dissolved well in any of hydrocarbons, aldehydes, ketones, esters and alcohols.

Even if the compounds do not have the skeleton represented by (CH₃)₂C< or (CH₃)₂C=, a good solubility is shown in the case of aldehydes, ketones, esters and alcohols when γ-position carbon constitutes a cyclic skeleton. Further, a good solubility is shown in the case of cyclic ketone compounds and cyclic ester compounds when they have 4 to 20 carbon atoms.

The compounds having these structures are effective for reducing an odor of sulfur, and therefore they are useful as well in a composition having a sulfur content of 20 % by weight or more.

The fragrant component of the present invention contains at least one component selected from the group consisting of (a), (b), (c) and (d) described below. A synergistic effect is revealed by using a plurality of the components, and therefore two or more components are preferably added.
(a) Hydrocarbon, aldehyde, ketone, ester or alcohol having a skeleton represented by (CH₃)₂C< or (CH₃)₂C=.
(b) Aldehyde, ketone, ester or alcohol in which γ-position carbon constitutes a cyclic skeleton or an esterified compound of alcohol in which γ-position carbon constitutes a cyclic skeleton.
(c) A compound having a cyclic ketone skeleton or a cyclic ester skeleton having 4 to 20 carbon atoms.
(d) A plant extract.

The following compounds are given as the preferred specific examples thereof.

The specific examples of the component (a) include hydrocarbons such as α-pinene, β-pinene, camphene, limonene, dipentene, terpinolene, myrcene, p-cymene, β-caryophyllene and isoparaffin, alcohols such as linalol, geraniol, nerol, citronellol, rhodinol, dimethyloctanol, hydroxycitronellol, tetrahydolinalol, lavandurol, myrcenol, α-terpineol, 1-menthol, borneol, nopol, farnesol, nerolidol, cedrol, vetiverol, isocamphylcyclohexanol, allocymene, methylpentenone and 2-methyl-4-(2,2,3-trimethyl-3-cyclopentene-1-yl)-2-butene-1-ol, aldehydes such as citral, citronellal, hydroxycitronellal, α-methylenecitronellal, cyclocitral, safranal, myrtenal, cuminaldehyde, cyclaminaldehyde, lilal, citronellyloxyacetaldehyde and 4(3)-(4-hydroxy-4-methylpentyl)-3-cyclohexene-1-carboxyaldehyde, ketones such as menthone, d-pulegone, piperitone, camphor, α-ionone, β-ionone, α-isomethylionone, β-isomethylionone, pseudoionone, irone, nerone, phantride, selestride, bersalide, tonalide and β-damascone and esters such as isoamyl formate, geranyl formate, citronellyl formate, isobutyl acetate, isoamyl acetate, citronellyl acetate, geranyl acetate, linalyl acetate, myrcenyl acetate, menthyl acetate, bornyl acetate, terpenyl acetate, myrcenyl acetate, cedryl acetate, dihydroterpenyl acetate, tricyclodecenyl acetate, isoamyl propionate, citronellyl propionate, linalyl propionate, geranyl propionate, terpenyl propionate, isoamyl butyrate, isopropyl butyrate, geranyl butyrate, linalyl butyrate, linalyl isobutyrate, citronellyl butyrate, citronellyl isobutyrate, benzyl isobutyrate, propyl isovalerate, isoamyl isovalerate, geranyl isovalerate, cinnamyl isovalerate, isopropyl caproate, isoamyl caproate, citronellyl caproate, isobutyl benzoate, isoamyl benzoate, geranyl benzoate, linalyl benzoate, isobutyl phenylacetate, isoamyl phenylacetate, geranyl phenylacetate, isobutyl salicylate, isoamyl salicylate, benzyl salicylate, 2-acetyl-1,2,3,4,6,7,8-octahydro-2,3,8,8-tetrahydronaphthalene and 9-acetyl-2,3,8,8-tetramethyltricyclo[5.3.1.0]-8-undecene. They can be used in suitable combination of two or more kids thereof.

The specific examples of the component (b) include alcohols such as isopulegol, benzyl alcohol, β-phenetylethyl alcohol, γ-phenetylpropyl alcohol, cinnamic alcohol, anise alcohol, dimethylbenzylcarbinol, methylphenylcarbinol, dimethylphenylcarbinol, β-phenetylethyldimethylcarbinol, β-phenetylethylmethylethylcarbinol, phenoxyethyl alcohol, phenyl glycol and tert-butylcyclohexanol, aldehydes such as perylaldehyde, benzaldehyde, phenylacetaldehyde, phenylpropylaldehyde, p-tolylaldehyde, p-tolylacetaldehyde, cinnamic aldehyde, α-methylcinnamic aldehyde, α-amylcinnamic aldehyde, α-hexylcinnamic aldehyde, anisealdehyde, heliotropin, tert-butyl-α-methylhydrocinnamic aldehyde, salicylaldehyde, vanillin, ethylvanillin, α-methyl-3,9-methylenedioxyhydrocinnamic aldehyde, o-methoxybenzadehyde, formylethyltetramethyltetralin, furfural, 5-methylfurfural, 5-hydroxymethyl-2-furfural and furylacrolein, ketones such as acetophenone, p-methylacetophenone, p-methoxyacetophenone, benzophenone, benzylideneacetone, methyl naphthyl ketone, anisylacetone, muscketone, p-acetylanisole, vitalide, propiophenone, traceolide and 3-oxa-9-ethylidene-tricyclo[6.2.1.0]-undecane-4-one and esters such as benzyl formate, phenylethyl formate, benzyl acetate, phenylethyl acetate, cinnamyl acetate, methylphenylcarbinyl acetate, anisyl acetate, 2-tert-butylcyclohexyl acetate, 4-tert-butylcyclohexyl acetate, bornyl acetate, dimethylbenzylcarbinyl acetate, benzyl propionate, cinnamyl propionate, benzyl butyrate, benzyl benzoate, phenetylethyl benzoate, benzyl phenylacetate, benzyl cinnamate, cinnamyl cinnamate, benzyl salicylate, phenetylethyl salicylate, ethyl p-methyl-β-phenylglycidate, trichloromethylphenylcarbinyl acetate and 2-acetyl-1,2,3,9,6,7,8-octahydro2,3,8,8-tetramethylnaphthalene. They can be used in suitable combination of two or more kids thereof.

The specific examples of the component (c) include γ -undecalactone, γ-nonyllactone, 1-carvone, d-carvone, maltol, ethylmaltol, jasmone, cisjasmone, isojasmone, dihydrojasmone, nutocatone, coumarin, muscone, civetone, cyclopentadecanone, cyclopentadecanolide, ambretlide, isoambretlide, cyclohexadecanolide, ethylenebrassilate, 12-oxahexadecanolide, 11-oxahexadecanolide, 10-oxahexadecanolide, methyl jasmonate, methyl dihydrojasmonate, ethylenedodecanedionate, ethylenebrassilate and jasminlactone. They can be used in suitable combination of two or more kids thereof.

In the present invention, natural perfumes containing these components can be used as the components (a) to (c) described above. The specific examples of the natural perfumes containing the components (a) to (c) include limonene in lemon oil, orange oil, perilla oil, lavender oil, caraway oil, bay oil, star-anise oil, cajuput oil, petigrain oil, bergamot oil, lemongrass oil, gingergrass oil and citronella oil, citral in lemon oil, litsea cubeba oil, lime oil, lemongrass oil, orange oil, rose oil, citronella oil, palmarosa oil and bay oil, α-pinene in lemon oil, rosemary oil, perilla oil, ajowan oil, coriander oil, fennel oil, bay oil, abies oil, turpentine oil and star-anise oil, β-pinene in lemon oil, turpentine oil, petitgrain oil, abies oil and coriander oil, camphene in lemon oil, petigrain oil, neroli oil, rosemary oil, perilla oil, fennel oil, abies oil and spike oil, linalool in petigrain oil, neroli oil, orange oil, bergamot oil, rose oil, lemongrass oil, linaloe oil, lavender oil, clary sage oil, perilla oil, spike oil, geranium oil, jasmine oil, bois de rose oil, cananga oil, ylang ylang oil, orris oil, thyme oil and coriander oil, linalyl acetate in petigrain oil, neroli oil, bergamot oil, clary sage oil, jasmine oil, linaloe oil and lavender oil, dipentene in petigrain oil, bergamot oil, gingergrass oil, palmarosa oil, ajowan oil, coriander oil, fennel oil, bois de rose oil, cajuput oil, abies oil, geranium oil, bay oil and star-anise oil, nerol in petigrain oil, neroli oil, rose oil, linaloe oil, jasmine oil, tuberosa oil, lavender oil, lemongrass oil, citronella oil and bois de rose oil, geraniol in petigrain oil, neroli oil, rose oil, gingergrass oil, citronella oil, palmarosa oil, linaloe oil, lavender oil, geranium oil, jasmine oil, bois de rose oil, tuberosa oil, orris oil, coriander oil and ylang ylang oil, nerolidol in neroli oil, terpineol in neroli oil, orange oil, linaloe oil, bois de rose oil, cajuput oil, camphor oil and spike oil, citronellol in rose oil, citronella oil and geranium oil, phenylethyl alcohol in rose oil, farnesol in rose oil, palmarosa oil, cananga oil and tuberosa oil, citronellal in lemongrass oil, citronella oil and citronella oil, carvone in gingergrass oil and caraway oil, borneol in citronella oil, rosemary oil, thyme oil, lavender oil, coriander oil and spike oil, geranyl acetate in citronella oil and geranium oil, bornyl acetate in rosemary oil and abies oil, menthol in peppermint oil, geranium oil and perilla oil, menthone in peppermint oil, pulegone in peppermint oil, perillaldehyde in perilla oil, benzaldehyde in perilla oil, patchouly oil, cinnamon oil, cassia oil, cananga oil, orris oil and cajuput oil, cinnamic aldehyde in patchouly oil, cinnamon oil and cassia oil, anisaldehyde in anise oil, methoxyacetophenon in anise oil, furfural in caraway oil, benzyl acetate in jasmine oil, jasmone in jasmine oil, benzyl alcohol in jasmine oil, ylang ylang oil, cananga oil, tuberose oil and orris oil, cinnamyl acetate in cassia oil, coumarin in cassia oil, myrcene in bay oil, caryophyllene in clove oil, cedrol in cedarwood oil, benzyl benzoate in tuberose oil and cis-jasmone in spearmint oil. They can be used in suitable combination of two or more kids thereof.

The component (d) is a plant extract, and the examples thereof include extracts obtained from plants such as Malvaceous malva, Rubiaceous cube gambir, Lardizabalaceae akebia, Cruciferae mustard, Isatis tinctoria, perilla, horse radish, Iridaceae saffron, Ginkgoaceae gingko, gramineae rice, sasa veitchii, bamboo, henon bamboo, giant timber bamboo, dendrocalamus latiflorus munro, moso bamboo, lemongrass, Aristolochiaceae aristolochia, Asiasarum Sieboldi, birthwort, Anacardiaceae polygoni radix, Ebenaceae persimmon, Betulaceae white birch, Burseraceae myrrh, Compositae arnica, inula, chrysanthemum, tarago, boneset, Ranunculaceae coptis rhizone, bugbane, bouton, lauraceous cassia, camphor tree, laurel, sassafras, Ceylon cinnamon, cinnamon japonica, juglandeceae walnut, moraceae chestnut, mulberry, Quercus, hop, piperaceae cubeb, pepper, Indian long pepper, Scrophulariacea Picorrhiza kurrooa, Punicaceae pomegranate bark, Araceae penellia ternate, sweet rush, acorus, Illiciaceae star anise, Combretaceae oak, terminalia, Labiatae rabdosia, salvia, mosla, stachys, robdosia umbrosa, thymus, prunella, perilla, ezonoodorikoso, lamium, mentha spicata, oregano, ajuga, ground ivy, Plectranthus kameba, agastache, salvia nipponica, ajuga, clary sage, clinopodium chinense, nepeta japonica, baicalensis, coleus, salvia, keiskea japonica, chelonopsis, nipponensis Makino, lycopus, spike lavender, sage, summer savory, thyme, golden thyme, scutellaria, salvia miltiorrhiza bunge (Chinese red sage), nepeta cataria, Chinese artichoke, curled lettuce, leucosceptrum japonica, elsholtzia, Hyptis suaveolens, teucrium, marrubium, basil, Japanese mint, Virginian false dragonhead (obedient plant), rabdosia japonica, scarlet sage, hyssopus, purple-dead-nettle, mosla dianthera, black mint, hedeoma, peppermint, mosla chinensis, henbit, mountain mint, sweet majoram, dysophylla, nepeta, Salvia plebeia, leonurus japonicus, Melissa, monarda, kousa, lamium humile, mosla japonica, rabdosia inflexa, meehania urticifolia, lavandin, lavender, amethystea caerulea, rosemary, Zingiberaceae Zedoary, cardamon, spicatum, Amomum tsao-ka, bitter cardamon, alpiniae officinari rhizoma, ginger, Cupressaceae cunninghamia, cryptomeria, coast redwood, Taiwan cryptomerioides, metasequoia, Umbelliferae annis, nothosmyrnium japonicum, caraway, cumin, coriander, angelica, celery, dill, bupleurum falcatum, Meliaceae milia japonica, Neem, Poligonaceae garden rhubarb, rheum officinale, rheum palmatum, water pepper, Ericaceae Jaspanese andromeda, Theaceae camellia sasanqua, tea, camellia, Saururaceae houttuynia, Solanaceae Chinese matrimony-vine, Bignoniaceae Japanese catalpa, Cupressaceae pencil cedar, oriental arbor-vitae, common juniper, European cypress, cedar leaf, Japanese cypress, obtused-leaved Japanese cypress, Polygala senega, Stemonaceae stemona japonica, Myrtaceae red ironbark, Allspice, spiral eucalypt, clove, eucalyptus regnans, wooly butt, eucalyptus leucoxylon, eucalyptus, Schisandraceae schisandra repanda, Pinaceae picea, pinus, abies, picea microsperma, Japanese larch, pinus pentaphylla, Japanese black pine, Korean pine, Japanese hemlock, hondo spruce, Japanese douglas fir, sakhalin fir, pinus pumila, Himalayan cedar, Japanese white pine, momi fir, Leguminosae cassia obtusifolia, astragali radix, sappan wood, latania, Hamamelidaceae hamamelise, Rutaceae orange, amur cork-tree, evodia forster, zanthoxylum piperitum rue, tangerine, lime, lemon, Cornaceae cornus, Boraginaceae lithospermum, Berberidaceae epimedium, nandina, Droseraceae, round-leaved sundew, Oleaceae osmanthus, golden-bell, Magnoliaceae magnolia kobus, Schisandra chinensis, Japanese big-leaf magnolia, Loranthaceae mistle, Myricaceae myrica rubra, Saxifragaceae hydrangea, oamacha makino and Liliaceae aloe. It is known that all of these extracts have a deodorant action, and they can be used in suitable combination of two or more kinds thereof.

The preferred specific examples of the components (a), (b), (c) and (d) have been listed above, but they shall not be restricted to them. A plurality of these components reveals a synergistic effect, and therefore two or more components are desirably added. Preferably three or more components, more preferably five or more components and most preferably seven or more components are added. Further, in order to elevate the effect of reducing an odor in cutting, at least one of the components described above is preferably a compound having a perfume of flower. The preferred perfume of flower includes those of jasmine, rose, lily of the valley, hyacinth and lavender.

A content of the fragrant component in the composition of the present invention is usually 0.001 to 5.0 % by weight, preferably 0.001 to 1.0 % by weight based on the whole composition. If it is less tan 0.001 % by weight, the deodorant effect is reduced in a certain case. On the other hand, if it exceeds 5.0 % by weight, not only a smell of the perfume is too strong, but also coloring, deposition and cloudiness are produced on a lens in a certain case. The large blend amount is disadvantageous as well in terms of the heat resistance in a certain case.

The perfume used in the present invention may be blended, if necessary, with the other components which have so far been used as long as the effects of the present invention are not damaged. The optional components which can be blended include a perfume other than those described above, a solvent, a fungicide, an antioxidant, a UV absorber, a chelating agent, a pH controller, a surfactant and a pigment.

The examples of the perfume other than those described above which can be blended with the composition of the present invention include ambergris, castoreum, abies oil, ambrette seed oil, angelica oil, anise oil, balsamcopaiba oil, black balsam oil, basil oil, bergamot oil, bois de rose oil, cananga oil, chamomile oil, citronella oil, elemi oil, estragon oil, eucalyptus oil, geranium oil, galbanum oil, hop oil, hyacinth absolute, jonquil absolute, juniper berry oil, lavender oil, lavandin oil, peppermint oil, myrrh oil, nutmeg seed oil, olibanum oil, opoponax oil, patchouli oil, orris oil, palmarosa oil, rose oil, sandal wood oil, styrax oil, terpin oil, violet absolute, vetiver oil, tanacetum unlgare oil and ylang ylang oil. Also, the examples of synthetic perfumes and isolated perfumes include alcohols such as santalol, cishexenol, octanol, ocimene, nonanol, methionol and tetrahydromyrcenol, aldehydes such as n-heptylaldehyde, n-octylaldehyde, n-nonylaldehyde, n-decylaldehyde, n-undecylaldehyde, undecylenealdehyde, dodecylaldehyde, methylnonylacetaldehyde, n-tridecylaldehyde, n-tetradecylaldehyde, n-hexadecylaldehyde and 2,6-nonadiel, acetals such as citral·dimethylacetal, citral·diethylacetal and phenylacetaldehyde·dimethylacetal, ketones such as methyl n-amyl ketone, ethyl n-amyl ketone, methyl n-hexyl ketone, methyl n-nonyl ketone, methylheptenone, musc·xylene, musc·ambret, musc·civetene, moskene, galaxolide and diacetyl, phenols such as anisole, diphenyl oxide, dimethylhydroquinone, p-cresol methyl ether, anethole, dihydroanethole, thymol, carabacrol, eugenol, isoeugenol, methyleugenol, benzylisoeugenol, safrole, isosafrole, β-naphthol methyl ether, β-naphthol ethyl ether and vanitrol, acids such as acetic acid, propionic acid, butyric acid, isobutyric acid, valeric acid, isovaleric acid, benzoic acid, cinnamic acid, phenylacetic acid and hydrocinnamic acid, esters such as ethyl formate, ethyl acetate, amyl acetate, nonyl acetate, stearyl acetate, ethylacetate acetate, paracresyl acetate, eugenol acetate, isoeugenol acetate, methylcarbinol acetate, ethyl propionate, ethyl butyrate, butyl butyrate, allyl caproate, methyl caproate, ethyl caproate, vinyl caproate, allyl caprylate, ethyl caprylate, methyl heptynecarboxylate, ethyl heptynecarboxylate, methyl octynecarboxylate, ethyl pyruvate, ethyl acetoacetate, ethyl levulinate, methyl β-methylpropionate, methyl benzoate, ethyl benzoate, methyl phenylacetate, ethyl phenylacetate, methyl cinnamate, ethyl cinnamate, ethyl isovalerate, dimethyl phthalate, diethyl phthalate, methyl salicylate, ethyl salicylate, methyl anisate, ethyl anisate, methyl anthranate, ethyl anthranate, methyl methylanthranate, ethyl 3,5,5-trtimethylhexanoate and ethyl methylphenylglycidate, oxides such as rose oxide, oxide ketone, linalol oxide, cineol, bicyclodihydrohomofarnesyl oxide, menthofuran and 3-oxa-9-ethylidene-tricyclo[6.2.1.0]-undecane-4-one, nitrogen compounds such as indole, skatole, 6-methylquinoline, 6-methyltetrahydroquinoline, 7-methylquinoline, 6-isopropylquinoline, iosbutylquinoline, tetramethylpyrazine, geranylnitrile, methyl anthranilate, dimethyl anthranilate, muscxylene, muscambret, musccivetene and moskene, halides such as bromostyrol and sulfur compounds such as furfuryl-mercaptan. They may not be used, and when used, at least one of them may be blended in any mixing ratio.

The solvent which can be blended with the perfume used in the present invention includes alcohols and polyhydric alcohols. The preferred specific examples thereof shall be shown below, but they shall not necessarily be restricted thereto. They ca be used alone or in combination of two or more kinds thereof.

The specific examples thereof include methanol, ethanol, propanol, butanol, 1,3-butanediol, 1,4-butanediol, glycerin, diglycerin, polyglycerin, ethylene glycol, diethylene glycol, triethylene glycol, propylene glycol, dipropylene glycol and tripropylene glycol.

The surfactant which can be blended with the perfume used in the present invention includes nonionic surfactants, anionic surfactants, cationic surfactants and amphoteric surfactants. The specific examples of the surfactants which can preferably be blended shall be shown below, but they shall not necessarily be restricted thereto. The surfactants ca be used alone or in combination of two or more kinds thereof.

The specific examples thereof include nonionic surfactants represented by sorbitan fatty acid esters, glycerin fatty acid esters, sucrose fatty acid esters, polyoxyethyelene alkyl ethers, polyoxyethyelene acyl esters, alkylpolyglycosides, fatty acid methylglycoside esters, alkylmethylglucamides and fatty acid alkanolamides, anionic surfactants represented by polyoxyethylenealkylsulfates, alkylbenzenesulfonates, α-olefinsulfonates, α-sulfofatty acid esters, fatty acid soaps, sulfosuccinates, alkylethercarboxylates, alkylphosphates, alkyletherphosphates, alkylpenyletherphosphates and alkylphosphates, cationic surfactants represented by aliphatic amines and quaternary ammonium salts thereof and aromatic amines and quaternary ammonium salts thereof and amphoteric or twin surfactants represented by amine oxides, alkylbetaines, alkylhyxdroxysulfobetaines, fatty acid amide alkylbetaines, imidazolinium betaine, alkylglycines and alkylalanines.

Sulfur used for the polymerizable composition in the present invention may have any form. The form of sulfur includes, fine powder sulfur, colloidal sulfur, precipitated sulfur, crystalline sulfur and sublimed sulfur. It is preferably fine powder sulfur of fine particles.

Sulfur may be obtained by any process. A production process for sulfur includes, for example, a sublimation production process from a natural sulfur ore, mining by a melting process of sulfur buried in the ground and a recovering process in which hydrogen sulfide obtained from a desulfurizing step of oil and natural gas is used as a raw material. Any production process can be used.

Sulfur used in the present invention has a purity of preferably 98 % or more, more preferably 99.0 % or more, further preferably 99.5 % or more and most preferably 99.8 % or more. If sulfur has a purity of less than 98 %, cloudiness is liable to be caused on a lens by influence of impurities, and it is dissolved if the purity is 98 % or more. Among the impurities of sulfur, components causing cloudiness include oil, acid components, moisture, ash components, arsenic, chlorides, sulfides and metals. In the present invention, oil, acid components, moisture and ash components account preferably for 1 % by weight or less. Oil, acid components, moisture and ash components are not copolymerized with the other monomers, and therefore they remain on a lens after polymerizing and curing and cause cloudiness. Moisture is reacted with the other monomers to produce oligomers and therefore causes cloudiness. They account preferably for 0.1 % by weight or less.

In the present invention, arsenic, chlorides, sulfides and metals account preferably for 0.1 % by weight or less. They remain on a lens after polymerized and cured as they are and therefore cause cloudiness. Even if they do not result in producing cloudiness, they remain as foreign matters, so that the commercial value is reduced. They account preferably for 0.05 % by weight or less.

In the present invention, a JIS K6222-1 standard is applied to the measurement of a purity of sulfur and the contents of oil, acid components, moisture, ash components and arsenic, and comparison with a standard solution according to a JIS K8088 standard is applied to the measurement of chlorides and sulfides. The principal components of metals detected by atomic absorption analysis are copper, lead, iron and nickel.

Sulfur used in the present invention is preferably fine powder which is finer than 10 mesh. If it is a particle larger than 10 mesh, sulfur is less liable to be completely dissolved, so that it is difficult to produce a lens. It is more preferably fine powder which is finer than 30 mesh, most preferably fine powder which is finer than 60 mesh.

When using sulfur, it is blended in a proportion of at least 0.01 % by weight or more, preferably 0.05 % by weight or more and more preferably 0.1 % by weight or more in the composition.

In the present invention, a compound having a sulfur atom and/or a selenium atom can be used in combination.

The examples of the compound having a sulfur atom and/or a selenium atom shall be given below.

The specific examples of an inorganic compound having a sulfur atom include hydrogen sulfide, selenium sulfide, carbon disulfide, carbon selenosulfide, ammonium sulfide, sulfur oxides such as sulfur dioxide and sulfur trioxide, thiocarbonates, sulfuric acid and salts thereof, hydrogensulfates, sulfites, hyposulfites, persulfates, thiocyanates, thiosulfates, halides such as sulfur dichloride, thionyl chloride and thiophosgen, boron sulfide, nitrogen sulfide, silicon sulfide, phosphorus sulfide, arsenic sulfide, metal sulfides and metal hydrosulfides.

An inorganic compound having a selenium atom includes all inorganic compounds satisfying this condition excluding carbon selenosulfide and selenium sulfide which are given as the specific examples of the inorganic compound having a sulfur atom. The specific examples thereof include selenium, hydrogen selenide, selenium dioxide, carbon diselenide, ammonium selenide, selenium oxides such as selenium dioxide, selenic acid and salts thereof, selenious acid and salts thereof, hydrogenselenates, selenosulfuric acid and salts thereof, selenopyrosulfuric acid and salts thereof, halides such as selenium tetrabromide and selenium oxychloride, selenocyanates, boron selenide, phosphorus selenide and selenides of metals. These compounds having a sulfur atom and a selenium atom may be used alone or in a mixture of two or more kinds thereof.

Many researches have so far been reported on a synthetic process of organic compounds having a sulfur atom and/or a selenium atom, and they can readily be synthesized by these publicly known processes. Several examples of many outlines and books for these synthetic processes include ┌Organic Sulfur Chemistry┘ (edited by S. Ohname, Kagaku Dojin, 1982), ┌Organoselenium Chemistry┘ (edited by Dennis Liotta, John Wiley & Sons, 1987), [chemistry special number, Organic Chemistry of 115 Hetero Atoms] (edited by N. Inamoto et al., Kagaku Dojin, 1988) and ┌Fourth Edition Experimental Chemical Course Organic Synthesis┘ (edited by Japan Chemical Association, Maruzen, 1922).

The specific examples of the organic compound having a sulfur atom include compounds having at least one mercapto group in a molecule (mercaptans), sulfides excluding episulfides, polysulfides, thioketones, thioisocyanates, thiolsulfinates, thiolsulfonates, sulfinylimines and derivatives thereof, sulfinic acid and derivatives thereof, sulfonic acid and derivatives thereof and episulfide compounds. The examples of these compounds shall be given below.
(1) Mercaptans including aliphatic mercaptans such as methylmercaptan, ethylmercaptan, n-propylmercaptan, n-butylmercaptan, allylmercaptan, n-hexylmercaptan, n-octylmercaptan, n-decylmercaptan, n-dodecylmercaptan, n-tetradecylmercaptan, n-hexadecylmercaptan, n-octadecylmercaptan, cyclohexylmercaptan, i-propylmercaptan, t-butylmercaptan, t-nonylmercaptan, t-dodecylmercaptan, phenylmercaptan, benzylmercaptan, 3-methylphenylmercaptan, 4-methylphenylmercaptan, 4-chlorobenzylphenylmercaptan, 4-vinylbenzylphenylmercaptan, 3-vinylbenzylphenylmercaptan, methylmercaptopropionate, 2-mercaptoethanol, 3-mercapto-1,2-propanediol, 2-mercapto-1,3-propanediol, mercaptoacetic acid, mercaptoglycolic acid, mercaptopropionic acid, methanedithiol, 1,2-dimercaptoethane, 1,2-dimercaptopropane, 1,3-dimercaptopropane, 2,2-dimercaptopropane, 1,4-dimercaptobutane, 1,6-dimercaptohexane, bis(2-mercaptoethyl) ether, bis(2-mercaptoethyl) sulfide, 1,2-bis(2-mercaptoethyloxy)ethane, 1,2-bis(2-mercaptoethylthio)ethane, 2,3-dimercapto-1-propanol, 1,3-dimercapto-2-propanol, 1,2,3-trimercaptopropane, 2-mercaptomethyl-1,3-dimercaptopropane, 2-mercaptomethyl-1,4-dimercaptobutane, 2-(2-mercaptoethylthio)-1,3-dimercaptopropane, 4-mercaptomethyl-1,8-dimercapto-3,6-dithiaoctane, 2,4-dimercaptomethyl-1,5-dimercapto-3-thiapentane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,1-tris(mercaptomethyl)propane, tetrakis(mercaptomethyl)methane, ethylene glycol bis(2-mercaptoacetate), ethylene glycol bis(3-mercaptopropionate), diethylene glycol bis(2-mercaptoacetate), diethylene glycol bis(3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), 1,2-dimercaptocyclohexane, 1,3-dimercaptocyclohexane, 1,4-dimercaptocyclohexane, 1,3-bis(mercaptomethyl)cyclohexane, 1,9-bis(mercaptomethyl)cyclohexane, 2,5-bis(mercaptomethyl)-1,4-dithiane, 2,5-bis(2-mercaptoethyl)-1,4-dithiane, 2,5-bis(2-mercaptoethylthiomethyl)-1,4-dithiane, 2,5-bis(mercaptomethyl)-1-thiane, 2,5-bis(2-mercaptoethyl)-1-thiane and 2,5-bis(mercaptomethyl)thiophenes and aromatic cyclic mercaptans such as 1,2-dimercaptobenzene, 1,3-dimercaptobenzene, 1,9-dimercaptobenzene, 1,3-bis(mercaptomethyl)benzene, 1,9-bis(mercaptomethyl)benzene, 2,2'-dimercaptobiphenyl, 4,4'-dimercaptobiphenyl, bis(4-mercaptophenyl)methane, 2,2-bis(4-mercaptophenyl)propane, bis(4-mercaptophenyl) ether, bis(4-mercaptophenyl) sulfide, bis(4-mercaptophenyl) sulfone, bis(4-mercaptomethylphenyl)methane, 2,2-bis(4-mercaptomethylphenyl)propane, bis(4-mercaptomethylphenyl) ether, bis(4-mercaptomethylphenyl) sulfide, 4-hydroxythiophenol and mercaptobenzoic acid,
(2) sulfides excluding episulfides, including alkyl sulfides such as dimethyl sulfide, diethyl sulfide, dipropyl sulfide, dibutyl sulfide, dipentyl sulfide, dicyclohexyl sulfide, diphenyl sulfide, methyl ethyl sulfide, methyl butyl sulfide, methyl phenyl sulfide and ditrifluoromethyl sulfide, sulfur-containing vinyl compounds such as divinyl sulfide, diallyl sulfide, dipropargyl sulfide, distyryl sulfide, vinyl ethyl sulfide, vinyl phenyl sulfide, allyl phenyl sulfide, propargyl phenyl sulfide, 3- or 4-vinylphenylthioethanol, 3- or 4-vinylbenzylthioethanol, 2-hydroxythioethyl acrylate and 2-hydroxythioethyl methacrylate, sulfur-containing cyclic sulfides excluding episulfide compounds and sulfur-containing cyclic sulfides having the skeletal structures of the cyclic compounds described above, such as dithiirane, thietane, 1,2-dithietane, 1,3-dithietane, trithietane, thiolane, 1,2-dithiolane, 1,3-dithiolane, 1,2,3-trithiolane, 1,2,4-trithiolane, tetrathiolane, thiane, 1,2-dithiane, 1,3-dithiane, 1,4-dithiane, 1,2,3-trithiane, 1,2,4-trithiane, 1,3,5-trithiane, 1,2,3,4-tetrathiane, 1,2,4,5-tetrathiane, pentathiane, thiepane, 1,2-dithiepane, 1,3-dithiepane, 1,4-dithiepane, 1,2,3-trithiepane, 1,2,4-trithiepane, 1,2,5-trithiepane, 1,3,5-trithiepane, 1,2,3,4-tetrathiepane, 1,2,3,5-tetrathiepane, 1,2,4,5-tetrathiepane, 1,2,4,6-tetrathiepane, 1,2,3,4,5-pentathiepane, 1,2,3,4,6-pentathiepane, 1,2,3,5,6-pentathiepane and hexathiepane, sulfur-containing alcohols such as 2-ethylthioethanol, bis(2-hydroxyethyl) sulfide, 1,2-bis (2-hydroxyethylthio)ethane, 2-(2-hydroxyethylthio)-1,3-dihydroxypropane, 4-hydroxymethyl-1,8-dihydroxy-3,6-dithiaoctane, 2,4-dihydroxymethyl-1,5-dihydroxy-3-thiapentane, 4,8-dihydroxymethyl-1,11-dihydroxy-3,6,9-trithiaundecane, 4,7-dihydroxymethyl-1,11-dihydroxy-3,6,9-trithiaundecane, 5,7-dihydroxymethyl-1,11-dihydroxy-3,6,9-trithiaundecane, 2,2'-thiodiphenol and 4,4'-thiodiphenol, sulfur-containing carboxylic acids such as 2,2'-thioglycolic acid, 3,3'-thiopropionic acid and 4,4'-thiodibenzoic acid and derivatives such as acid anhydrides, acid halides, esters, amides, hydrazides, hydrazones, azides, alkaline metal salts and alkaline earth metal salts thereof, sulfur-containing epoxides such as bis(β-epoxypropyl) sulfide, bis(β-epoxypropylthio)methane, 1,2-bis(β-epoxypropylthio)ethane, 1,3-bis(β-epoxypropylthio)propane, 1,2-bis(β-epoxypropylthio)propane, 1-(β-epoxypropylthio)-2-(β-epoxypropylthiomethyl)propane, 1,4-bis(β-epoxypropylthio) butane, 1,3-bis(β-epoxypropylthio)butane, 1-(β-epoxypropylthio)-3-(β-epoxypropylthiomethyl)butane, 1,5-bis(β-epoxypropylthio)pentane, 1-(β-epoxypropylthio) -4-(β-epoxypropylthiomethyl)pentane, 1,6-bis(β-epoxypropylthio)hexane, 1-(β-epoxypropylthio)-5-(β-epoxypropylthiomethyl)hexane, 1-(β-epoxypropylthio)-2-[(2-β-epoxypropylthioethyl)thio]ethane, 1-(β-epoxypropylthio)-2-[[2-(2-β-epoxypropylthioethyl)thioethyl]thio]ethane, tetrakis(β-epoxypropylthiomethyl)methane, 1,1,1-tris(β-epoxypropylthiomethyl)propane, 1,5-bis(β-epoxypropylthio)-2-(β-epoxypropylthiomethyl)-3-thiapentane, 1,5-bis(β-epoxypropylthio)-2,4-bis(β-epoxypropylthiomethyl)-3-thiapentane, 1-(β-epoxypropylthio)-2,2-bis(β-epoxypropylthiomethyl)-4-thiahexane, 1,5,6-tris(β-epoxypropylthio)-4-(β-epoxypropylthiomethyl)-3-thiahexane, 1,8-bis(β-epoxypropylthio)-4-(β-epoxypropylthiomethyl)-3,6-dithiaoctane, 1,8-bis(β-epoxypropylthio)-4,5-bis(β-epoxypropylthiomethyl)-3,6-dithiaoctane, 1,8-bis(β-epoxypropylthio)-4,4-bis(β-epoxypropylthiomethyl)-3,6-dithiaoctane, 1,8-bis(β-epoxypropylthio)-2,4,5-tris(β-epoxypropylthiomethyl)-3,6-dithiaoctane, 1,8-bis(β-epoxypropylthio)-2,5-bis(β-epoxypropylthiomethyl)-3,6-dithiaoctane, 1,9-bis(β-epoxypropylthio)-5-(β-epoxypropylthiomethyl)-5-[(2-β-epoxypropylthioethyl)thiomethyl]-3,7-dithianonane, 1,10-bis (β-epoxypropylthio)-5,6-bis [(2-β-epoxypropylthioethyl)thio]-3,6,9-trithiadecane, 1,11-bis(β-epoxypropylthio)-4,8-bis(β-epoxypropylthiomethyl)-3,6,9-trithiaundecane, 1,11-bis(β-epoxypropylthio)-5,7-bis(β-epoxypropylthiomethyl)-3,6,9-trithiaundecane, 1,11-bis (β-epoxypropylthio) -5, 7- [(2-β-epoxypropylthioethyl)thiomethyl]-3,6,9-trithiaundecane, 1,11-bis(β-epoxypropylthio)-4,7-bis(β-epoxypropylthiomethyl)-3,6,9-trithiaundecane, 1,3- and 1,4-bis(β-epoxypropylthio)cyclohexane, 1,3- and 1,4-bis(β-epoxypropylthiomethyl)cyclohexane, bis[4-(β-epoxypropylthio)cyclohexyl]methane, 2,2-bis[4-(β-epoxypropylthio)cyclohexyl]propane, bis [4-(β-epoxypropylthio)cyclohexyl] sulfide, 2,5-bis(β-epoxypropylthiomethyl)-1,4-dithiane, 2,5-bis(β-epoxypropylthioethylthiomethyl)-1,4-dithiane, 1,3- and 1,4-bis(β-epoxypropylthio)benzene, 1,3- and 1,9-bis(β-epoxypropylthiomethyl)benzene, bis[4-(β-epoxypropylthio)phenyl]methane, 2,2-bis[4-(β-epoxypropylthio)phenyl]propane, bis[4-(β-epoxypropylthio)phenyl] sulfide, bis [4-(β-epoxypropylthio)phenyl] sulfone and 4,4'-bis(β-epoxypropylthio)biphenyl and sulfur-containing isocyanates such as thiodiethyldiisocyanate, thiodipropyldiisocyanate, thiodihexyldiisocyanate, bis[(4-isocyanatemethyl)phenyl] sulfide, 2,5-diisocyanate-1,4-dithiane, 2,5-diisocyanatemethyl-1,4-dithiane, 2,5-diisocyanatemethylthiophene, dithiodiethyldiisocyanate and dithiodipropyldiisocyanate,
(3) polysulfides obtained by substituting a part or all of the sulfide bonds in the compounds of (1) and the compounds of (2) each having a sulfide bond with polysulfide bonds such as disulfide and trisulfide,
(4) thioketones such as dimethyl thioketone, diethyl thioketone, dibutyl thioketone, dicyclohexyl thioketone, diphenyl thioketone, methyl ethyl thioketone, methyl butyl thioketone, methyl phenyl thioketone, vinyl phenyl thioketone, allyl phenyl thioketone, propargyl phenyl thioketone, ditrifluoromethyl thioketone, cyclopropanethione, cyclobutanethione, cyclopnetanethione, cyclohexanethione, cyclopropanethione, bismuthiol 2, ε-thiocaprolactam, thiourea, 2-imidazolidinethione, 1,1'-thiocarbonyldiimidazole, diethyl trithiocarbonate and diphenyl trithiocarbonate,
(5) thioisocyanates such as methyl thioisocyanate, ethyl thioisocyanate, propyl thioisocyanate, iso-propyl thioisocyanate, n-butyl thioisocyanate, sec-butyl thioisocyanate, tert-butyl thioisocyanate, pentyl thioisocyanate, hexyl thioisocyanate, octyl thioisocyanate, dodecyl thioisocyanate, cyclohexyl thioisocyanate, phenyl thioisocyanate, toluyl thioisocyanate, ethylene dithioisocyanate, tetramethylene dithioisocyanate, hexamethylene dithioisocyanate, cyclohexane dithioisocyanate, 1,3-bis(thioisocyanatemethyl)cyclohexane, 1,4- isophoronedithioisocyanate, 2,6-bis(thioisocyanatemethyl)decahydronaphthalene, lysine trithioisocyanate, 1,3-phenylene dithioisocyanate, 1,4-phenylene dithioisocyanate, 4,4'-dithioisocyanatebiphenyl, 4,4'-dithioisocyanate-3,3'-dimethylbiphenyl, 1,1'-methylenebis(4-thioisocyariatebenzene), 1,1'-methylenebis(3-methyl-4-thioisocyanatebenzene), m-xylylene dithioisocyanate, p-xylylene dithioisocyanate, 1,3-bis(2-thioisocyanate-2-propyl)benzene and 2,6-bis(thioisocyanatemethyl)naphthalene, dimmers and cyclized trimers obtained by buret type reaction of these polythioisocyanates and polythioisocyanates obtained by adding alcohols or thiols to these polythioisocyanates,
(6) thiol sulfinates such as dimethylthiol sulfinate, diethylthiol sulfinate, dibutylthiol sulfinate, dicyclohexylthiol sulfinate, diphenylthiol sulfinate, methylethylthiol sulfinate, methylbutylthiol sulfinate, methylphenylthiol sulfinate, vinylphenylthiol sulfinate, allylphenylthiol sulfinate, 1,2-dithiolane-1-oxide and 1,2-dithiane-1-oxide,
(7) thiol sulfonates such as dimethylthiol sulfonate, diethylthiol sulfonate, dibutylthiol sulfonate, dicyclohexylthiol sulfonate, diphenylthiol sulfonate, methylethylthiol sulfonate, methylbutylthiol sulfonate, methylphenylthiol sulfonate, vinylphenylthiol sulfonate, allylphenylthiol sulfonate, 1,2-dithiolane-1,1-dioxide and 1,2-dithiane-1,1-dioxide,
(8) sulfoxides such as dimethyl sulfoxide, diethyl sulfoxide, dibutyl sulfoxide, dicyclohexyl sulfoxide, diphenyl sulfoxide, dibenzyl sulfoxide, di-p-toluyl sulfoxide, bis(4-chlorophenyl) sulfoxide, methyl ethyl sulfoxide, methyl methylthiomethyl sulfoxide, methyl butyl sulfoxide, methyl phenyl sulfoxide, vinyl phenyl sulfoxide, allyl phenyl sulfoxide, propargyl phenyl sulfoxide, thiirane oxide, thietane oxide, thiolane oxide, thiane oxide, 1,4-dithiane oxide and 1,4-dithiane-1,4-dioxide,
(9) sulfilimines such as dimethylsulfilimine, dibutylsulfilimine, diphenylsulfilimine and ditoluylsulfonium butylide, and derivatives such as N-alkyl-substituted products and betaine thereof,
(10) sulfonium salts such as trimethylsulfonium bromide, trimethylsulfonium iodide, trimethylsulfonium hydroxide, triethylsulfonium bromide, tri-n-butylsulfonium chloride, tri-n-butylsulfonium bromide, tri-n-butylsulfonium iodide, tri-n-butylsulfonium tetrafluoroborate, tri-n-hexylsulfonium bromide, tri-n-octylsulfonium bromide, triphenylsulfonium chloride, triphenylsulfonium bromide, triphenylsulfonium iodide, triphenylsulfonium tetrafluoroborate, (2-carboxyethyl)dimethylsulfonium chloride and (2-carboxyethyl)dimethylsulfonium bromide,
(11) sulfonium ylides such as dimethylsulfonium methylide, dimethyloxosulfonium methylide, diphenylsulfonium methylide and diphenylsulfonium butylide,
(12) sulfones such as dimethyl sulfone, diethyl sulfone, dibutyl sulfone, dicyclohexyyl sulfone, diphenyl sulfone, methyl ethyl sulfone, methyl butyl sulfone, methyl phenyl sulfone, vinyl phenyl sulfone, allyl phenyl sulfone, propargyl phenyl sulfone, episulfone, trimethylene sulfone, sulfolane, sulfolene, tetramethylene sulfone, 1,4-dithiane-1,1-dioxide and 1,4-dithiane tetraoxide,
(13) sulfoxyimines such as dimethylsulfoxyimine, diethylsulfoxyimine, dibutylsulfoxyimine, dicyclohexyylsulfoxyimine, diphenylsulfoxyimine, methylethylsulfoxyimine, methylbutylsulfoxyimine, methylphenylsulfoxyimine, vinylphenylsulfoxyimine, allylphenylsulfoxyimine and propargylphenylsulfoxyimine, and derivatives such as N-alkyl-substituted produc.ts and betaine thereof,
(14) sulfinic acids such as methanesulfinic acid, ethanesulfinic acid, butanesulfinic acid, dodecanesulfinic acid, hydroxymethanesulfinic acid, benzenesulfinic acid, o-toluenesulfinic acid, m-toluenesulfinic acid, p-toluenesulfinic acid, ethylbenzenesulfinic acid, butylbenzenesulfinic acid, dodecylbenzenesulfinic acid, vinylbenzenesulfinic acid, p-phenolsulfinic acid, o-cresolsulfinic acid, p-chlorobenzenesulfinic acid, p-acetamidebenzenesulfinic acid, biphenylsulfinic acid, α-naphtnalenesulfinic acid and β-naphtnalenesulfinic acid and derivatives such as acid anhydrides, acid halides, esters, amides, hydrazides, hydrazones, azides, alkaline metal salts and alkaline earth metal salts thereof, and
(15) sulfonic acids such as methanesulfonic acid, ethanesulfonic acid, butanesulfonic acid, dodecanesulfonic acid, hydroxymethanesulfonic acid, benzenesulfonic acid, o-toluenesulfonic acid, m-toluenesulfonic acid, p-toluenesulfonic acid, ethylbenzenesulfonic acid, butylbenzenesulfonic acid, dodecylbenzenesulfonic acid, vinylbenzenesulfonic acid, p-phenolsulfonic acid, o-cresolsulfonic acid, p-chlorobenzenesulfonic acid, p-acetamidebenzenesulfonic acid, metanilic acid, sulfanilic acid, 4B-acid, diaminostilbenesulfonic acid, biphenylsulfonic acid, α-naphtnalenesulfonic acid, β-naphtnalenesulfonic acid, peri acid, Laurent's acid and phenylic J acid and derivatives such as acid anhydrides, acid halides, esters, amides, hydrazides, hydrazones, azides, alkaline metal salts and alkaline earth metal salts thereof.

The composition for an optical material which is the composition of the present invention, comprising the compound having at least one structure represented by Formula (1) in a molecule, the perfume component and, if necessary, sulfur and the compound having a sulfur atom and/or a selenium atom is heated and cured in the presence or absence of a curing catalyst, whereby the resin can be produced. In the preferred process, the curing catalyst is used.

Capable of being given as the curing catalyst are (1) amines, (2) complexes with amines, (3) phosphines, (4) quaternary ammonium salts, (5) quaternary phosphonium salts, (6) tertiary sulfonium salts, (7) secondary iodonium salts, (8) mineral acids and half esters thereof, (9) Lewis acids, (10) organic acids and half esters thereof, (11) silicic acid and tetrafluoroboric acid, (12) peroxides, (13) azo base compounds, (14) condensation products of aldehydes and amine base compounds, (15) guanidines, (16) thioureas, (17) thiazoles, (18) sulfenamides, (19) thiurams, (20) dithiocarbamic acid salts, (21) xanthic acids and (22) acid phosphoric acid esters. The specific examples thereof shall be given below.
(1) Amines:
   Primary amines such as ethylamine, n-propylamine, sec-propylamine, n-butylamine, sec-butylamine, i-butylamine, tert-butylamine, pentylamine, hexylamine, heptylamine, octylamine, decylamine laurylamine, myristylamine, 1,2-dimethylhexylamine, 3-pentylamine, 2-ethylhexylamine, allylamine, aminoethanol, 1-aminopropanol, 2-aminopropanol, aminobutanol, aminopentanol, aminohexanol, 3-ethoxypropylamine, 3-propoxypropylamine, 3-isopropoxypropylamine, 3-butoxypropylamine, 3-isobutoxypropylamine, 3-(ethylhexyloxy)propylamine, aminocyclopentane, aminocyclohexane, aminonorbornene, aminomethylcyclohexane, aminobenzene, benzylamine, phenethylamine, α-phenylethylamine, naphthylamine and furfurylamine; primary polyamines such as ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, 1,7-diaminoheptane, 1,8-diaminooctane, dimethylaminopropylamine, diethylaminopropylamine, bis(3-aminopropyl) ether, 1,2-bis-((3-aminopropoxy)ethane, 1,3-bis-((3-aminopropoxy)-2,2'-dimethylpropane, aminoethylethanolamine, 1,2-, 1,3- or 1,4-bisaminocyclohexane, 1,3- or 1,4-bisaminomethylcyclohexane, 1,3- or 1,4-bisaminoethylcyclohexane, 1,3- or 1,4-bisaminopropylcyclohexane, hydrogenated 4,4'-diaminodiphenylmethane, 2- or 4-aminopiperidine, 2- or 4-aminomethylpiperidine, 2- or 4-aminoethylpiperidine, N-aminoethylpiperidine, N-aminopropylpiperidine, N-aminoethylpimorpholine, N-aminopropylpimorpholine, isophoronediamine, menthandiamine, 1,4-bisaminopropylpiperazine, o-, m- or p-phenylenediamine, 2,4- or 2,6-tolylenediamine, 2,4-toluenediamine, m-aminobenzylamine, 4-chloro-o-phenylenediamine, tetrachloro-p-xylylenediamine, 4-methoxy-6-methyl-m-phenylenediamine, m- or p-xylylenediamine, 1,5- or 2,6-naphthalenediamine, 4,4'-bis(o-toluidine), dianisidine, 4,4'-diaminodiphenylmethane, 2,2-(4,4'-diaminodiphenyl)propane, 4,4'-diaminodiphenyl ether, 4,9'-thiodianiline, 4,4'-diaminodiphenyl sulfone, 4,4'-diaminoditolyl sulfone, methylenebis(o-chloroaniline), 3,9-bis(3-aminopropyl)-2,4,8,10-tetraoxaspiro[5,5]undecane, diethylenetriamine, iminobispropylamine, methyliminobispropylamine, bis(hexamethylene)triamine, triethylenetetraamine, tetraethylenepentaamine, pentaethylenehexaamine, N-aminoethylpiperazine, N-aminopropylpiperazine, 1,4-bis(aminoethylpiperazine), 1,4-bis(aminopropylpiperazine), 2,6-diaminopyridine and bis(3,4-diaminophenyl) sulfone; secondary amines such as diethylamine, dipropylamine, di-n-butylamine, di-sec-butylamine, diisobutylamine, di-n-pentylamine, di-3-pentylamine, dihexylamine, dioctylamine, di(2-ethylhexyl)amine, methylhexylamine, diallylamine, pyrrolidine, piperidine, 2-, 3- or 4-picoline, 2,4-, 2,6-or 3,5-lupetidine, diphenylamine, N-methylaniline, N-ethylaniline, dibenzylamine, methylbenzylamine, dinaphthylamine, pyrrole, indoline, indole and morpholine; secondary polyamines such as N,N'-dimethylethylenediamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3-diaminopropane, N,N'-diethyl-1,2-diaminobutane, N,N'-diethyl-1,3-diaminobutane, N,N'-diethyl-1,4-diaminobutane, N,N'-diethyl-1,6-diaminohexane, piperazine, 2-methylpiperazine, 2,5- or 2,6-dimethylpiperazine, homopiperazine, 1,1-di-(4-piperidyl)methane, 1,2-di-(4-piperidyl)ethane, 1,3-di-(4-piperidyl)propane, 1,4-di-(4-piperidyl)butane and tetramethylguanidine; tertiary amines such as trimethylamine, triethylamine, tri-n-propylamine, tri-isopropylamine, tri-1,2-dimethypropylamine, tri-3-methoxypropylamine, tri-n-butylamine, tri-iso-butylamine, tri-sec-butylamine, tri-pentylamine, tri-3-pentylamine, tri-n-hexylamine, tri-n-octylamine, tri-2-ethylhexylamine, tri-dodecylamine, tri-laurylamine, dicyclohexylethylamine, cyclohexyldiethylamine, tri-cyclohexylamine, N,N-dimethylhexylamine, N-methyldihexylamine, N,N-dimethylcyclohexylamine, N-methyldicyclohexylamine, N,N-diethylethanolamine, N,N-dimethylethanolamine, N-ethyldiethanolamine, triethanolamine, tribenzylamine, N,N-dimethylbenzylamine, diethylbenzylamine, triphenzylamine, N,N-dimethylamino-p-cresol, N,N-dimethylaminomethylphenol, 2-(N,N-dimethylaminomethyl)phenol, N,N-dimethylaniline, N,N-diethylaniline, pyridine, quinoline, N-methylmorpholine, N-methylpiperidine and 2(2-dimethylaminoethoxy)-4-methyl-1,3,2-dioxabornane; tertiary polyamines such as tetramethylethylenediamine, pyrazine, N,N-dimethylpiperazine, N,N-bis(2-hydroxy)propyl)piperazine, hexamethylethylenetetraamine, N,N,N',N'-tetramethyl-1,3-butaneamine, 2-dimethylamino-2-hydroxypropane, diethylaminoethanol, N,N,N-tris(3-dimethylaminopropyl)amine, 2,4,5-tris(N,N-dimethylaminomethyl)phenol and heptamethylisobiguanide; various imidazoles such as imidazole, N-methylimidazole, 2-methylimidazole, 4-methylimidazole, N-ethylimidazole, 2-ethylimidazole, 4-ethylimidazole, N-butylimidazole, 2-butylimidazole, N-undecylimidazole, 2-undecylimidazole, N-phenylimidazole, 2-phenylimidazole, N-benzylimidazole, 2-benzylimidazole, 1-benzyl-2-methylimidazole, N-(2'-cyanoethyl)-2-methylimidazole, N-(2'-cyanoethyl)-2-undecylimidazole, N-(2'-cyanoethyl)-2-phenylimidazole, 3,3-bis-(2-ethyl-4-methylimidazolyl)methane, an addition product of alkylimidazole and isocyanuric acid and a condensation product of alkylimidazole and formaldehyde; and amidines such as 1,8-diazabicyclo(5,4,0)undecene-7, 1,5-diazabicyclo(4,3,0)nonene-5 and 6-dibutylamino-1,8-diazabicyclo(5,9,0)undecene-7.
(2) Complexes of the amines of (1) with borane and boron trifluoride.
(3) Phosphines:
   Trimethylphosphine, triethylphosphine, tri-isopropylphosphine, tri-n-butylphosphine, tri-n-hexylphosphine, tri-n-octylphosphine, tricyclohexylphosphine, triphenylphosphine, tribenzylphosphine, tris(2-methylphenyl)phosphine, tris(3-methylphenyl)phosphine, tris(4-methylphenyl)phosphine, tris(diethylamino)phosphine, tris(4-methylphenyl)phosphine, dimethylphenylphosphine, diethylphenylphosphine, dicyclohexylphenylphosphine, ethyldiphenylphosphine, diphenylcyclohexylphosphine and chlorodiphenylphosphine.
(4) Quaternary ammonium salts:
   Tetramethylammonium chloride, tetramethylammonium bromide, tetramethylammonium acetate, tetraethylammonium chloride, tetraethylammonium bromide, tetraethylammonium acetate, tetra-n-butylammonium fluoride, tetra-n-butylammonium chloride, tetra-n-butylammonium bromide, tetra-n-butylammonium iodide, tetra-n-butylammonium acetate, tetra-n-butylammonium borohydride, tetra-n-butylammonium hexafluorophosphite, tetra-n-butylammonium hydrogensulfite, tetra-n-butylammonium tetrafluoroborate, tetra-n-butylammonium tetraphenylborate, tetra-n-butylammonium paratoluenesulfonate, tetra-n-hexylammonium chloride, tetra-n-hexylammonium bromide, tetra-n-hexylammonium acetate, tetra-n-octxylammonium chloride, tetra-n-octxylammonium bromide, tetra-n-octxylammonium acetate, trimethyl-n-octylammonium chloride, trimethyldecylammonium chloride, trimethylacetylammonium chloride, trimethyllaurylammonium chloride, trimethylbenzylammonium chloride, trimethylbenzylammonium bromide, triethyl-n-octylammonium chloride, triethylbenzylammonium chloride, triethylbenzylammonium bromide, tri-n-butyl-n-octylammonium chloride, tri-n-butylbenzylammonium fluoride, tri-n-butylbenzylammonium chloride, tri-n-butylbenzylammonium bromide, tri-n-butylbenzylammonium iodide, n-butyldimethylbenzylammonium chloride, n-octyldimethylbenzylammonium chloride, decyldimethylbenzylammonium chloride, dodecyldimethylbenzylammonium chloride, cetyldimethylbenzylammonium chloride, lauryldimethylbenzylammonium chloride, methyltriphenylammonium chloride, methyltribenzylammonium chloride, methyltriphenylammonium bromide, methyltribenzylammonium bromide, ethyltriphenylammonium chloride, ethyltribenzylammonium chloride, ethyltriphenylammonium bromide, ethyltribenzylammonium bromide, n-butyltriphenylammonium chloride, n-butyltribenzylammonium chloride, n-butyltriphenylammonium bromide, n-butyltribenzylammonium bromide, 1-methylpyridinium chloride, 1-methylpyridinium bromide, 1-ethylpyridinium chloride, 1-ethylpyridinium bromide, 1-n-butylpyridinium chloride, 1-n-butylpyridinium bromide, 1-n-hexylpyridinium chloride, 1-n-hexylpyridinium bromide, 1-n-octylpyridinium bromide, 1-n-dodecylpyridinium chloride, 1-n-dodecylpyridinium bromide, 1-n-cetylpyridinium chloride, 1-n-cetylpyridinium bromide, 1-phenylpyridinium chloride, 1-phenylpyridinium bromide, 1-benzylpydinium chloride, 1-benzylpyridinium bromide, 1-methylpicolinium chloride, 1-methylpicolinium bromide, 1-ethylpicolinium chloride, 1-ethylpicolinium bromide, 1-n-butylpicolinium chloride, 1-n-butylpicolinium bromide, 1-n-hexylpicolinium chloride, 1-n-hexylpicolinium bromide, 1-n-octylpicolinium chloride, 1-n-octylpicolinium bromide, 1-n-dodecylpicolinium chloride, 1-n-dodecylpicolinium bromide, 1-n-cetylpicolinium chloride, 1-n-cetylpicolinium bromide, 1-phenylpicolinium chloride, 1-phenylpicolinium bromide, 1-benzylpicolinium chloride and 1-benzylpicolinium bromide.
(5) Quaternary phosphonium salts:
   Tetramethylphosphonium chloride, tetramethylphosphonium bromide, tetraethylphosphonium chloride, tetraethylphosphonium bromide, tetra-n-butylphosphonium chloride, tetra-n-butylphosphonium bromide, tetra-n-butylphosphonium iodide, tetra-n-hexylphosphonium bromide, tetra-n-octylphosphonium bromide, methyltriphenylphosphonium bromide, methyltriphenylphosphonium iodide, ethyltriphenylphosphonium bromide, ethyltriphenylphosphonium iodide, n-butyltriphenylphosphonium bromide, n-butyltriphenylphosphonium iodide, n-hexyltriphenylphosphonium bromide, n-octyltriphenylphosphonium bromide, terakishydroxymethylphosphonium chloride, terakishydroxymethylphosphonium bromide, terakishydroxyethylphosphonium chloride and terakishydroxybutylphosphonium chloride.
(6) Tertiary sulfonium salts:
   Trimethylsulfonium bromide, triethylsulfonium bromide, tri-n-butylsulfonium chloride, tri-n-butylsulfonium bromide, tri-n-butylsulfonium iodide, tri-n-butylsulfonium tetrafluoroborate, tri-n-hexylsulfonium chloride, tri-n-hexylsulfonium bromide, triphenylsulfonium bromide and triphenylsulfonium iodide.
(7) Secondary iodonium salts:
   Diphenyliodonium chloride, diphenyliodonium bromide and diphenyliodonium iodide.
(8) Mineral acids and half esters thereof.
(9) Lewis acids represented by boron trifluoride and etherate of boron trifluoride.
(10) Organic acids and half esters thereof
(11) Silicic acid and tetrafluoroboric acids
(12) Peroxides:
   Cumyl peroxyneodecanoate, diisopropyl peroxydicarbonate, diallyl peroxydicarbonate, di-n-propyl peroxydicarbonate, dimyristyl peroxydicarbonate, cumyl peroxyneohexanoate, tert-hexyl peroxyneodecanoate, tert-butyl peroxyneodecanoate, tert-hexyl peroxyneohexanoate, tert-butyl peroxyneohexanoate, 2,4-dicyclobenzoyl peroxide, benzoyl peroxide, dicumyl peroxide and di-tert-butyl peroxide.
(13) Azo base compounds:
   2,2'-Azobis(4-methoxy-2,4-dimethylvaleronitrile), 2,2'-azobis(2-cyclopropylpropionitrile), 2,2'-azobis(2,4-dimethylvaleronitrile), 2,2'-azobisisobutyronitrile, 2,2'-azobis(2-methylbutyronitrile), 1,1'-azobis(cyclohexane-1-carbonitrile), 1-[(1-cyano-1-methylethyl)azo]formamide, 2-phenylazo-4-methoxy-2,4-dimethylvaleronitrile, 2,2'-azobis(2-methylpropane) and 2,2'-azobis(2,4,4-trtimethylpentane).
(14) Condensation products of aldehydes and amine base compounds:
   Condensation products of aldehydes and amine base compounds such as a reaction product of acetaldehyde and ammonia, a condensation product of formaldehyde and paratoluidine, a reaction product of formaldehyde and aniline, a reaction product of acetaldehyde and aniline, a reaction product of formaldehyde, acetaldehyde and aniline, a reaction product of acetaldehyde, butylaldehyde and aniline, a condensation product of butylaldehyde and monobutylamine, a reaction product of butylaldehyde and butylideneaniline, a reaction product of heptaldehyde and aniline, a reaction product of tricrotonilidene-tetramine, a condensation product of α-ethyl-β-propylacrolein and aniline and a condensation product of formaldehyde and alkylimidazole.
(15) Guanidines:
   Diphenylguanidine, phenyltolylguanidine, phenylxylylguanidine, tolylxylylguanidine, diortholtolylguanidine, ortholtolylguanide, diphenylguanidine phthalate, tetramethylguanidine and diortholtolylguanidine salt of dicatechol borate.
(16) Thioureas:
   Thiocarboanilide, diortholtolylthiourea, ethylenethiourea, diethylthiourea, dibutylthiourea, dilaurylthiourea, trimethylthiourea, dimethyethylthiourea and tetramethylthiourea.
(17) Thiazoles:
   2-Mercaptobenzothiazole, dibenzothiazyl disulfide, a cyclohexylamine salt of 2-mercaptobenzothiazole, 2-(2-,4-dinitrophenylthio)benzothiazole, 2-(morpholinodithio)benzothiazole, 2-(2-,6-dimethyl-4-morpholinothio)benzothiazole, N,N-diethylthiocarbamoyl-2-benzothiazolyl sulfide, 1,3-bis(2-benzothiazolylmercaptomethyl)urea, benzothiadiazyl thiobenzoate, 2-mercaptothiazoline, a sodium salt of 2-mercaptobenzothiazole, a zinc salt of 2-mercaptobenzothiazole, a complex salt of dibenzothiazyl disulfide and zinc chloride.
(18) Sulfenamides:
   N-cyclohexyl-2-benzothiazylsulfenamide, N-tert-butyl-2-benzothiazylsulfenamide, N-tert-octyl-2-benzothiazylsulfenamide, N-oxydiethylene-2-benzothiazylsulfenamide, N,N-diethyl-2-benzothiazylsulfenamide, N,N-diisopropyl-2-benzothiazylsulfenamide and N,N-dicyclohexyl-2-benzothiazylsulfenamide.
(19) Thiurams:
   Tetramethylthiuram monosulfide, tetraethylthiuram monosulfide, tetrabutylthiuram monosulfide, dipentamethylenethiuram monosulfide, tetramethylthiuram disulfide, tetraethylthiuram disulfide, tetrabutylthiuram disulfide, N,N'-dimethyl- N,N'-diphenylthiuram disulfide, N,N'-diethyl- N,N'-diphenylthiuram disulfide, dipentamethylenethiuram disulfide, dipentamethylenethiuram tetrasulfide and cyclic thiuram.
(20) Dithiocarbamic acid salts:
   Sodium dimethyldithiocarbamate, sodium diethyldithiocarbamate, sodium dibutyldithiocarbamate, sodium pentamethylenedithiocarbamate, sodium cyclohexylethyldithiocarbamate, potassium dimethyldithiocarbamate, lead dimethyldithiocarbamate, zinc dimethyldithiocarbamate, zinc diethyldithiocarbamate, zinc dibutyldithiocarbamate, zinc dibenzyldithiocarbamate, zinc pentamethylenedithiocarbamate, zinc dimethylpentamethylenedithiocarbamate, zinc ethylphenyldithiocarbamate, bismuth dimethyldithiocarbamate, cadmium diethyldithiocarbamate, cadmium pentamethylenedithiocarbamate, selenium dimethyldithiocarbamate, selenium diethyldithiocarbamate, tellurium dimethyldithiocarbamate, tellurium diethyldithiocarbamate, iron dimethyldithiocarbamate, copper dimethyldithiocarbamate, diethylammonium diethyldithiocarbamate, N,N-cyclohexylamminium dibutyldithiocarbamate, piperidine pentamethylenedithiocarbamate, cyclohexylethylamminium sodium cyclohexylethyldithiocarbamate, pipecoline methylpentamethylenedithiocarbamate and a complex compound of zinc pentamethylenedithiocarbamate and piperidine.
(21) Xanthic acids
   Sodium isopropylxanthate, zinc isopropylxanthate, zinc butylxanthate and dibutylxanthic disulfide.
(22) Acid phosphoric acid esters:
   Mono- and/or dimethyl phosphate, mono- and/or diethyl phosphate, mono- and/or dipropyl phosphate, mono- and/or dibutyl phosphate, mono- and/or dihexyl phosphate, mono-and/or dioctyl phosphate, mono- and/or didecyl phosphate, mono- and/or didodecyl phosphate, mono- and/or diphenyl phosphate, mono- and/or dibenzyl phosphate and mono- and/or decanol phosphate.
   The examples of the polymerizing catalyst used in polymerizing and curing the composition for an optical material according to the present invention were given above, but it shall not be restricted to these listed compounds as long as they reveal the effect of polymerizing and curing.
   Among them, (1) the primary monoamines, the secondary monoamines, the tertiary monoamines, the tertiary polyamines, the imidazoles and the amidines, (3) the phosphines, (4) the quaternary ammonium salts, (5) the quaternary phsphonium salts, (6) the tertiary sulfonium salts and (7) the secondary iodonium salts are preferred because of less coloring of the cured products. They may be used alone or in a mixture of two or more kinds thereof. An addition amount of the curing catalyst is varied according to the components, the mixing ratio and the curing method of the composition, and therefore it can not definitely be determined. Usually, it is used in an amount of 0.001 to 5.0 parts by weight, preferably 0.005 to 3.0 parts by weight, more preferably 0.01 to 1.0 part by weight and most preferably 0.01 to 0.5 part by weight based on 100 parts by weight of the whole amount of the composition. If an amount of the curing catalyst is larger than 5.0 parts by weight, the cured product is reduced in a refractive index and a heat resistance and is colored. On the other hand, if it is less 0.001 part by weight, curing does not sufficiently go on, and the heat resistance is unsatisfactory.
   In order to enhance an impact resistance of the material obtained by polymerizing and curing the composition of the present invention, a compound having at least one isocyanate group and/or isothiocyanate group in a molecule can be used in combination as an impact resistance-improving component. The preferred specific examples thereof include monoisocyanates such as methylisocyanate, ethylisocyanate, propylisocyanate, iso-propylisocyanate, n-butylisocyanate, sec-butylisocyanate, tert-butylisocyanate, pentylisocyanate, hexylisocyanate, octylisocyanate, dodecylisocyanate, cyclohexylisocyanate, phenylisocyanate and toluylisocyanate and polyisocyanates such as diethylenediisocyanate, tetramethylenediisocyanate, hexamethylenediisocyanate, 2,2-dimethylpentanediisocyanate, 2,2,4-trimethylhexanediisocyanate, butenediisocyanate, 1,3-butadiene-1,4-diisocyanate, trimethylhexamethylenediisocyanate, cyclohexanedisocyanate, methylcyclohexanedisocyanate, 1,3-bis(isocyanatemethyl)cyclohexane, 1,4-bis(isocyanatemethyl)cyclohexane, 1,6,11-undecanetrisocyanate, 3,8-bis(isocyanatemethyl)tricyclodecane, 3,9-bis(isocyanatemethyl)tricyclodecane, 4,8-bis(isocyanatemethyl)tricyclodecane, 4,9-bis(isocyanatemethyl)tricyclodecane, 1,3,6-hexamethylenetriisocyanate, 1,8-disocyanate-4-isocyanatetrioctane, bis(isocyanateethyl) carbonate, bis(isocyanateethyl) ether, bis(isocyanatemethylphenyl) ether, bis(isocyanateethyl) phthalate, 2,6-di(isocyanatemethyl)furan, isophoronediisocyanate, 2,6-bis(isocyanatemethyl)decahydronaphthalene, 2,4-tolylenediisocyanate, 2,6-tolylenediisocyanate, o-toluidinediisocyanate, 4,4'-diphenylmetanediisocyanate, 4,4'-methylenebis(2-methylcyclohexylisocyanate), 4,4'-methylenebis(2-methylphenylisocyanate), bis(isocyanatephenyl)ethylene, diphenyl ether diisocyanate, 3-(2'-isocyanatecyclohexyl) propylisocyanate, tris(phenylisocyanate) thiophosphate, isopropylidenebis(cyclohexylisocyanate), 2,2'-bis(4-isocyanatephenyl)propane, triphenylmetanetriisocyanate, bis(diisocyanatetolyl)phenylmethane, 4,4',4"-triisocyanate-2,5-dimethoxyphenylamine, 3,3'-dimethoxybenzidine-4,4'-diisocyanate, 1,2-phenylenediisocyanate, 1,3-phenylenediisocyanate, 1,4-phenylenediisocyanate, 4,9'-diisocyanatebiphenyl, 4,4'-diisocyanate-3,3'-dimethylbiphenyl, dicyclohexylmethane-4,4'-diisocyanate, 1,1'-methylenebis(4-isocyanatebenzene), 1,1'-methylenebis(3-methyl-4-isocyanatebenzene), m-xylylenediisocyanate, p-xylylenediisocyanate, bis(isocyanateethyl)benzene, bis(isocyanatepropyl)benzene, bis(isocyanatebutyl)benzene, 1,3-bis(1-isocyanate-1-methylethyl)benzene, 1,4-bis(1-isocyanate-1-methylethyl)benzene, 1,3-bis(2-isocyanate-2-propyl)benzene, ethylphenylenediisocyanate, isopropylphenylenediisocyanate, dimethylphenylenediisocyanate, diethylphenylenediisocyanate, diisopropylphenylenediisocyanate, trimethylbenzenetriisocyanate, benzenetriisocyanate, biphenyldiisocyanate, 2,6-bis(isocyanatemethyl)naphthalene, 1,5-naphthalenediisocyanate, bis(isocyanatemethyl)tetrahydrodicyclopendadiene, bis(isocyanatemethyl)dicyclopendadiene, diisocyanatetetrahydrothiophene, bis(isocyanatemethyl)tetetrahydrothiophene, bis(isocyanatemethyl)thiophene, 2,5-diisocyanatemethylnorbornene, 2,6-diisocyanatemethylnorbornene, bis(isocyanatemethyl)adamantane, 3,4-diisocyanateselenophane, 2,6-diisocyanate-9-selenabicyclononane, bis(isocyanatemethyl)selenophane, 3,4-diisocyanate-2,5-diselenolane, dimmer acid diisocyanate, 1,3,5-tri(1-isocyanatehexyl) isocyanurate, 2,5-diisocyanate-1,4-dithiane, 2,5-diisocyanatemethyl-1,4-dithiane, 2,5-bis(4-isocyanatemethyl-2-thiabutyl)-1,4-dithiane, 2,5-bis(3-isocyanatemethyl-4-isocyanate-2-thiabutyl)-1,4-dithiane, 2,5-bis(3-isocyanatemethyl-2-thiapropyl)-1,4-dithiane, 4,5-diisocyanate-1,3-dithiolane, 4,5-bis(isocyanatemethyl)-1,3-dithiolane, 4,5-diisocyanatemethyl-2-methyl-1,3-dithiolane, 1,3,5-triisocyanatecyclohexane, 1,3,5-tris(isocyanatemethyl)cyclohexane, bis(isocyanatemethyl) sulfide, bis(isocyanateethyl) sulfide, bis(isocyanatepropyl) sulfide, bis(isocyanatehexyl) sulfide, bis(isocyanatemethyl) disulfide, bis(isocyanateethyl) disulfide, bis(isocyanatepropyl) disulfide, bis(isocyanatehexyl) disulfide, bis(isocyanatemethyl) sulfone, bis(isocyanatemethylthio)methane, bis(isocyanateethylthio)methane, 1,5-diisocyanate-2-isocyanatemethyl-3-thiapentane, 1,2,3-tris(isocyanateethylthio)propane, 1,2,3-tris(isocyanatemethylthio)propane, 1,1,6,6-tetrakis(isocyanatemethyl)-2,5-dithiahexane, 1,1,5,5-tetrakis(isocyanatemethyl)-2,4-dithiaoentane, 1,2-bis(isocyanatemethylthio)ethane, 1,5-diisocyanate-3-isocyanatemethyl-2,4-dithiapentane, 1,5-diisocyanate-3-isocyanatemethyl-2,4-dithiapentane, 3,5-dithia-1,2,6,7-heptanetetraisocyanate, 2,6-diisocyanatemethyl-3,5-dithia-1,7-heptanetediisocyanate, 4-isocyanateethylthio-2,6-dithia-1,8-octanetediisocyanate, 2-isocyanatephenyl-4-isocyanatephenyl sulfide, bis(4-isocyanatephenyl) sulfide, bis(4-isocyanatemethylphenyl) sulfide, bis(4-isocyanatephenyl) disulfide, bis(2-methyl-5-isocyanatephenyl) disulfide, bis(3-methyl-5-isocyanatephenyl) disulfide, bis(3-methyl-6-isocyanatephenyl) disulfide, bis(4-methyl-5-isocyanatephenyl) disulfide, bis(3-methoxy-4-isocyanatephenyl) disulfide and bis(4-methoxy-3-isocyanatephenyl) disulfide, dimmers obtained by buret type reaction of these polyisocyanates, cyclized trimers of these polyisocyanates and addition products of these polyisocyanates and alcohols or thiols. Further, capable of being given are compounds obtained by substituting all or part of the isocyanate groups of the foregoing compounds having at least one isocyanate group in a molecule with an isothiocyanate group.
   The compound having at least one isocyanate group and/or isothiocyanate group in a molecule which is used in the present invention includes all compounds satisfying these conditions, and it shall not be restricted to these listed compounds. These compounds having at least one isocyanate group and/or isothiocyanate group in a molecule may be used alone or in a mixture of two or more kinds thereof.
   In order to enhance an acid resistance of the material obtained by polymerizing and curing the composition of the present invention, a compound having at least one mercapto group in a molecule can be used in combination as an acid resistance-improving component. The preferred specific examples thereof include (1) mercaptans, (2) thiophenols and (3) mercaptans and thiophenols having an unsaturated group such as vinyl, aromatic vinyl, methacryl, acryl and allyl.
   Capable of being given as the mercaptans (1) are monomercaptans such as methylmercaptan, ethylmercaptan, n-propylmercaptan, n-butylmercaptan, allylmercaptan, n-hexylmercaptan, n-octylmercaptan, n-decylmercaptan, n-dodecylmercaptan, n-tetradecylmercaptan, n-hexadecylmercaptan, n-octadecylmercaptan, cyclohexylmercaptan, isopropylmercaptan, tert-butylmercaptan, tert-nonylmercaptan, tert-dodecylmercaptan, benzylmercaptan, 4-chlorobenzylmercaptan, methylthio glycolate, ethylthio glycolate, n-butylthio glycolate, n-octylthio glycolate, methyl (3-mercaptopropionate), ethyl (3-mercaptopropionate), 3-methoxybutyl (3-mercaptopropionate), n-butyl (3-mercaptopropionate), 2-ethylhexyl (3-mercaptopropionate), n-octyl (3-mercaptopropionate), 2-mercaptoethanol, 3-mercaptopropanol, 2-hydroxypropylmercaptan, 2-phenyl-2-mercaptoethanol, 2-phenyl-2-hydroxyethylmercaptan, 1-hydroxy-4-mercaptocyclohexane, 3-mercapto-1,2-propanediol, 2-mercapto-1,3-propanediol, pentaerythritol mono(2-mercaptoacetate) and entaerythritol mono(3-mercaptopropionate); polymercaptans such as methanedithiol, 1,2-dimercaptoethane, 1,1-dimercaptopropane, 1,2-dimercaptopropane, 2,2-dimercaptopropane, 1,3-dimercaptopropane, 1,2,3-trimercaptopropane, 1,4-dimercaptobutane, 1,6-dimercaptohexane, bis(mercaptomethyl) sulfide, bis(2-mercaptoethyl) sulfide, bis(mercaptopropyl) sulfide, bis(mercaptomethyl) disulfide, bis(2-mercaptoethyl) disulfide, bis(mercaptopropyl) disulfide, bis(mercaptomethylthio)methane, bis(3-mercaptopropylthio)methane, 1,2-bis(mercaptomethylthio)ethane, 1,2-bis(2-mercaptoethylthio)ethane, 1,2-bis(3-mercaptopropyl)ethane, 1,3-bis(mercaptomethylthio)propane, 1,3-bis(2-mercaptoethylthio)propane, 1,3-bis(3-mercaptopropylthio)propane, 1,2,3-tris(mercaptomethylthio)propane, 1,2,3-tris(2-mercaptoethylthio)propane, 1,2,3-tris(3-mercaptopropylthio)propane, 1,2-bis[(2-mercaptoethyl)thio]-3-mercaptopropane, 4,8-dimercaptomethyl-1,11-mercapto-3,6,9-trithiaundecane, 9,7-dimercaptomethyl-1,11-mercapto-3,6,9-trithiaundecane, 5,7-dimercaptomethyl-1,11-mercapto-3,6,9-trithiaundecane, 1,5-dimercapto-3-oxapentane, 1,8-dimercapto-3,6-dioxaoctane, 2,2-dimethylpropane-1,3-dithiol, 3,4-dimethoxybutane-1,2-dithiol, 2-mercaptomethyl-1,3-dimercaptopropane, 2-mercaptomethyl-1,4-dimercaptobutane, 2-(2-mercaptoethylthio)-1,3-dimercaptopropane, 1,2-bis(2-mercaptoethylthio)-3-mercaptopropane, 1,1,1-tris(mercaptomethyl)propane, tetrakis(mercaptomethyl)methane, tetrakis(mercaptomethylthiomethyl)methane, tetrakis(2-mercaptoethylthiomethyl)methane, tetrakis(3-mercaptopropylthiomethyl)methane, 1,2,7-trimercapto-4,6-dithiaheptane, 1,2,9-trimercapto-4,6,8-trithianonane, 1,2,11-trimercapto-4,6,8,10-tetrathiaundecane, 1,2,13-trimercapto-4,6,8,10,12-pentathiatridecane, 1,2,8,9-tetramercapto-4,6-dithianonane, 1,2,10,11-tetramercapto-4,6,8-trithiaundecane, 1,2,12,13-tetramercapto-4,6,8,10-tetrathiatridecane, 1,2,6,7-tetramercapto-4-thiaheptane, bis(2,5-dimercapto-4-thiapentyl) disulfide, bis(2,7-dimercapto-4,6-dithiaheptyl) disulfide, 2,3-dimercapto-1-propanol (2-mercaptoacetate), 2,3-dimercapto-1-propanol (3-mercaptopropionate), ethylene glycol bis(2-mercaptoacetate), ethylene glycol bis(3-mercaptopropionate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethy)-1,3-propanedithiol, bis(2-mercaptoethy) ether, 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tris(2-mercaptoacetate), pentaerythritol bis(2-mercaptoacetate), pentaerythritol tetrakis(3-mercaptopropionate), pentaerythritol tris(3-mercaptopropionate), pentaerythritol bis(3-mercaptopropionate), pentaerythritol pentakis(3-mercaptopropionate), 1,1-dimercaptocyclohexane, 1,4-dimercaptocyclohexane, 1,3-dimercaptocyclohexane, 1,2-dimercaptocyclohexane, 1,4-bis(mercaptomethyl)cyclohexane, 1,3-bis(mercaptomethyl)cyclohexane, 1,2-bis(mercaptomethyl)cyclohexane, 1,1-bis(mercaptomethyl)cyclohexane, 2,5-dimercapto-1,4-dithiane, 2,5-dimercaptomethyl-2,5-dimethyl-1,4-dithiane, 2,5-bis(mercaptomethyl)-1,4-dithiane, 2,5-bis(2-mercaptoethyl)-1,4-dithiane, 2,5-bis(mercaptomethyl)-1-thiane, 2,5-bis(2-mercaptoethyl)-1-thiane, 2-mercaptomethyl-6-mercapto-1,4-dithiepane, 3,7-di(mercaptomethyl)-1,2,5-trithiepane, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1-hydroxyethylthio-3-mercaptoethylthiobenzene, 1,3-di(p-methoxyphenyl)propane-2,2-dithiol, 1,3-diphenylpropane-2,2-dithiol, phenylmethane-1,1-dithiol, 2,4-di(p-methoxyphenyl)pentane, bis(4-mercaptophenyl) sulfide, bis(4-mercaptophenyl) ether, 2,2-bis(9-mercaptophenyl)propane, bis(2,3-dimercaptopropyl) sulfide, bis(1,3-dimercaptopropyl) sulfide, bis(4-mercaptomethylphenyl) sulfide, bis(4-mercaptomethylphenyl) ether, 2,2-bis(4-mercaptomethylphenyl)propane, 2,5-dimercapto-1,3,4-thiadiazole, 3,4-thiophendithiol, 1,2-dimercapto-3-propanol, 1,3-imercapto-2-propanol, 1,2 dimercapto-1,3-butanediol, glyceryl dithioglycolate, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxypropyl sulfide bis(2-mercaptoacetate), hydroxypropyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate) and glycerin di(mercaptoacetate), and oligomers such as dimmers to icosamers thereof.
   Capable of being given as the thiophenols (2) are thiophenols such as thiophenol, 4-tert-butylthiophenol, 2-methylthiophenol, 3-methylthiophenol, 4-methylthiophenol, 1,2-dimercaptobenzene, 1,3-dimercaptobenzene, 1,4-dimercaptobenzene, 1,2,3-trimercaptobenzene, 1,2,4-trimercaptobenzene, 1,3,5-trimercaptobenzene, 2,5-toluenedithiol, 3,4-toluenedithiol, 2-hydroxylthiophenol, 3-hydroxylthiophenol, 4-hydroxylthiophenol, 2,4-dimercaptophenol and 2-mercaptohydroquinone.
   Further, (3) mercaptans and thiophenols each having an unsaturated group shall specifically be shown below.
   The mercaptans having an unsaturated group include allylmercaptan, 2-vinylbenzylmercaptan, 3-vinylbenzylmercaptan and 4-vinylbenzylmercaptan.
   The thiophenols having an unsaturated group include 2-vinylthiophenol, 3-vinylthiophenol and 4-vinyllthiophenol.
   In order to enhance a refractive index of the material obtained by polymerizing and curing the composition of the present invention, an inorganic compound (excluding single sulfur) having at least one sulfur atom and/or at least one selenium atom can be used in combination as a refractive index-improving component. The preferred inorganic compound is a compound in which a proportion of the total weight of a sulfur atom and/or a selenium atom in the inorganic compound is 30 % or more. If this proportion is less than 30 %, an increase in a proportion of the total weight of a sulfur atom and/or a selenium atom in the composition for the optical material is small, and therefore the effect of providing the resin with a high refractive index is decreased.
   The specific examples of the inorganic compound having a sulfur atom include hydrogen sulfide, carbon disulfide, selenium sulfide, carbon selenosulfide, ammonium sulfide, sulfur oxides such as sulfur dioxide and sulfur trioxide, thiocarbonates, sulfuric acid and salts thereof, hydrogensulfides, sulfites, hyposulfites, persulfates, thiocyanates, thiosulfates, halides such as sulfur dichloride, thionyl chloride and thiophosgen, boron sulfide, nitrogen sulfide, silicon sulfide, phosphorus sulfide, arsenic sulfide, selenium sulfide, metal sulfides and metal hydrogensulfides.
   The specific examples of the inorganic compound having a selenium atom include selenium, hydrogen selenide, selenium dioxide, carbon diselenide, ammonium diselenide, selenium oxides such as selenium dioxide, selenic acid and salts thereof, selenious acid and salts thereof, hydrogenselenates, selenosulfuric acid and salts thereof, selenopyrosulfuric acid and salts thereof, halides such as selenium tetrabromide and selenium oxychloride, selenocyanates, boron selenide, phosphorus selenide, arsenic selenide and metal selenides, excluding carbon selenosulfide and selenium sulfide which were given as the specific examples of the inorganic compound having a sulfur atom.
   In order to enhance a dyeing property of the material obtained by polymerizing and curing the composition of the present invention, capable of being used in combination as a dyeing property-improving component are (1) carboxylic acids, (2) mercaptocarboxylic acids, (3) hydroxycarboxylic acids, (4) amides, (5) 1,3-diketones, (6) 1,3-dicarboxylic acids, 3-ketocarboxylic acids and esters thereof and (7) compounds having an unsaturated group.
   Capable of being given as the specific examples of the carboxylic acids (1) are formic acid, acetic acid, propionic acid, butyric acid, veleric acid, caproic acid, caprylic acid, methylmercapto propionate, oxalic acid, malonic acid, succinic acid, glutaric acid, adipic acid, cyclohexanecarboxylic acid, benzoic acid, o-toluic acid, m-toluic acid, p-toluic acid, 2-methoxybenzoic acid, 3-methoxybenzoic acid, phthalic acid, isophthalic acid, terephthalic acid, thiodipropionic acid and dithiodipropionic acid.
   Capable of being given as the mercaptocarboxylic acids (2) are thioglycolic acid, 2-thiopropionic acid, 3-thiopropionic acid, thiolactic acid, mercaptosuccinic acid, thiomalic acid, N-(2-mercaptopropionyl)glycine, 2-mercaptobenzoic acid, 2-mercaptonicotinic acid, 3,3-dithioisobutyric acid, dithioglycolic acid and dithiopropionic acid.
   The hydroxycarboxylic acids (3) include hydroxyacetic acid, α-hydroxypropionic acid, β-hydroxypropionic acid, α-hydroxybutyric acid, β-hydroxybutyric acid, γ - hydroxybutyric acid, salicylic acid, 3-hydroxybenzoic acid and 4-hydroxybenzoic acid.
   The amides (4) include formamide, N-methylformamide, acetamide, N-methylacetamide, phthalamide, isophthalamide, terephthalamide, benzamide, toluamide, 4-hydroxybenzamide and 3-hydroxybenzamide.
   The 1,3-diketones (5)acetylacetone and cyclohexane-1,3,5-trione include.
   (6) The 1,3-dicarboxylic acids and the esters thereof include malonic acid, 2-methylmalonic acid and mono- and diesters thereof. The 3-ketocarboxylic acids and the esters thereof include acetoacetic acid and esters thereof.

Also, (a) alcohols, (b) phenols, (c) mercaptans, (d) thiophenols, (e) mercaptoalcohols, (f) carboxylic acids and (g) amides shall specifically be shown below as the compounds (7) having an unsaturated group.

Capable of being given as the alcohols (a) having an unsaturated group are monohydroxy compounds such as 2-hydroxyethyl methacrylate, 2-hydroxyethyl acrylate, 3-hydroxypropyl methacrylate, 3-hydroxypropyl acrylate, 2-hydroxypropyl methacrylate, 2-hydroxypropyl acrylate, 1,3-dimethacryloxy-2-propanol, 1,3-diacryloxy-2-propanol, 1-acryloxy-3-methacryloxy-2-propanol, pentaerythritol trimethacrylate, pentaerythritol triacrylate, pentamethacrylate of bis(2,2,2-trimethylolethyl) ether, pentaacrylate of bis(2,2,2-trimethylolethyl) ether, trimethylolpropane dimethacrylate, trimethylolpropane diacrylate, allyl alcohol, crotyl alcohol, methylvinyl carbinol, cinnamyl alcohol, 4-vinylbenzyl alcohol, 3-vinylbenzyl alcohol, 2-(4-vinylbenzylthio)ethanol, 2-(3-vinylbenzylthio)ethanol, 1,3-bis(4-vinylbenzylthio)-2-propanol, 1,3-bis(3-vinylbenzylthio)-2-propanol, 2,3-bis(4-vinylbenzylthio)-1-propanol, 2,3-bis(3-vinylbenzylthio)-1-propanol, 3-phenoxy-2-hydroxypropyl acrylate, 2-phenoxyethyl isocyanurate bis(acrylate), 2-hydroxyethyl isocyanurate bis(methacrylate), 2-hydroxyethyl cyanurate bis(acrylate), 2-hydroxyethyl cyanurate bis(methacrylate), 3-methyl-1-butyne-3-ol, 3-methyl-1-pentyne-3-ol and propargyl alcohol; polyhydroxy compounds such as pentaerythritol dimethacrylate, pentaerythritol diacrylate, pentaerythritol monomethacrylate, pentaerythritol monoacrylate, timethylolpropane monomethacrylate, timethylolpropane monoacrylate, 2-hydroxyethyl isocyanurate mono(acrylate), 2-hydroxyethyl isocyanurate mono(methacrylate), 2-hydroxyethyl cyanurate mono(acrylate) and 2-hydroxyethyl cyanurate mono(methacrylate) and unsaturated polyhydroxy compounds produced by addition reaction of epoxy compounds described later and acrylic acid or methacrylic acid, such as 2,2-bis[4-2(hydroxy-3-methacryloxypropoxy)phenyl]propane.

2-Vinylphenol, 3-vinylphenol and 4-vinylphenol can be given as the phenols (b) having an unsaturated group.

Those described above can be given as the mercaptans (c).

Those described above can be given as the thiophenols (d).

2-(4-Vinylbenzylthio)-2-mercaptoethanol and 2-(3-vinylbenzylthio)-2-mercaptoethanol can be given as the mercaptoalcohols (e) having an unsaturated group.

Capable of being given as the carboxylic acids (f) having an unsaturated group are acrylic acid, methacrylic acid, crotonic acid, monohydroxyethyl acrylate phthalate, maleic acid, fumaric acid, monoallyl phthalate and cinnamic acid.

Amides of α,β-unsaturated carboxylic acids such as acrylic acid, methacrylic acid, maleic acid, maleic anhydride and fumaric acid and N-vinylformamide can be given as the amides (g) having an unsaturated group.

They may be used alone or in a mixture of two or more kinds thereof and can be used in an amount of 0.001 to 40 parts by weight per 100 parts by weight of the composition of the present invention.

When using sulfur in the present invention, the composition can be produced as well by polymerizing and curing with a compound which can be reacted with sulfur. It is known that the compound which can be reacted with sulfur extends over a large variety of compounds such as saturated and unsaturated hydrocarbons, aromatic compounds, hetero atom-containing organic compounds and the like (one example is 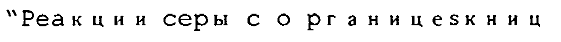 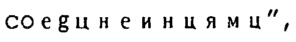 , edited by M . 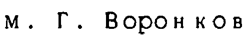 et al., 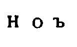 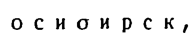 , 1979). The compound which can be reacted with sulfur according to the present invention shall not specifically be restricted as long as it can be a transparent resin which can be used as an optical material by polymerizing and curing.

When the compound having at least one structure represented by Formula (1) in a molecule is used as the resin in the present invention, the composition can be produced as well by polymerizing and curing with a compound having two or more functional groups which can be reacted with the structure represented by Formula (1), a compound having at least one of these functional groups and at least one of the other homopolymerizable functional groups, a compound having at least one of these homopolymerizable functional groups and a compound having one functional group which can be reacted with the structure represented by Formula (1) and which can be homopolymerized as well. The compound having two or more functional groups which can be reacted with the structure represented by Formula (1) includes epoxy compounds, publicly known episulfide compounds and polyvalent carboxylic anhydrides.

On the other hand, the compound having at least one functional group which can be reacted with the structure represented by Formula (1) and at least one of the other homopolymerizable functional groups includes epoxy compounds, episulfide compounds and polyvalent carboxylic anhydrides each having an unsaturated group such as methacryl, acryl, allyl, vinyl and aromatic vinyl.

The compound having at least one homopolymerizable functional group includes compounds having an unsaturated group such as methacryl, acryl, allyl, vinyl and aromatic vinyl. The specific examples of the compound having two or more functional groups which can be reacted with the structure represented by Formula (1) shall be shown below.

Capable of being given as the specific examples of the epoxy compounds are phenol base epoxy compounds produced by condensation of epihalohydrins with polyhydric phenol compounds such as hydroquinone, catechol, resorcin, bisphenol A, bisphenol F, bisphenol sulfone, bisphenol ether, bisphenol sulfide, halogenated bisphenol A and a novolak resin; alcohol base epoxy compounds produced by condensation of epihalohydrins with polyhydric alcohol compounds such as ethylene glycol, diethylene glycol, triethylene glycol, polyethylene glycol, propylene glycol, dipropylene glycol, polypropylene glycol, 1,3-propanediol, 1,4-butanediol, 1,6-hexanediol, neopentyl glycol, glycerin, trimethylolpropane trimethacrylate, pentaerythritol, 1,3-and 1,4-cyclohexanediol, 1,3- and 1,4-cyclohexanedimethanol, hydrogenated bisphenol A, bisphenol A·ethylene oxide adducts and bisphenol A·propylene oxide adducts; glycidyl ester base epoxy compounds produced by condensation of epihalohydrins with polyvalent carboxylic acid compounds such as adipic acid, sebacic acid, dodecanedicarboxylic acid, dimeric acid, phthalic acid, iso- and terephthalic acid, tetrahydrophthalic acid, methyltetrahydrophthalic acid, hexahydrophthalic acid, hexahydroisophthalic acid, hexahydroterephthalic acid, het acid, nadic acid, maleic acid, succinic acid, fumaric acid, trimellitic acid, benzenetetracarboxylic acid, benzophenonetetracarboxylic acid, naphthalenedicarboxylic acid and diphenyldicarboxylic acid; amine base epoxy compounds produced by condensation of epihalohydrins with primary diamines such as ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, 1,7-diaminoheptane, 1,8-diaminooctane, bis(3-aminopropyl) ether, 1,2-bis(3-aminopropoxy)ethane, 1,3-bis(3-aminopropoxy)-2,2'-dimethylpropane, 1,2-,1,3- or 1,4-bisaminocyclohexane, 1,3-or 1,4-bisaminomethylcyclohexane, 1,3- or 1,4-bisaminoethylcyclohexane, 1,3- or 1,4-bisaminopropylcyclohexane, hydrogenated 4,4'-diaminodiphenylmethane, isophorondiamine, 1,4-bisaminopropylpiperazine, m- or p-phenylenediamine, 2,4- or 2,6-tolylenediamine, m- or p-xylylenediamine, 1,5- or 2,6-naphthalenediamine, 4,4'-diaminodiphenylmethane, 4,4'-diaminodiphenyl ether and 2,2-(4,4'-diaminodiphenyl)propane and secondary diamines such as N,N'-dimethylethylenediamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3-diaminopropane, N,N'-diethyl-1,2-diaminobutane, N,N'-diethyl-1,3-diaminobutane, N,N'-diethyl-1,4-diaminobutane, N,N'-diethyl-1,6-diaminohexane, piperazine, 2-methylpiperazine, 2,5- or 2,6-dimethylpiperazine, homopiperazine, 1,1-di-(4-piperidyl)-methane, 1,2-di-(4-piperidyl)-ethane, 1,3-di-(4-piperidyl)-propane and 1,4-di-(4-piperidyl)-butane; alicyclic epoxy compounds such as 3,4-epoxycyclohexyl-3,4-epoxycyclohexane carboxylate, vinylcyclohexane dioxide, 2-(3,4-epoxycyclohexyl)-5,5-spiro-3,4-epoxycyclohexane-metadioxane and bis(3,4-epoxycyclohexyl) adipate; epoxy compounds produced by epoxidation of unsaturated compounds, such as cyclopentadiene epoxide, epoxidized soybean oil, epoxidized polybutadiene and vinylcyclohexene epoxide; and urethane base epoxy compounds produced from the polyhydric alcohols and the phenol compounds each described above, diisocyanates and glycidol.

Episulfide compounds obtained by converting a part or the whole of epoxy groups in the epoxy compounds described above to episulfide can be given as the specific examples of the episulfide compounds.

The compounds described above as the object material which is reacted with epihalohydrin explained in the epoxy compounds described above can be given as the specific examples of the polyvalent carboxylic anhydrides.

Also, the specific examples of the compound having at least one functional group which can be reacted with the structure represented by Formula (1) and at least one of the other homopolymerizable functional groups shall be shown below.

Vinylphenyl glycidyl ether, vinylbenzyl glycidyl ether, glycidyl methacrylate, glycidyl acrylate and allyl glycidyl ether can be given as the epoxy compound having an unsaturated group.

The specific examples of the compound having at least one homopolymerizable functional group include compounds having an ester structure of monohydric or higher alcohol and acrylic acid or methacrylic acid, such as methyl acrylate, methyl methacrylate, ethyl acrylate, ethyl methacrylate, ethylene glycol diacrylate, ethylene glycol dimethacrylate, diethylene glycol diacrylate, diethylene glycol dimethacrylate, triethylene glycol diacrylate, triethylene glycol dimethacrylate, polyethylene glycol diacrylate, polyethylene glycol dimethacrylate, 1,3-butylene glycol diacrylate, 1,3-butylene glycol dimethacrylate, 1,6-hexanediol diacrylate, 1,6-hexanediol dimethacrylate, neopentyl glycol diacrylate, neopentyl dimethacrylate, polypropylene glycol diacrylate, polypropylene glycol dimethacrylate, 2,2-bis[4-(acryloxyethoxy)phenyl]propane, 2,2-bis[4-(methacryloxyethoxy)phenyl]propane, 2,2-bis[4-(acryloxy· diethoxy)phenyl]propane, 2,2-bis[4-(methacryloxy· diethoxy)phenyl]propane, 2,2-bis[4-(acryloxy· polyethoxy)phenyl]propane, 2,2-bis[4-(methacryloxy· polyethoxy)phenyl]propane, trimethylolpropane triacrylate, trimethylolpropane trimethacrylate, pentaerythritol tetraacrylate, pentaerythritol tetramethacrylate, hexaacrylate of bis(2,2,2-trimethylolethyl) ether and hexamethacrylate of bis(2,2,2-trimethylolethyl) ether; allyl compounds such as allyl sulfide, diallyl phthalate and diethylene glycol bisallyl carbonate; vinyl compounds such as acrolein, acrylonitrile and vinyl sulfide; and aromatic vinyl compounds such as styrene, α-methylstyrene, methylvinylbenzene, ethylvinylbenzene, α-chlorostyrene, chlorovinylbenzene, vinylbenzyl chloride, paradivinylbenzene and metadivinylbenzene.

Further, compounds having one epoxy group or episulfide group can be given as the specific examples of the compound having one functional group which can be reacted with the structure represented by Formula (1) and which can be homopolymerized as well. To be more specific, capable of being given are monoepoxy compounds such as ethylene oxide, propylene oxide and glycidol, glycidyl esters of monocarboxylic acids such as acetic acid, propionic acid and benzoic acid, glycidyl ethers such as methyl glycidyl ether, ethyl glycidyl ether, propyl glycidyl ether and butyl glycidyl ether, monoepisulfide compounds such as ethylene sulfide and propylene sulfide and thioglycidyl esters having a structure derived from the monocarboxylic acids described above and thioglycidol (1,2-epithio-3-hydroxypropane). Among them, the compounds having one episulfide group are more preferred.

The resin can be produced by polymerizing and curing with the compound having at least one functional group which can be reacted with the structure represented by Formula (1) in the composition of the present invention or the compound having at least one of these functional groups and at least one of the other homopolymerizable functional groups in the presence of a curing catalyst. The amines, the phosphines and the acids each described above can be used as the curing catalyst. Those described above can be used as the specific examples thereof also in this case.

A proportion of these physical property-improving agents are determined in a range in which the optical properties and the mechanical properties are not damaged. It is not definitely determined because of the chemical structure and is preferably 90 % by weight or less.

Further, in using the compound having an unsaturated group, a radical polymerization initiator includes publicly known heat polymerization catalysts including azo base compounds such as 1-[(1-cyano-1-methylethyl)azo]formamide, 2-phenylazo-4-methoxy-2,4-dimethyl-valeronitrile, 2,2'-azobis(2-methylpropane) and 2,2'-azobis(2,4,4-trimethylpentane) and publicly known photopolymerization catalysts such as benzophenone, benzoin and benzoin methyl ether. Among them, the peroxides, the hydroperoxides and the azo base compounds are preferred, and the peroxides and the azo base compounds are more preferred. Most preferred are 2,2'-azobis(4-methoxy-2,4-dimethylvaleronitrile), 2,2'-azobis(2-cyclopropylpropionitrile), 2,2'-azobis(2,4-dimethylvaleronitrile), 2,2'-azobisisobutyronitrile, 2,2'-azobis(2-methylbutyronitrile), 1,1'-azobis(cyclohexane-1-carbonitrile), 1-[(1-cyano-1-methylethyl)azo]formamide, 2-phenylazo-4-methoxy-2,4-dimethyl-valeronitrile, 2,2'-azobis(2-methylpropane) and 2,2'-azobis(2,4,4-trimethylpentane). They can be used alone or in a mixture.

A blending amount of the radical polymerization initiator is varied according to the components of the composition and the curing method, and therefore it can not definitely be determined. Usually, it falls in a range of 0.01 to 5.0 wt %, preferably 0.1 to 2.0 wt % based on the whole weight of the composition.

Further, not only these compounds but also oligomers of episulfide, the solvent and the acids used in synthesizing episulfide, unreacted raw materials and byproducts may be contained in the composition according to the present invention as long as problems are not caused.

A polymerization-controlling agent can be added, if necessary, in order to inhibit a rise in the viscosity and facilitate the operability in storing and injecting the composition of the present invention. Halides of the 13th to 16th elements in the long-form periodic table can be given as the polymerization-controlling agent.

The specific examples of the halides include chlorides such as aluminum chloride, indium chloride, thallium chloride, phosphorus trichloride, phosphorus pentachloride and bismuth trichloride and compounds obtained by substituting all or a part of these chlorides with fluorine, bromine or iodine, compounds having halogen and a hydrocarbon group such as diphenylchloroboron, diphenyldichloroboron, phenyldichloroboron, diethylchlorogallium, dimethylchloroindium, diethylchlorothallium, diphenylchlorothallium, ethyldichlorophosphine, butyldichlorophosphine, triphenylphosphine dichloride, diphenylchloroarsenic, tetraphenylchloroarsenic, diphenyldichloroselenium, phenylchloroselenium and diphenyldichlorotellurium and compounds obtained by substituting all or a part of these chlorines with fluorine, bromine or iodine, organic halides represented by halogen-substituted products of hydrocarbons such as chlorophenol, dichlorophenol, trichlorophenol, chloroaniline, dichloroaniline, chloronitrtobenzene, dichloronitrtobenzene, chlorobenzene, dichlorobenzene, trichlorobenzene, chloroacetophenone, chlorotoluene, chloronitroaniline, chlorobenzyl cyanide, chlorobenzaldehyde, chlorobenzo trichloride, chloronaphthalene, dichloronaphthalene, chlorothiophenol, methallyl chloride, benzyl chloride, chlorobenzyl chloride, chloroacetic acid, dichloroacetic acid, trichloroacetic acid, chlorosuccinic acid, oxalic dichloride, triglycol dichloride, methanesulfonyl chloride, chlorobenzoic acid, chlorosalicylic acid, 4,5-dichlorophthalic acid, 3,5-dichlorosalicylic acid, isopropyl chloride, allyl chloride, epichlorohydrin, chloromethylthiirane, propylene chlorohydrin, chloranil, dichlorodicyanobenzoquinone, dichlorophene, dichloro-1,4-benzoquinone, dichlorobenzophenone, N-chlorophtalimide, 1,3-dichloro-2-propanol, methyl 2,3-dichloropropionate, p-chlorobenzenesulfonic acid, ethyl 2-chloropropionate, dichloromethane, chloroform and carbon tetrachloride and acid chlorides such as benzoic chloride, phthalic chloride, isophthalic chloride, terephthalic chloride, methacrylic chloride, succinic chloride, fumaric chloride, nicotinic chloride, chloronicotinic chloride, oleic chloride, benzoyl chloride, chlorobenzoyl chloride and propionic chloride and compounds obtained by substituting all or a part of these chlorines with fluorine, bromine or iodine. Halides of silicon, germanium, tin and antimony are more preferred.

The specific examples of the halides of silicon, germanium, tin and antimony include the following compounds.

The specific examples of silicon halides include silicon tetrachloride, methyltrichlorosilane, dimethyldichlorosilane, trimethylchlorosilane, ethyltrichlorosilane, diethyldichlorosilane, triethylchlorosilane, propyltrichlorosilane, dipropyldichlorosilane, tripropylchlorosilane, n-butyltrichlorosilane, di-n-butyldichlorosilane, tri-n-butylchlorosilane, tert-butyltrichlorosilane, di-tert-butyldichlorosilane, tri-tert-butylchlorosilane, octyltrichlorosilane, dioctyldichlorosilane, trioctylchlorosilane, phenyltrichlorosilane, diphenyldichlorosilane, triphenylchlorosilane, allylchlorodimethylsilane, trichloroallylsilane, tert-butylchlorodimethylsilane, diphenyl-tert-butylchlorosilane, trimethyl(2-chloroallyl)sialne, trimethylchloromethylsilane, n-butylchlorodimethylsilane and compounds obtained by substituting all or a part of these chlorines with fluorine, bromine or iodine.

The specific examples of germanium halides include germanium tetrachloride, methylgermanium trichloride, dimethylgermanium dichloride, trimethylgermanium chloride, ethylgermanium trichloride, diethylgermanium dichloride, triethylgermanium chloride, propylgermanium trichloride, dipropylgermanium dichloride, tripropylgermanium chloride, n-butylgermanium trichloride, di-n-butylgermanium dichloride, tri-n-butylgermanium chloride, tert-butylgermanium trichloride, di-tert-butylgermanium dichloride, tri-tert-butylpropylgermanium chloride, amylgermanium trichloride, diamylgermanium dichloride, triamylgermanium chloride, octylgermanium trichloride, dioctylgermanium dichloride, trioctylgermanium chloride, phenylgermanium trichloride, diphenylgermanium dichloride, triphenylgermanium chloride, toluylgermanium trichloride, ditoluylgermanium dichloride, tritoluylgermanium chloride, benzylgermanium trichloride, dibenzylgermanium dichloride, tribenzylgermanium chloride, cyclohexylgermanium trichloride, dicyclohexylgermanium dichloride, tricyclohexylgermanium chloride, vinylgermanium trichloride, divinylgermanium dichloride, trivinylgermanium chloride, allyltrichlorogermane, bis(chloromethyl)dimethylgermane, chloromethyltrichlorogermane, tert-butyldimethylchlorogermane, carboxyethyltrichlorogermane, chloromethyltrimethylgermane, dichloromethyltrimethylgermane, 3-chloropropyltrichlorogermane, phenyldimethylchlorogermane, 3-(trichlorogermyl)propionitrile chloride and compounds obtained by substituting all or a part of these chlorines with fluorine, bromine or iodine.

The specific examples of tin halides include tin tetrachloride, diethyldichlorosilane, dimethyltin dichloride, trimethyltin chloride, ethyltin trichloride, diethylgetin dichloride, triethyltin chloride, propyltin trichloride, dipropyltin dichloride, tripropyltin chloride, n-butyltin trichloride, di-n-butyltin dichloride, tri-n-butyltin chloride, tert-butyltin trichloride, di-tert-butyltin dichloride, tri-tert-butyltin chloride, amyltin trichloride, diamyltin dichloride, triamyltin chloride, octyltin trichloride, dioctyltin dichloride, trioctyltin chloride, phenyltin trichloride, diphenyltin dichloride, triphenyltin chloride, toluyltin trichloride, ditoluyltin dichloride, tritoluyltin chloride, benzyltin trichloride, dibenzyltin dichloride, tribenzyltin chloride, cyclohexyltin trichloride, dicyclohexyltin dichloride, tricyclohexyltin chloride, vinyltin trichloride, divinyltin dichloride, trivinyltin chloride, butylchlorodihydroxytin, bis(2,4-pentadionate)dichlorotin, carbomethoxyethyltrichlorotin, chloromethyltrimethyltin, diallyldichlorotin, dibutylbutoxychlorotin, tri-n-pentylchlorotin and compounds obtained by substituting all or a part of these chlorines with fluorine, bromine or iodine.

The specific examples of antimony halides include antimony pentachloride, methylantimony tetrachloride, dimethylantimony trichloride, trimethylantimony dichloride, tetramethylantimony chloride, ethylantimony tetrachloride, diethylantimony trichloride, triethylantimony dichloride, tetraethylantimony chloride, butylantimony tetrachloride, dibutylantimony trichloride, tributylantimony dichloride, tetrabutylantimony chloride, phenylantimony tetrachloride, diphenylantimony trichloride, triphenylantimony dichloride, tetraphenylantimony chloride and compounds obtained by substituting all or a part of these chlorines with fluorine, bromine or iodine.

However, the halides shall no be restricted to them, and they may be used alone or in a mixture of two or more kinds thereof. Among the compounds described above, the chlorides are preferred, and the trichloro or dichloro compounds are more preferred. The trichloro or dichloro compounds of germanium, tin and antimony having an alkyl group are further preferred. The specific examples of the most preferred compounds are dibutyltin dichloride, butylpropyltin trichloride, dioctyltin dichloride, octyltin trichloride, dibutyldichlorogermanium, butyltrichlorogermanium, diphenyldichlorogermanium, phenyltrichlorogermanium and triphenylantimony dichloride.

An addition amount of these halides is 0.0001 to 10 % by weight, preferably 0.001 to 1 % by weight based on the whole weight of the composition. This addition amount is preferably controlled according to the kinds of the composition and the comonomer and the kind of the halides of the 13th to 16th group elements. Specific means do not have to be taken for an adding method in adding the halides of the 13th to 16th group elements in the long-form periodic table.

For the purpose of improving various performances such as an acid resistance, a weatherability, a dyeing property, a strength and a refractive index, a compound which can be reacted with a part or all of the compounds in the composition can be added to carry out polymerization and curing. In this case, a publicly known polymerizing and curing catalyst can separately be added, if necessary, for the reaction.

The compound which can be reacted with a part or all of the compounds in the composition includes epoxy compounds, iso (thio) cyanates, carboxylic acids, carboxylic anhydrides, phenols, amines, vinyl compounds, allyl compounds, acryl compounds, methacryl compounds, mercaptans, inorganic compounds having a sulfur atom and inorganic compounds having a selenium atom. The typical specific examples thereof shall be shown below.
(1) Epoxy compounds including monoepoxy compounds such as ethylene oxide and propylene oxide, phenol base epoxy compounds produced by condensation of epihalohydrins with polyhydric phenol compounds such as hydroquinone, catechol, resorcin, bisphenol A, bisphenol F, bisphenol ether, halogenated bisphenol A and a novolak resin, alcohol base epoxy compounds produced by condensation of epihalohydrins with alcohol compounds such as methanol, ethanol, propanol, butanol, ethylene glycol, diethylene glycol, triethylene glycol, polyethylene glycol, propylene glycol, dipropylene glycol, polypropylene glycol, 1,3-propanediol, 1,4-butanediol, 1,6-hexanediol, neopentyl glycol, glycerin, trimethylolpropane, pentaerythritol, 1,3-p and 1,4-cyclohexanediol, 1,3- and 1,4-cyclohexanedimethanol, hydrogenated bisphenol A, bisphenol A·ethylene oxide adducts and bisphenol A·propylene oxide adducts, urethane base epoxy compounds produced from the alcohols and the phenol compounds each described above and diisocyanates, glycidyl ester base epoxy compounds produced by condensation of epihalohydrins with carboxylic acid compounds such as acetic acid, propionic acid, benzoic acid, adipic acid, sebacic acid, dodecanedicarboxylic acid, dimeric acid, phthalic acid, iso- and terephthalic acid, tetrahydrophthalic acid, methyltetrahydrophthalic acid, hexahydrophthalic acid, het acid, nadic acid, maleic acid, succinic acid, fumaric acid, trimellitic acid, benzenetetracarboxylic acid, benzophenonetetracarboxylic acid, naphthalenedicarboxylic acid, diphenyldicarboxylic acid, acrylic acid, methacrylic acid, maleic acid and fumaric acid, amine base epoxy compounds produced by condensation of epihalohydrins with ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, 1,7-diaminoheptane, 1,8-diaminooctane, bis(3-aminopropyl) ether, 1,2-bis(3-aminopropoxy)ethane, 1,3-bis(3-aminopropoxy)-2,2'-dimethylpropane, 1,2-,1,3- or 1,4-bisaminocyclohexane, 1,3- or 1,4-bisaminomethylcyclohexane, 1,3- or 1,4-bisaminoethylcyclohexane, 1,3- or 1,4-bisaminopropylcyclohexane, hydrogenated 4,4'-diaminodiphenylmethane, isophorondiamine, 1,4-bisaminopropylpiperazine, m- or p-phenylenediamine, 2,4- or 2,6-tolylenediamine, m- or p-xylylenediamine, 1,5- or 2,6-naphthalenediamine, 4,4'-diaminodiphenylmethane, 4,4'-diaminodiphenyl ether, 2,2-(4,4'-diaminodiphenyl)propane, N,N'-dimethylethylenediamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3-diaminopropane, N,N'-diethyl-1,2-diaminobutane, N,N'-diethyl-1,3-diaminobutane, N,N'-diethyl-1,4-diaminobutane, N,N'-diethyl-1,6-diaminohexane, piperazine, 2-methylpiperazine, 2,5- or 2,6-dimethylpiperazine, homopiperazine, 1,1-di-(4-piperidyl)-methane, 1,2-di-(4-piperidyl)-ethane, 1,3-di-(4-piperidyl)-propane and 1,4-di-(4-piperidyl)-butane, sulfur-containing epoxides such as bis(β-epoxypropyl) sulfide, bis (β-epoxypropylthio)methane, 1,2-bis(β-epoxypropylthio)ethane, 1,3-bis (β-epoxypropylthio)propane, 1,2-bis(β-epoxypropylthio)propane, 1-(β-epoxypropylthio)-2-(β-epoxypropylthiomethyl)propane, 1,4-bis(β-epoxypropylthio)butane, 1,3-bis(β-epoxypropylthio)butane, 1-(β-epoxypropylthio)-3-(β-epoxypropylthiomethyl)butane, 1,5-bis(β-epoxypropylthio)pentane, 1-(β-epoxypropylthio)-4-(β-epoxypropylthiomethyl)pentane, 1,6-bis(β-epoxypropylthio)hexane, 1-(β-epoxypropylthio)-5-(β-epoxypropylthiomethyl)hexane, 1-(β-epoxypropylthio)-2-[(2-β-epoxypropylthioethyl)thio]ethane, 1-(β-epoxypropylthio)-2-[[2-(2-(3-epoxypropylthioethyl)thioethyl]thio]ethane, tetrakis(β-epoxypropylthiomethyl) methane, 1,1,1-tris(β-epoxypropylthiomethyl)propane, 1,5-bis(β-epoxypropylthio) - 2-(β-epoxypropylthiomethyl)-3-thiapentane, 1,5-bis(β-epoxypropylthio)-2,4-bis(β-epoxypropylthiomethyl)-3-thiapentane, 1-(β-epoxypropylthio)-2,2-bis(β-epoxypropylthiomethyl)-4-thiahexane, 1,5,6-tris(β-epoxypropylthio)-4-(β-epoxypropylthiomethyl)-3-thiahexane, 1,8-bis(β3-epoxypropylthio)-4-(β-epoxypropylthiomethyl)-3,6-dithiaoctane, 1,8-bis(β-epoxypropylthio)-4,5-bis(β-epoxypropylthiomethyl)-3,6-dithiaoctane, 1,8-bis(β-epoxypropylthio)-4,4-bis(β-epoxypropylthiomethyl)-3,6-dithiaoctane, 1,8-bis(β-epoxypropylthio)-2,4,5-tris(β-epoxypropylthiomethyl)-3,6-dithiaoctane, 1,8-bis(β-epoxypropylthio)-2,5-bis(β-epoxypropylthiomethyl)-3,6-dithiaoctane, 1,9-bis(β-epoxypropylthio)-5-(β-epoxypropylthiomethyl)-5-[(2-β-epoxypropylthioethyl)thiomethyl]-3,7-dithianonane, 1,10-bis (β-epoxypropylthio)-5,6-bis[(2-β-epoxypropylthioethyl)thio]-3,6,9-trithiadecane, 1,11-bis(β-epoxypropylthio)-4,8-bis(β-epoxypropylthiomethyl)-3,6,9-trithiaundecane, 1,11-bis(β-epoxypropylthio)-5,7-bis(β-epoxypropylthiomethyl)-3,6,9-trithiaundecane, 1,11-bis (β -epoxypropylthio) -5, 7- [(2-β-epoxypropylthioethyl)thiomethyl]-3,6,9-trithiaundecane, 1,11-bis(β-epoxypropylthio)-4,7-bis(β - epoxypropylthiomethyl)-3,6,9-trithiaundecane, 1,3- and 1,4-bis(β-epoxypropylthio)cyclohexane, 1,3- and 1,4-bis(β-epoxypropylthiomethyl)cyclohexane, bis[4-(β-epoxypropylthio)cyclohexyl]methane, 2,2-bis[4-(β-epoxypropylthio)cyclohexyl]propane, bis [4-(β-epoxypropylthio)cyclohexyl] sulfide, 2,5-bis(β-epoxypropylthiomethyl)-1,4-dithiane, 2,5-bis(β-epoxypropylthioethylthiomethyl)-1,4-dithiane, 1,3- and 1,4-bis(β-epoxypropylthio)benzene, 1,3- and 1,4-bis(β-epoxypropylthiomethyl)benzene, bis[4-(β-epoxypropylthio)phenyl]methane, 2,2-bis[4-(β-epoxypropylthio)phenyl]propane, bis[4-(β-epoxypropylthio)phenyl] sulfide, bis[4-(β-epoxypropylthio)phenyl] sulfone and 4,4'-bis(β-epoxypropylthio)biphenyl, alicyclic epoxy compounds such as 3,4-epoxycyclohexyl-3,4-epoxycyclohexane carboxylate, vinylcyclohexane dioxide, 2-(3,4-epoxycyclohexyl)-5,5-spiro-3,4-epoxycyclohexane-meta-dioxane and bis(3,4-epoxycyclohexyl) adipate, epoxy compounds produced by epoxidizing unsaturated compounds, such as cyclopentadiene epoxide, epoxidized soybean oil, epoxidized polybutadiene and vinylcyclohexene epoxide, and compounds having an unsaturated group such as vinylphenyl glycidyl ether, vinylbenzyl glycidyl ether, glycidyl methacrylate, glycidyl acrylate and allyl glycidyl ether.
(2) Monoisocyanates such as methylisocyanate, ethylisocyanate, propylisocyanate, iso-propylisocyanate, n-butylisocyanate, sec-butylisocyanate, tert-butylisocyanate, pentylisocyanate, hexylisocyanate, octylisocyanate, dodecylisocyanate, cyclohexylisocyanate, phenylisocyanate and toluylisocyanate, polyisocyanates such as diethylenediisocyanate, tetramethylenediisocyanate, hexamethylenediisocyanate, trimethylhexamethylenediisocyanate, cyclohexanedisocyanate, 1,3-bis(isocyanatemethyl)cyclohexane, 1,4-bis(isocyanatemethyl)cyclohexane, isophoronedisocyanate, 2,5-bis(isocyanatemethyl)norbornene, 2,6-bis(isocyanatemethyl)decahydronaphthalene, 2,5-diisocyanate-1,4-dithiane, 2,5-bis(isocyanatemethyl)-1,4-dithiane, 2,6-bis(isocyanatemethyl)-1,4-dithiane, lysinetriisocyanate, 2,4-tolylenediisocyanate, 2,6-tolylenediisocyanate, o-toluidinediisocyanate, 4,4'-diphenylmetanediisocyanate, diphenyl ether diisocyanate, 3-(2'-isocyanatecyclohexyl) propylisocyanate, tris(phenylisocyanate) thiophosphate, isopropylidenebis(cyclohexylisocyanate), 2,2'-bis(4-isocyanatephenyl)propane, triphenylmethanetriisocyanate, bis(diisocyanatetolyl)phenylmethane, 4,4,'4'-triisocyanate-2,5-dimethoxyphenylamine, 3,3'-dimethoxybenzidine-4,4'-diisocyanate, 1,3-phenylenediisocyanate, 1,4-phenylenediisocyanate, 4,4'-diisocyanatebiphenyl, 4,4'-diisocyanate-3,3'-dimethylbiphenyl, dicyclohexylmethane-, 4,4'-diisocyanate, 1,1'-methylenebis(4-isocyanatebenzene), 1,1'-methylenebis(3-methyl-4-isocyanatebenzene), m-xylylenediisocyanate, p-xylylenediisocyanate, 1,3-bis(1-isocyanate-1-methylethyl)benzene, 1,4-bis(1-isocyanate-1-methylethyl)benzene, 1,3-bis(2-isocyanate-2-propyl)benzene, 2,6-bis(isocyanatemethyl)naphthalene, 1,5-naphthalenediisocyanate, bis(isocyanatemethyl)tetrahydrodicyclopendadiene, bis(isocyanatemethyl)dicyclopendadiene, bis(isocyanatemethyl)tetetrahydrothiophene, bis(isocyanatemethyl)thiophene, 2,5-diisocyanatemethylnorbornene, bis(isocyanatemethyl)adamantane, 3,4-diisocyanateselenophane, 2,6-diisocyanate-9-selenabicyclononane, bis(isocyanatemethyl)selenophane, 3,4-diisocyanate-2,5-diselenolane, dimmer acid diisocyanate and 1,3,5-tri(1-isocyanatehexyl)isocyanuric acid, isocyanates such as dimmers obtained by buret type reaction of these polyisocyanates, cyclized trimers of these polyisocyanates and addition products of these polyisocyanates and alcohols or thiols and isothiacyanates obtained by substituting all or part of the isocyanate groups of the foregoing compounds having at least one isocyanate group in a molecule with an isothiocyanate group.
(3) Carboxylic acids which were explained in the item of the epoxy compounds (1) and which were given as the example of the object raw material reacted with epihalohydrin.
(4) Carboxylic anhydrides which were explained in the item of the epoxy compounds (1) and which were given as the example of the object raw material reacted with epihalohydrin.
(5) Phenols which were explained in the epoxy compounds (1) and which were given as the example of the object raw material reacted with epihalohydrin.
(6) Amines which were explained in the epoxy compounds (1) and which were given as the example of the object raw material reacted with epihalohydrin.
(7) Vinyl compounds such as vinyl ether, ethyl vinyl ether, isobutyl vinyl ether, 2-ethylhexyl vinyl ether, phenyl vinyl ether, benzyl vinyl ether, 2-chloroethyl vinyl ether, cyclohexyl vinyl ether, vinyl glycidyl ether, vinyl alcohol, methyl vinyl carbinol, ethylene glycol monovinyl ether, ethylene glycol divinyl ether, diethylene glycol monovinyl ether, diethylene glycol divinyl ether, tetramethylene glycol monovinyl ether, divinyl sulfide, vinyl ethyl sulfide, vinyl phenyl sulfide, methyl vinyl ketone, divinyl dicarbonate, vinyl diglycol carbonate, vinylene carbonate, vinyl acetate, vinyl chloroacetate, vinyl propionate, vinyl butyrate, vinyl hexanoate, vinyl 2-ethylhexanoate, divinyl adipate, vinyl benzoate, vinyl salicylate, vinyl acrylate, vinyl methacrylate, vinyl bromide, vinyl iodide, vinyl phosphate, vinylurea, styrene, 2-methylstyrene, 3-methylstyrene, 4-methylstyrene, α-methylstyrene, 2,4-6-trimethylstyrene, 4-tert-butylstyrene, stilbene, vinylphenol, 3-vinylbenzyl alcohol, 4-vinylbenzyl alcohol, 2-(4-vinylphenylthio)ethanol, 2-(3-vinylphenylthio)ethanol, 2-(4-vinylbenzylthio)ethanol, 2-(3-vinylbenzylthio)ethanol, 1,3-bis(4-vinylbenzylthio)-2-propanol, 1,3-bis(3-vinylbenzylthio)-2-propanol, 2,3-bis(4-vinylbenzylthio)-1-propanol, 2,3-bis(3-vinylbenzylthio)-1-propanol,cinnamyl alcohol, cinnamyl alcohol, cinnamaldehyde, 1,3-divinylbenzene, 1,4-divinylbenzene, trivinylbenzene, divinylphthalte, 2-chlorostyrene, 3-chlorostyrene, 4-chlorostyrene, 3-chloromethylstyrene, 4-chloromethylstyrene, 4-aminostyrene, 3-cyanomethylstyrene, 9-cyanomethylstyrene, 4-vinylbiphenyl, 2,2'-divinylbiphenyl, 4,4'-divinylbiphenyl, 2,2'-distyryl ether, 4,4'-distyryl ether, 2,2'-distyryl sulfide, 4,4'-distyryl sulfide, 2,2-bis(4-vinylphenyl)propane, bis(4-vinylphenyl) ether and 2,2-bis(4-vinyloxyphenyl)propane.
(8) Allyl compounds obtained by substituting a part or all of vinyl groups in the compounds given as the example in the vinyl compounds of (7) with an allyl group.
(9) Acryl compounds such as methyl acrylate, ethyl acrylate, propyl acrylate, butyl acrylate, cyclohexyl acrylate, 2-hydroxyethyl acrylate, 3-hydroxypropyl acrylate, 2-hydroxypropyl acrylate, 3-phenoxy-2-hydroxypropyl acrylate, trimethylolpropane monoacrylate, 2-hydroxyethyl isocyanurate monoacrylate, 2-hydroxyethyl isocyanurate diacrylate, 2-hydroxyethyl cyanurate monoacrylate, 2-hydroxyethyl cyanurate diacrylate, ethylene glycol diacrylate, diethylene glycol diacrylate, 1,3-butylene glycol diacrylate, triethylene glycol diacrylate, polyethylene glycol diacrylate, propylene glycol diacrylate, 1,3-propanediol diacrylate, 1,3-butanediol diacrylate, 1,4-butanediol diacrylate, 1,6-hexanediol diacrylate, neopentyl glycol diacrylate, polypropylene glycol diacrylate, 2-hydroxy-1,3-diacryloxypropane, 2,2-bis[4-(acryloxyethoxy)phenyl]propane, 2,2-bis[4-(acryloxyethoxy)cyclohexyl]propane, 2,2-bis[4-(2-hydroxy-3-acryloxypropoxy)phenyl]propane, 2,2-bis[4-(acryloxy-diethoxy)phenyl]propane, 2,2-bis[4-(acryloxy-polyethoxy)phenyl]propane, trimethylolpropane triacrylate, pentaerythritol monoacrylate, pentaerythritol diacrylate, pentaerythritol triacrylate, pentaerythritol tetraacrylate, pentaacrylate of bis(2,2,2-trimethylolethyl) ether, hexaacrylate of bis(2,2,2-trimethylolethyl) ether and bis(4-acryloylthiophenyl) sulfide.
(10) Methacryl compounds obtained by substituting a part or all of acryl groups in the compounds given as the example in the acryl compounds of (9) with a methacryl group.
(11) Mercaptans including aliphatic mercaptans such as methylmercaptan, ethylmercaptan, n-propylmercaptan, n-butylmercaptan, allylmercaptan, n-hexylmercaptan, n-octylmercaptan, n-decylmercaptan, n-dodecylmercaptan, n-tetradecylmercaptan, n-hexadecylmercaptan, n-octadecylmercaptan, cyclohexylmercaptan, i-propylmercaptan, t-butylmercaptan, t-nonylmercaptan, t-dodecylmercaptan, phenylmercaptan, benzylmercaptan, 3-methylphenylmercaptan, 4-methylphenylmercaptan, 4-chlorobenzylphenylmercaptan, 4-vinylbenzylphenylmercaptan, 3-vinylbenzylphenylmercaptan, methylmercaptopropionate, 2-mercaptoethanol, 3-mercapto-1,2-propanediol, 2-mercapto-1,3-propanediol, mercaptoacetic acid, mercaptoglycolic acid, mercaptopropionic acid, methanedithiol, 1,2-dimercaptoethane, 1,2-dimercaptopropane, 1,3-dimercaptopropane, 2,2-dimercaptopropane, 1,4-dimercaptobutane, 1,6-dimercaptohexane, bis(2-mercaptoethyl) ether, bis(2-mercaptoethyl) sulfide, 1,2-bis(2-mercaptoethyloxy)ethane, 1,2-bis(2-mercaptoethylthio)ethane, 2,3-dimercapto-1-propanol, 1,3-dimercapto-2-propanol, 1,2,3-trimercaptopropane, 2-mercaptomethyl-1,3-dimercaptopropane, 2-mercaptomethyl-1,4-dimercaptobutane, 2-(2-mercaptoethylthio)-1,3-dimercaptopropane, 4-mercaptomethyl-1,8-dimercapto-3,6-dithiaoctane, 2,4-dimercaptomethyl-1,5-dimercapto-3-thiapentane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,1-tris(mercaptomethyl)propane, tetrakis(mercaptomethyl)methane, ethylene glycol bis(2-mercaptoacetate), ethylene glycol bis(3-mercaptopropionate), diethylene glycol bis(2-mercaptoacetate), diethylene glycol bis(3-mercaptopropionate), 1,4-butanediol bis(2-mercaptoacetate), 1,4-butanediol bis(3-mercaptopropionate), trimethylolpropanetris(2-mercaptoacetate), trimethylolpropanetris(3-mercaptopropionate), pentaerythritol tetrakis(2-mercaptoacetate), pentaerythritol tetrakis(3-mercaptopropionate), 1,2-dimercaptocyclohexane, 1,3-dimercaptocyclohexane, 1,4-dimercaptocyclohexane, 1,3-bis(mercaptomethyl)cyclohexane, 1,4-bis(mercaptomethyl)cyclohexane, 2,5-bis(mercaptomethyl)-1,4-dithiane, 2,5-bis(2-mercaptoethyl)-1,4-dithiane, 2,5-bis(2-mercaptoethylthiomethyl)-1,4-dithiane, 2,5-bis(mercaptomethyl)-1-thiane, 2,5-bis(2-mercaptoethyl)-1-thiane, 2,5-bis(mercaptomethyl)thiophenes, 1,2-epithiomercaptoethane, 1,2-epithio-1,2-dimercaptoethane, 1,2-epithio-1,2,3,4-tetramercaptoethane, 1,2-epithio-3-mercaptopropane, 1,2-epithio-3,3-dimercaptopropane, 1,2-epithio-3,3,3-trimercaptopropane, 2,3-epithio-1,4-dimercaptobutane, 2,3-epithio-1,1,4,4-tetramercaptobutane, 1,2-epithio-5-mercapto-4-thiapentane, 1,2-epithio-5,5-dimercapto-4-thiapentane, 1,2-epithio-5,5,5-trimercapto-4-thiapentane, 1,2:6,7-diepithio-1,7-dimercapto-5-thiaheptane and 1,2:6,7-diepithio-3,5-dimercapto-5-thiaheptane and aromatic cyclic mercaptans such as 1,2-dimercaptobenzene, 1,3-dimercaptobenzene, 1,4-dimercaptobenzene, 1,3-bis(mercaptomethyl)benzene, 1,4-bis(mercaptomethyl)benzene, 2,2'-dimercaptobiphenyl, 4,4'-dimercaptobiphenyl, bis (4-mercaptophenyl)methane, 2,2-bis(9-mercaptophenyl)propane, bis(4-mercaptophenyl) ether, bis(4-mercaptophenyl) sulfide, bis(4-mercaptophenyl) sulfone, bis(4-mercaptomethylphenyl)methane, 2,2-bis(4-mercaptomethylphenyl)propane, bis(4-mercaptomethylphenyl) ether, bis(4-mercaptomethylphenyl) sulfide, 4-hydroxythiophenol and mercaptobenzoic acid.
(12) Inorganic compounds having a sulfur atom such as sulfur, hydrogen sulfide, carbon disulfide, carbon selenodisulfide, ammonium sulfide, sulfur oxides such as sulfur dioxide and sulfur trioxide, thiocarbonates, sulfuric acid and salts thereof, hydrogensulfates, sulfites, hyposulfites, persulfates, thiocyanates, thiosulfates, halides such as sulfur dichloride, thionyl chloride and thiophosgen, boron sulfide, nitrogen sulfide, silicon sulfide, phosphorus sulfide, arsenic sulfide, metal sulfides and metal hydrogensulfides.
(13) Inorganic compounds having a selenium atom such as selenium, hydrogen selenide, selenium dioxide, carbon diselenide, ammonium selenide, selenium oxides such as selenium dioxide, selenic acid and salts thereof, selenious acid and salts thereof, hydrogenselenates, selenosulfuric acid and salts thereof, selenopyrosulfuric acid and salts thereof, halides such as selenium tetrabromide and selenium oxychloride, selenocyanates, boron selenide, phosphorus selenide, arsenic selenide and metal selenides of metals.

In obtaining the optical material by polymerizing and curing the composition of the present invention, it is a matter of course that the practicality of the resulting material can be raised more by adding publicly known additives such as an antioxidant, a UV absorber, a yellowing preventive, a bluing agent and a pigment. Also, when the composition of the present invention is liable to peel off from a mold during polymerization, it is necessary as well to use or add a publicly known external and/or internal adhesive property-improving agent to control and enhance an adhesive property between the cured material obtained and the mold. The specific examples of the internal adhesive property-improving agent described above include silane compounds such as 3-methacryloxypropyltrimethoxysilane, 3-glycidoxypropyltrimethoxysilane, N-(2-aminomethyl)-3-aminopropyltrimethoxysilane and 3-mercaptopropyltrimethoxysilane, and they can be used in an amount of 0.0001 to 5 parts by weight per 100 parts by weight of the composition of the present invention. On the other hand, when the composition of the present invention is less liable to peel off from a mold after polymerization, a publicly known external and/or internal releasing agent can be used or added to control and enhance a releasing property of the resulting cured material from the mold. The internal releasing agent described above includes fluorine base nonionic surfactants, silicon base nonionic surfactants, alkyl quaternary ammonium salts, phosphoric acid esters, acid phosphoric acid esters, oxyalkylene type acid phosphoric acid esters, alkaline metal salts of acid phosphoric acid esters, alkaline metal salts of oxyalkylene type acid phosphoric acid esters, metal salts of higher fatty acids, higher fatty acid esters, paraffins, waxes, higher aliphatic amides, higher aliphatic alcohols, polysiloxanes and aliphatic amine ethylene oxide adducts.

It is possible that a part or all of the composition of the present invention can preliminarily be reacted at - 100 to 160°C in 0.1 to 480 hours in the presence or absence of a catalyst under stirring or non-stirring before injecting and that it is then adjusted and injected. In particular, when a solid component is contained in the compounds of the composition for the resin and is not easily handled, this preliminary reaction is effective. This preliminary reaction is carried out on the conditions of preferably -10 to 120°C and 0.1 to 240 hours, more preferably 0 to 100°C and 0.1 to 120 hours and particularly preferably 20 to 80°C and 0.1 to 60 hours.

For example, when sulfur and the compound having at least one structure represented by Formula (1) in a molecule are used in combination, employed is a method in which a catalyst is added, if necessary, to the above compound and the mixture is heated if necessary to carry out preliminary reaction and in which the other components are then added. When using the catalyst, the specific examples thereof include the curing catalysts described above, but it shall not be restricted thereto.

Also when the compound having at least one mercapto group in a molecule and the compound having at least one isocyanate group and/or isothiocyanate group in a molecule are used in combination, employed is a method in which a catalyst is added, if necessary, to the above compound and the mixture is heated if necessary to carry out preliminary reaction and in which the other components are then added. When using the catalyst, a publicly known urethane catalyst is used.

Further, 10 % or more (assuming 100 % before the preliminary reaction) of the inorganic compound having a sulfur atom is preferably consumed by this preliminary reaction, and 20 % or more thereof is more preferably consumed. The preliminary reaction may be carried out in optional atmosphere such as in the presence of gas such as air, nitrogen and oxygen and under sealing at an atmospheric pressure or applied or reduced pressure or under reducing the pressure. In carrying out this preliminary reaction, various additives such as the compound having at least one mercapto group in a molecule, a compound which is added as a performance-improving agent and which can be reacted with a part or all of the composition and a UV absorber may be added. Also, it is preferred for controlling the reaction progress degree to produce the fixed optical material to measure a liquid chromatography and/or a viscosity and/or a specific gravity and/or a refractive index of this preliminary reaction product. A method of measuring the liquid chromatography and/or the refractive index among them is preferred because of a high sensitivity, and a method of measuring the refractive index is most preferred because it is easy.

When the composition of the present invention is polymerized and cured to produce the optical material, the raw materials after mixing are injected into a glass or metal-made mold to allow polymerizing and curing reaction to go on by heating, and then the cured matter is taken off from the mold to produce the optical material.

The curing time is 0.1 to 200 hours, usually 1 to 100 hours, and the curing temperature is -10 to 160°C, usually -10 to 140°C. The polymerization can be carried out by holding at a prescribed polymerizing temperature for prescribed time, heating at 0.1 to 100°C/hour and cooling at 0.1 to 100°C/hour and combining these steps. It is preferred treatment for removing distortion of the optical material to subject the material to annealing treatment at a temperature of 50 to 150°C for 10 minutes to 5 hours after finishing curing. Further, the material can be subjected, if necessary, to surface treatments such as dyeing, hard coating, impact resistant coating, reflection preventing and cloudiness prevention providing.

A method for polymerizing and curing the composition of the present invention to produce the optical material shall be described below in further details.

All of the compound having at least one structure represented by Formula (1) in a molecule, the compound which can be reacted with the above compound, the compound which can be reacted with a part or all of a composition used as a performance-improving agent, the polymerizing catalyst, the radical polymerization initiator, the polymerization controller, the adhesive property-improving agent or the releasing property-improving agent, the antioxidant, the blueing agent, the UV absorber, the stabilizer, the deodorant and the additives for improving various performances such as a dyeing property, a strength and a refractive index may be mixed at the same time in the same vessel under stirring or the respective raw materials may be added and mixed by stages or several components may be separately mixed, and then the other components may further be mixed again in the same vessel. The respective raw materials and the additives may be mixed in any order. Further, two or more kinds of the respective components may preliminarily be reacted in advance by the methods described above and then mixed with the other components. In mixing, the set temperature and the time required for this may be fundamentally any ones as long as they are conditions on which the respective components are sufficiently mixed. However, the excessive temperature and time cause undesirable reactions between the respective raw materials and the additives and bring about a rise in the viscosity to make the injection operation difficult, and therefore they are not suited. Mixing should be carried out at a temperature falling in a range of -50 to 100°C, preferably -30 to 70°C and more preferably -5 to 50°C. The mixing time is one minute to 12 hours, preferably 5 minutes to 10 hours and most preferably 5 minutes to 6 hours. Also, mixing may be carried out while shutting off an active energy ray.

It is a preferred method from the viewpoint of preventing bubbles from being produced during injecting, polymerizing and curing to carry out degassing operation under reduced pressure before, in or after mixing the respective raw materials and the additives.

The deaerating treatment is carried out on the conditions of one minute to 24 hours and 0 to 100°C under a reduced pressure of 0.001 to 50 torr. The pressure reducing degree is preferably 0.005 to 25 torr, more preferably 0.01 to 10 torr, and the pressure reducing degree may be varied in these ranges. The deaerating time is preferably 5 minutes to 18 hours, more preferably 10 minutes to 12 hours. The temperature in the deaeration is preferably 5 to 80°C, more preferably 10 to 60°C, and the temperature may be varied in these ranges. In the deaerating treatment, it is a preferred operation in terms of elevating the deaerating effect to renew the surface of the composition of the present invention by stirring, blowing gas or vibration caused by a supersonic wave. Components removed by the deaerating operation are principally dissolved gases such as hydrogen sulfide and low boiling matters such as mercaptans of a low molecular weight, but the kinds thereof shall not specifically be restricted as long as the effects of the invention is revealed.

Further, in injecting into a mold, it is preferred in terms of enhancing the quality of the optical material of the present invention to filter off impurities contained in these compositions and/or the respective raw materials before mixing through a micro filter having a pore diameter of 0.1 to 5 µm to refine them.

The composition is injected into a glass- or metal-made mold and then polymerized and cured in an electric oven or by means of an activated energy-generating apparatus. The polymerizing time is 0.1 to 100 hours, usually 1 to 48 hours, and the polymerizing temperature is -10 to 160°C, usually -10 to 140°C. The polymerization can be carried out by holding at a prescribed polymerizing temperature for prescribed time, heating at 0.1 to 100°C/hour and cooling at 0.1 to 100°C/hour and combining these steps. It is preferred treatment for removing distortion of the optical material to subject the material to annealing treatment at a temperature of 50 to 150°C for 5 minutes to 5 hours after finishing polymerization. Further the material can be subjected, if necessary, to surface treatments such as dyeing, hard coating, impact resistant coating, reflection preventing and cloudiness prevention providing.

### EXAMPLES

The present invention shall specifically be explained below with reference to examples, but the present invention shall not be restricted to them. Lenses obtained were evaluated by the following methods.
Odor: the lens is rubbed by means of a lens form processing machine for processing a spectacle lens to confirm the presence of odor:
a: odorless or a good smell is faintly felt
b: a bad odor and an offensive odor slightly remain
c: a bad odor and an offensive odor are felt
d: a bad odor and an offensive odor are not felt, but an odor of a perfume is felt
Cloudiness: each 10 sheets of flat plates having the thicknesses of 0.5 cm (Sample A), 1.0 cm (Sample B) and 2.0 cm (Sample C) were prepared, and they were observed through a fluorescent lamp and visually judged:
aa: 10 plates are not cloudy
a : 8 to 9 plates are not cloudy
b : 5 to 7 plates are not cloudy
c : 4 or less plates are not cloudy

### Example 1

Mixed with 0.1 part by weight of a blended perfume (1) as a perfume and 0.1 part by weight of tetrabromophosphonium bromide as a catalyst were 90 parts by weight of bis(β-epithiopropyl) sulfide and 10 parts by weight of sulfur of 200 mesh having a purity of 99.9 %, and a homogeneous liquid was prepared. Then, this was injected into a mold and heated from 30°C to 100°C in 48 hours in an oven, whereby it was polymerized and cured to produce a lens. This was subjected to lens polishing by means of a lens form processing machine for processing a spectacle lens to confirm the presence of odor. Further, the cloudiness was evaluated. The results thereof are shown in Table 1.

### Examples 2 to 11

Example 1 was repeated, except that compositions and perfumes shown in Table 1 were used.

### Examples 12 to 14

Example 1 was repeated, except that compositions and perfumes shown in Table 1 were used and that 0.1 part by weight of dibutyltin dilaurate as the catalyst was substituted for tetrabromophosphonium bromide.

### Example 15

Trimethylthiourea 0.1 part by weight was added to 80 parts by weight of bis(β-epithiopropyl) sulfide and 15 parts by weight of sulfur of 200 mesh having a purity of 99.9 %, and they were preliminarily reacted while stirring at 65°C until 50 % of sulfur was consumed. A consumption rate of sulfur was determined by HPLC analysis (GPC mode). Then, 5 parts by weight of bis(2-mercaptoethyl) sulfide, 0.1 part by weight of tetrabutylphosphonium bromide, 0.1 part by weight of triphenylantimony dichloride and 0.1 part by weight of the blended perfume (1) as the perfume were mixed to prepare a homogeneous liquid. Then, this was injected into a mold and heated from 30°C to 100°C in 48 hours, whereby it was polymerized and cured to produce a lens. This was subjected to lens polishing by means of a lens form processing machine for processing a spectacle lens to confirm the presence of odor. Further, the cloudiness was evaluated. The results thereof are shown in Table 1.

### Comparative Example 1

Mixed with 0.1 part by weight of tetrabromophosphonium bromide as a catalyst and 0.05 part by weight of dibutyltin dichloride as a polymerization-controlling agent were 90 parts by weight of bis(β-epithiopropyl) sulfide and 10 parts by weight of sulfur of 200 mesh having a purity of 99.9 %, and a homogeneous liquid was prepared. Then, this was injected into a mold and heated from 30°C to 100°C in 48 hours in an oven, whereby it was polymerized and cured to produce a lens. This was subjected to lens polishing by means of the lens form processing machine for processing a spectacle lens to confirm the presence of odor. Further, the cloudiness was evaluated. The results thereof are shown in Table 2.

### Comparative Examples 2 to 6

Comparative Example 1 was repeated, except that compositions shown in Table 2 were used.

### Comparative Examples 7 to 9

Comparative Example 1 was repeated, except that compositions and perfumes shown in Table 1 were used and that 0.1 part by weight of dibutyltin dilaurate as the catalyst was substituted for tetrabromophosphonium bromide.

### Comparative Example 10

Trimethylthiourea 0.1 part by weight was added to 80 parts by weight of bis(β-epithiopropyl) sulfide and 15 parts by weight of sulfur of 200 mesh having a purity of 99.9 %, and they were preliminarily reacted while stirring at 65°C until 50 % of sulfur was consumed. A consumption rate of sulfur was determined by HPLC analysis (GPC mode). Then, 5 parts by weight of bis(2-mercaptoethyl) sulfide, 0.1 part by weight of tetrabutylphosphonium bromide and 0.1 part by weight of triphenylantimony dichloride were mixed to prepare a homogeneous liquid. Then, this was injected into a mold and heated from 30°C to 100°C in 48 hours in an oven, whereby it was polymerized and cured to produce a lens. This was subjected to lens polishing by means of the lens form processing machine for processing a spectacle lens to confirm the presence of odor. Further, the cloudiness was evaluated. The results thereof are shown in Table 2.

**Table 1**

| Example | Components | | Perfume | | Odor | Cloudy sample | | |
|---|---|---|---|---|---|---|---|---|
| | Composition | Sulfur content (%) | Component | Add amount (weight part) | | A | B | C |
| 1 | A | 59 | (1) | 0.1 | a | aa | aa | aa |
| 2 | A | 59 | (1) | 0.0005 | b | aa | aa | aa |
| 3 | A | 59 | (1) | 0.001 | a | aa | aa | aa |
| 4 | A | 59 | (1) | 1.0 | a | aa | aa | aa |
| 5 | A | 59 | (1) | 5.0 | d | aa | aa | aa |
| 6 | A | 59 | (2) | 0.1 | a | aa | aa | aa |
| 7 | A | 59 | (3) | 0.1 | a | aa | aa | aa |
| 8 | B | 51 | (1) | 0.1 | a | aa | aa | aa |
| 9 | C | 46 | (1) | 0.1 | a | aa | aa | aa |
| 10 | D | 63 | (1) | 0.1 | a | aa | aa | aa |
| 11 | E | 18 | (1) | 0.1 | a | aa | aa | aa |
| 12 | F | 33 | (1) | 0.1 | a | aa | aa | aa |
| 13 | G | 31 | (1) | 0.1 | a | aa | aa | aa |
| 14 | H | 39 | (1) | 0.1 | a | aa | aa | aa |
| 15 | I | 64 | (1) | 0.1 | a | aa | aa | aa |

**Table 2**

| Comparative Example | Components | | Perfume | | Odor | Cloudy sample | | |
|---|---|---|---|---|---|---|---|---|
| | Composition | Sulfur content (%) | Component | Add amount (weight part) | | A | B | C |
| 1 | A | 59 | None | | c | aa | aa | aa |
| 2 | A | 59 | (4) | 0.1 | c | aa | aa | aa |
| 3 | B | 51 | None | | c | aa | aa | aa |
| 4 | C | 46 | None | | c | aa | aa | aa |
| 5 | D | 63 | None | | c | aa | aa | aa |
| 6 | E | 18 | None | | b | aa | aa | aa |
| 7 | F | 33 | None | | c | aa | aa | aa |
| 8 | G | 31 | None | | c | aa | aa | aa |
| 9 | H | 39 | None | | c | aa | aa | aa |
| 10 | I | 64 | None | | c | aa | aa | aa |

| | | | | | | | | |
|---|---|---|---|---|---|---|---|---|
| Compositions (numerals show parts by weight) A: bis(β-epithiopropyl) sulfide/sulfur = 90/10 B: bis(β-epithiopropyl) sulfide/ bis(mercaptomethyl)-1,4-dithiane/ bis(isothianatemethyl)norbornene/ bis(isocyanatemethyl)-1,4-dithian= 70/19/7/4 C: bis(β-epithiopropyl) sulfide/sulfur/ pentaerythritol tetrakis(3-mercaptopropionate)/1,3-bis(isocyanatemethyl)cyclohexane = 67/5/19/9 D: bis(β-epithiopropyl) disulfide/bis(2-mercaptoethyl) sulfide =95/5 E: bis(β-epithiopropyl) selenide/pentaerythritol tetrakis(3-mercaptopropionate)/m-xylylenediisocyanate = 21/45/34 F: bis(mercaptomethyl)-1,4-dithiane/1,3-bis(isocyanatemethyl)cyclohexane/sulfur = 46/49/5 G: 1,2,10,11-tetramercapto-4,6,8-trithiaundecane/m-xylylenediisocyanate = 47/53 H: 1,2,10,11-tetramercapto-4,6,8-trithiaundecane/ bis(mercaptomethyl) sulfide =54/46 I: bis(β-epithiopropyl) sulfide/sulfur/bis(2-mercaptoethyl) sulfide =80/15/5 Perfumes (numerals show parts by weight) (1): β-damascone 1.0, cyclopentadecanolide 5.0, γ-undecalactone 1.0, benzaldehyde 1.0, α-isomethylionone 1.0, α-methylionone 1.0, benzyl acetate 2.0, stearyl acetate 0.5, geraniol 1.5, linalol 1.0, p-tert-butyl-α-methylhydrocinnamic aldehyde 30.0, anisaldehyde 5.0, methyl dihydrojasmonate 12.0, β-phenylethyldimethyl carbinol 2.0, cinnamic alcohol 1.0, jasmine oil 30.0, γ-phenylpropyl alcohol 2.0, benzyl cinnamate 3.0 (2) methylbenzylcarbinyl acetate 8.0, α-isomethylionone 6.0, p-tert-butyl-α-methylhydrocinnamic aldehyde 10.0, p-tert-butylcyclohexyl acetate 3.0, isocamphylcyclohexanol 2.0, linalol 5.0, linalyl acetate 6.0, bornyl acetate 2.0, benzyl acetate 8.0, citronellol 5.0, citronellyl acetate 2.0, geraninol 2.0, γ-phenylpropyl alcohol 10.0, lavender oil 30.0, cyclopentadecanolide 1.0, (3) Extract obtained by adding 100 ml of ethanol to 20 g of dried powder of rosemary whole grass, extracting it on a water bath of 90°C for one hour through a cooling tube and then concentrating an ethanol solution thus obtained under reduced pressure. (4) malic acid 100 | | | | | | | | |

### Example 16

A flask equipped with a stirrer, a thermometer and a nitrogen-introducing tube was charged with 300 g of epichlorohydrin and 1.5 g of tetrabutylammonium bromide, and 55 g of hydrogen sulfide was passed through it at 35°C in about 3 hours. After left standing for a night, 1400 g of 21 % brine was added thereto, and 370 g of 35 % sodium hydroxide was dropwise added at 0 to 5°C in about one hour to react them at 5°C for 2 hours. After reaction, the reaction product was extracted with 600 ml of toluene, and the extract was washed three times with 300 ml of purified water. Toluene was distilled off from the reaction liquid, and then the residue was distilled under reduced pressure to obtain 180.5 g of bis(β-epoxypropyl) sulfide of a colorless liquid having a boiling point of 50°C (13 Pa). Then, a flask equipped with a stirrer, a thermometer and a nitrogen-introducing tube was charged with 36.5 g of bis(β-epoxypropyl) sulfide, 76.1 g of thiourea, 4.4 g of acetic anhydride and 170 ml of toluene and 340 ml of methanol as a solvent, and they were reacted at 20°C for 10 hours under nitrogen atmosphere. After reaction, the reaction product was extracted with 430 ml of toluene, and the extract was washed with 52 ml of a 10 % sulfuric acid aqueous solution and then four times with 52 ml of water. Thereafter, the excess solvent was distilled off, and the residue was then distilled under reduced pressure to obtain 33.9 g of bis(β-epithiopropyl) sulfide of a colorless liquid having a boiling point of 60°C (12 Pa). Further, mixed with 0.1 part by weight of the blended perfume (1) as a perfume and 0.1 part by weight of tetrabromophosphonium bromide as a catalyst were 90 parts by weight of bis(β-epithiopropyl) sulfide thus obtained and 10 parts by weight of sulfur of 200 mesh having a purity of 99.9 %, and a homogeneous liquid was prepared. Then, this was injected into a mold and heated from 30°C to 100°C in 48 hours in an oven, whereby it was polymerized and cured to produce a lens. This was subjected to lens polishing by means of a lens form processing machine for processing a spectacle lens to confirm the presence of odor to find that it was odorless.

The lens thus obtained was colorless and transparent. Bis(β-epithiopropyl) sulfide obtained by the process of the present invention had a chlorine content of 0.01 % by weight, and a resin obtained by polymerizing it had a refractive index of 1.73, an Abbe number of 34, a color tone of 1.2, an oxidation resistance of 1.4 and a light fastness of 1.6. The analysis of the chlorine content in the compounds and the evaluation of the flat plates after polymerization were carried out by the following methods.
1. Chlorine content: measured by means of a fluorescent X-ray analytical apparatus.
2. Refractive index (ND) and Abbe number (νD): measured at 25°C by means of an Abbe refractometer.
3. Color tone: a δ YI value of the flat plate having a thickness of 2.5 mm was measured by means of a colorimeter. The lower the δYI value, the better the yellow degree.
4. Oxidation resistance: a δ YI value of the flat plate having a thickness of 2.5 mm after heating at 120°C for 3 hours was measured. The lower the δ YI value, the better the yellow degree.
5. Light fastness: measured was a δ YI value of the flat plate having a thickness of 2.5 mm after irradiated with a carbon arc-burning light of a sun shine weather meter for 60 hours. The lower the δ YI value, the better the yellow degree.

### Example 17

Trimethylthiourea 0.1 part by weight was added to 80 parts by weight of bis(β-epithiopropyl) sulfide and 15 parts by weight of sulfur of 200 mesh having a purity of 99.9 %, and they were preliminarily reacted while stirring at 65°C until 50 % of sulfur was consumed. A consumption rate of sulfur was determined by HPLC analysis (GPC mode). Then, 5 parts by weight of bis(2-mercaptoethyl) sulfide, 0.1 part by weight of tetrabutylphosphonium bromide, 0.1 part by weight of triphenylantimony dichloride and 0.1 part by weight of the blended perfume (1) as the perfume were mixed to prepare a homogeneous liquid. The composition thus obtained was subjected to deaerating treatment under the conditions of 1 torr, one hour and 20°C. This composition was injected into a mold having a thickness of 10 mm composed of two glass plates and a gasket, and it was heated at 20°C for 20 hours, then heated at 40°C for 5 hours, then heated at 60°C for 5 hours, thereafter heated from 60°C up to 100°C in 10 hours at a fixed rate and finally heated at 100°C for 2 hours, whereby the composition was polymerized and cured. After left cooling down to a room temperature, the cured matter was released from the mold to obtain a cured optical material. This was subjected to lens polishing by means of a lens form processing machine for processing a spectacle lens to confirm the presence of odor to find that it was odorless. The optical material obtained had a refractive index of 1.73, an Abbe number of 34, a transparency of A and a heat resistance of 105°C.

The refractive index and the Abbe number were measured at 25°C by means of an Abbe refractometer.

The flat plate having a thickness of 10 mm was observed in a dark room under a fluorescent lamp with a black paper used for a background to evaluate a transparency according to the following criteria:
A: cloudiness is not observed
B: cloudiness is faintly observed
C: cloudiness is clearly observed but disappears when separated from the fluorescent lamp
D: cloudiness is clearly observed and still observed even after separated from the fluorescent lamp

The heat resistance was evaluated by measuring a temperature at which a needle was penetrated by 0.1 mm into a sample cut to a thickness of 2.5 mm by a Bicatt method (5Kg-load).

### INDUSTRIAL APPLICABILITY

The composition of the present invention has made it possible to remove odor generated in cutting, polishing and drilling a lens having the physical properties of a high refractive index and a high Abbe number.

Further, the composition for an optical material comprising sulfur having a purity of 98 % or more and the compound which can be reacted with sulfur has made it possible to readily inhibit cloudiness of a lens and provide a composition for an optical material having a high refractive index and an optical material obtained by polymerizing and curing the above composition.

Also, a sulfur-containing compound characterized by having a chlorine content of 0.1 % by weight or less has improved a color tone such as an oxidation resistance and a light fastness of a high refractive index optical material obtained by polymerizing a composition for a resin containing the above compound. It was an effective method to carry out at least one refining by distillation in producing the above sulfur-containing compound.

Further, a production process for an optical material characterized by subjecting a composition for an optical material in advance to deaerating treatment under fixed conditions has succeeded in providing an optical material having a high refractive index with a transparency of a further high degree. Further, the new fact that a heat resistance of the optical material is enhanced by this deaerating treatment has been found.

## Claims

1. A polymerizable composition comprising a compound having at least one structure represented by the following Formula (1) in a molecule and a perfume: 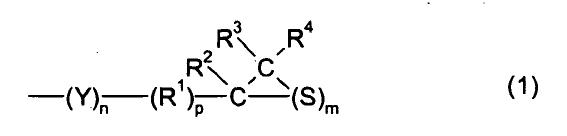 wherein R¹ represents a hydrocarbon having 1 to 10 carbon atoms or a single bond; R², R³ and R⁴ each represent a hydrocarbon group having 1 to 10 carbon atoms or hydrogen; Y represents O, S, Se or Te; m = 1 to 5, n = 0 to 5 and p = 0 or 1.

2. The polymerizable composition as described in claim 1, wherein the perfume is at least one compound selected from the group of (a), (b), (c) and (d) described below:
(a) hydrocarbon, aldehyde, ketone, ester or alcohol having a skeleton represented by (CH₃)₂ C< or (CH₃)₂C=,
(b) aldehyde, ketone, ester or alcohol in which a γ-position carbon constitutes a cyclic skeleton or an esterified compound of alcohol in which a γ-position carbon constitutes a cyclic skeleton,
(c) a compound having a cyclic ketone skeleton or a cyclic ester skeleton having 4 to 20 carbon atoms and
(d) a plant extract.

3. The polymerizable composition as described in claim 1 or 2, wherein the perfume has a content of 0.001 to 1.0 % by weight based on the whole composition.

4. The polymerizable composition as described in any of claims 1 to 3, further comprising sulfur.

5. The polymerizable composition as described in any of claims 1 to 4, wherein the compound having at least one structure represented by Formula (1) described above has a chlorine content of 0.1 % by weight or less.

6. A production process for an optical material **characterized by** polymerizing and curing the polymerizable composition as described in any of claims 1 to 5.

7. The production process for an optical material as described in claim 6, wherein the composition described above is subjected in advance to deaerating treatment at 0 to 100°C for one minute to 24 hours under a reduced pressure of 0.001 to 50 torr.

8. An optical material obtained by the process as described in claim 6 or 7.

## Patentansprüche

1. Polymerisierbare Zusammensetzung, umfassend eine Verbindung, die mindestens eine durch die folgende Formel (1) dargestellte Struktur in einem Molekül aufweist, und ein Parfüm: 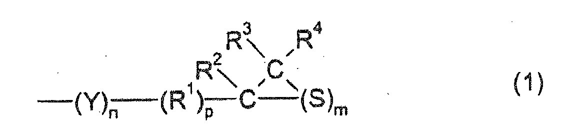 wobei R¹ einen Kohlenwasserstofif mit 1 bis 10 Kohlenstoffatomen oder eine Einfachbindung darstellt; R², R³ und R⁴ jeweils eine Kohlenwasserstoffgruppe mit 1 bis 10 Kohlenstoffatomen oder Wasserstoff darstellen; Y O, S, Se oder Te darstellt; m = 1 bis 5, n = 0 bis 5 und p = 0 oder 1,

2. Polymerisierbare Zusammensetzung wie in Anspruch 1 beschrieben, wobei das Parfüm mindestens eine Verbindung ist, die aus der unten beschriebenen Gruppe aus (a), (b), (c) und (d) ausgewählt wird:
(a) Kohlenwasserstoff, Aldehyd, Keton, Ester oder Alkohol, die ein durch (CH₃)₂C< oder (CH₃)₂C= dargestelltes Gerüst aufweisen,
(b) Aldehyd, Keton, Ester oder Alkohol, in denen ein Kohlenstoffatom in γ-Position ein cyclisches Gerüst bildet, oder eine veresterte Verbindung eines Alkohols, in der ein Kohlenstoffatom in γ-Position ein cyclisches Gerüst bildet,
(c) eine Verbindung mit einem cyclischen Ketongerüst oder einem cyclischen Estergerüst mit 4 bis 20 Kohlenstoffatomen und
(d) ein Pflanzenextrakt,

3. Polymerisierbare Zusammensetzung wie in Anspruch 1 oder 2 beschrieben, wobei das Parfüm einen Anteil von 0,001 bis 1,0 Gew.-% bezogen auf die gesamte Zusammensetzung aufweist,

4. Polymerisierbare Zusammensetzung wie in einem der Ansprüche 1 bis 3 beschrieben, welche darüber hinaus Schwefel umfasst,

5. Polymerisierbare Zusammensetzung wie in einem der Ansprüche 1 bis 4 beschrieben, wobei die oben beschriebene Verbindung mit mindestens einer durch Formel (1) dargestellten Struktur einen Chlorgehalt von 0,1 Gew.-% oder weniger aufweist,

6. Herstellungsverfahren für ein optisches Material, charakterisiert durch Polymerisieren und Härten der in einem der Ansprüche 1 bis 5 beschriebenen polymerisierbaren Zusammensetzung.

7. Herstellungsverfahren für ein optisches Material wie in Anspruch 6 beschrieben, wobei die oben beschriebene Zusammensetzung zuvor einer Entlüftungsbehandlung bei 0 bis 100°C während einer Minute bis 24 Stunden unter einem verminderten Druck von 0,001 bis 50 Torr unterzogen wird,

8. Optisches Material, erhalten durch das in Anspruch 6 oder 7 beschriebene Verfahren.

## Revendications

1. Composition polymérisable comprenant un composé contenant au moins une structure représentée par la formule (1) suivante dans une molécule et un parfum : 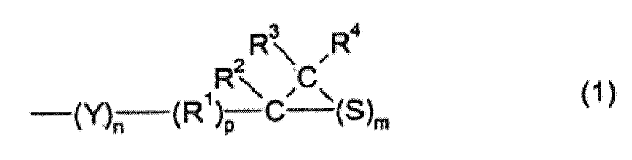 dans laquelle R¹ représente un hydrocarbure contenant 1 à 10 atomes de carbone ou une liaison simple ; R², R³ et R⁴ représentent chacun un groupe hydrocarboné contenant 1 à 10 atomes de carbone ou un hydrogène ; Y représente 0, S, Se ou Te ; m = 1 à 5, n = 0 à 5 et p = 0 ou 1.

2. Composition polymérisable selon la revendication 1, dans laquelle le parfum est au moins un composé choisi dans le groupe de (a), (b), (c) ou (d) décrits ci-dessus :
(a) un hydrocarbure, un aldéhyde, une cétone, un ester ou un alcool possédant un squelette représenté par (CH₃)₂C< ou (CH₃)₂C=,
(b) un aldéhyde, une cétone, un ester ou un alcool dans lequel un carbone en position γ constitue un squelette cyclique ou un composé estérifié d'alcool dans lequel un carbone en position γ constitue un squelette cyclique,
(c) un composé possédant un squelette de cétone cyclique ou un squelette d'ester cyclique contenant 4 à 20 atomes de carbone, et
(d) un extrait végétal.

3. Composition polymérisable selon la revendication 1 ou 2, dans laquelle la teneur du parfum va de 0,001 à 1,0 % en poids sur la base de la composition totale.

4. Composition polymérisable selon l'une quelconque des revendications 1 à 3, comprenant en outre du soufre.

5. Composition polymérisable selon l'une quelconque des revendications 1 à 4, dans laquelle le composé contenant au moins une structure représentée par la formule (1) décrite ci-dessus présente une teneur en chlore de 0,1 % en poids ou moins.

6. Procédé de production d'un matériau optique, **caractérisé par** la polymérisation et le durcissement de la composition polymérisable selon l'une quelconque des revendications 1 à 5.

7. Procédé de production d'un matériau optique selon la revendication 6, dans lequel la composition décrite ci-dessus est soumise préalablement à un traitement de désaération à une température de 0 °C à 100 °C pendant une minute à 24 heures sous une pression réduite de 0,001 à 50 torr.

8. Matériau optique obtenu par le procédé selon la revendication 6 ou 7.
